(19) Europäisches Patentamt
European Patent Office
Office européen des brevets

(11) EP 0 899 143 A2

# (12) EUROPEAN PATENT APPLICATION

(43) Date of publication:
**03.03.1999 Bulletin 1999/09**

(51) Int. Cl.$^6$: **B60K 5/12**

(21) Application number: **98115011.3**

(22) Date of filing: **10.08.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.08.1997 JP 230090/97**
**26.09.1997 JP 262137/97**
**21.11.1997 JP 321052/97**

(71) Applicant:
**TOYOTA JIDOSHA KABUSHIKI KAISHA**
**Aichi-ken 471-8571 (JP)**

(72) Inventors:
- **Yamada, Daisuke**
**Toyota Jidosha Kabushiki Kaisha**
**Aichi-ken, 471-8571 (JP)**
- **Teraoka, Katsuhiko**
**Toyota Jidosha Kabushiki Kaisha**
**Aichi-ken, 471-8571 (JP)**
- **Teraoka, Masahiko**
**Toyota Jidosha Kabushiki Kaisha**
**Aichi-ken, 471-8571 (JP)**
- **Takeda, Yuji**
**Toyota Jidosha Kabushiki Kaisha**
**Aichi-ken, 471-8571 (JP)**

(74) Representative:
**Winter, Brandl, Fürniss, Hübner, Röss,**
**Kaiser, Polte, Kindermann**
**Partnerschaft**
**Patent- und Rechtsanwaltskanzlei**
**Alois-Steinecker-Strasse 22**
**85354 Freising (DE)**

## (54) Abnormality judging device of variable vibration isolating support device

(57) An object of the present invention is to provide such a technique that a breakdown of a variable vibration isolating support device, a choking up of an intake passage, or the like can be detected by using existing parts. In order to achieve this object, the abnormality judging device according to the present invention comprises: a variable vibration isolating support device which changes the vibration isolating characteristics by shifting between the introduction of intake negative pressure arising in the intake system of an internal combustion engine and the introduction of atmospheric pressure; an intake air amount detecting instrument which detects the amount of intake air of the above mentioned internal combustion engine; and an abnormality judging instrument which judges an abnormality of the above mentioned variable vibration isolating support device on the basis of the value detected by the above mentioned intake air amount detecting instrument at the time of operating of the above mentioned variable vibration isolating support device.

FIG. 1

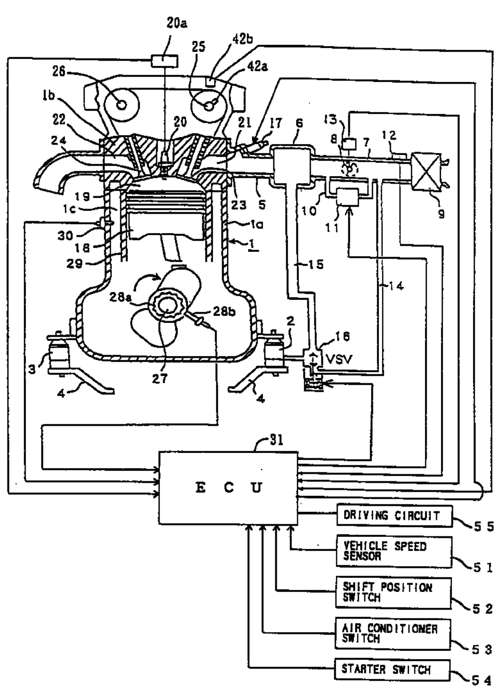


EP 0 899 143 A2

## Description

BACKGROUND ART

The present invention relates to the technique to judge the abnormality of a vibration isolating support device which performs the supporting so that the vibration of the internal combustion engine may not be transmitted to the body side, when mounting the internal combustion engine or the like onto the body side in an automobile or the like, and especially relates to the technique to judge the abnormality of a variable vibration isolating support device which changes the vibration isolating characteristics according to the state of vibration of the internal combustion engine or the like.

In an automobile or the like, when the internal combustion engine is mounted on the body side, a vibration isolating support device which performs the supporting so that the vibration of the internal combustion engine may not be transmitted to the body side, is used. By the way, as vibration of an internal combustion engine, other than the vibration produced from the internal combustion engine itself, various types of vibrations such as the vibration produced by the operation to the internal combustion engine of an external force of the accelerating force and the like produced at the time of running of a vehicle, are considered, and therefore, there is such a problem that the above mentioned various types of vibrations cannot be effectively absorbed or damped by a vibration isolating support device with constant vibration isolating characteristics.

Therefore, recently, the development of a variable type vibration isolating support device has been advanced to realize the vibration isolating characteristics corresponding to various types of vibrations. As such a variable type vibration isolating support device, a liquid sealing vibration isolating device described in JP-A Hei 6-137361 and the like, or an active type vibration isolating device described in JP-A Hei 6-288421 and the like, is well known.

The liquid sealing vibration isolating device described in JP-A Hei 6-137361 has a liquid sealing chamber and a de-pressurizing chamber separated by a diaphragm which can be displaced, and has a primary liquid chamber connected to the liquid sealing chamber through an orifice.

The de-pressurizing chamber is connected to a three way switching valve through an intake and exhaust passage. To the three way switching valve, an intake negative pressure passage connected on the down stream side from the throttle valve of the intake air passage of the internal combustion engine, and an atmospheric pressure passage connected on the up stream side from the throttle valve of the intake air passage, are connected.

In the liquid sealing vibration isolating device arranged like this, when the intake negative pressure passage and the de-pressurizing chamber are connected by the three way switching valve, the intake negative pressure produced in the intake air passage is introduced into the de-pressurizing chamber, and the atmosphere in the de-pressurizing chamber is sucked out into the intake air passage through the intake negative pressure passage. At this time, the de-pressurizing chamber becomes at a negative pressure, and the diaphragm adheres to the wall surface of the de-pressurizing chamber, and the movement thereof is restrained. Consequently, the volume of the liquid sealing chamber becomes constant, and the movement of the liquid is restrained between the primary liquid chamber and the liquid sealing chamber, so that the dynamic spring constant of the liquid sealing vibration isolating device becomes higher.

Furthermore, when the atmospheric pressure passage and the de-pressurizing chamber are connected by the three way switching valve, the atmosphere in the intake air passage is introduced into the de-pressurizing chamber. At this time, the diaphragm is separated from the wall surface of the de-pressurizing chamber so that displacement may be free. Consequently, the volume of the liquid sealing chamber becomes variable, and the liquid can rapidly move between the primary liquid chamber and the liquid sealing chamber, so that the dynamic spring constant of the liquid sealing vibration isolating device may become lower.

Thus, a liquid sealing vibration isolating device can realize desired vibration isolating characteristics by shifting between the intake negative pressure introduction and the atmospheric pressure introduction to the de-pressurizing chamber. That is, the liquid sealing vibration isolating device can realize vibration isolating characteristics suitable for various types of vibrations, by shifting between the intake negative pressure introduction and the atmospheric pressure introduction to the de-pressurizing chamber according to the driving state of the vehicle, and can improve the riding quality and drivability of the vehicle.

Next, the active type vibration isolating device described in JP-A Hei 6-288421 has a piezoelectric element layered product which expands and contracts according to the application and non-application of the driving voltage. This active type vibration isolating device is a device to absorb the vibration, by reducing the piezoelectric element layered product, when a vibration in the direction of compressing the present device is inputted, following the vibration, and by expanding the piezoelectric element layered product, when a vibration in the direction of pulling the present device is inputted, following the vibration.

By the way, in the above mentioned variable vibration isolating support device, it is also important to accurately detect the abnormality of the device.

For example, in the above mentioned liquid sealing vibration isolating device, when the intake negative pressure passage, the atmospheric pressure passage, or the like is choked up, the flow rate in the intake negative pressure passage or the atmospheric pressure passage is decreased, and therefore, the amount of introduction of intake negative pressure to the de-pressurizing chamber or the amount of introduction of atmospheric pressure is decreased, and desired vibration isolating characteristics cannot be realized.

Furthermore, when the mechanism (for example, a three way switching valve ) to shift between the introduction of intake negative pressure and the introduction of atmospheric pressure, has broken down, the shifting between the introduction of intake negative pressure and the introduction of atmospheric pressure to the de-pressurizing chamber, cannot be performed, and the vibration isolating support device cannot have desired vibration isolating characteristics.

Furthermore, the idling speed of an internal combustion engine supported by a normal support device, is set in a rotational area where the idling vibrating is low, but the idling speed of an internal combustion engine supported by a variable vibration isolating support device, is set, considering the vibration isolating effect by the variable vibration isolating support device, in a rotational area lower than that of an internal combustion engine supported by a normal support device, and therefore, when it occurs that a desired vibration isolating effect cannot be obtained because of the choking of the intake negative pressure passage, the atmospheric pressure passage or the like, or the break down or the like of the mechanism to shift between the introduction of intake negative pressure and the introduction of atmospheric pressure, the idling vibration is worsened.

For these problems, such a method that a sensor and the like to detect the amount of air flowing through each passage, is provided, so that the choking of the intake negative pressure passage, the atmospheric pressure passage or the like, or the break down of the mechanism to shift between the introduction of intake negative pressure and the introduction of atmospheric pressure, may be detected, can be thought, but there are various abuses such as ensuring of a space to which a sensor is attached or the increase of the attaching costs.

Furthermore, in the above mentioned active type vibration isolating device, when the piezoelectric element layered product does not normally perform the action of expansion and contraction, the desired vibration isolating characteristics cannot be realized, and on the contrary, there is a risk to cause worsening of the vibration.

## SUMMARY OF THE INVENTION

The present invention is made due to the problems, and an object is to provide a technique by which the abnormality of a variable vibration isolating support device realizing vibration isolating characteristics corresponding to various types of vibrations, can accurately be detected by using existing parts.

In order to solve the above mentioned problems, the present invention adopts the following means.

The first abnormality judging device of a variable vibration isolating support device according to the present invention, comprises:

a variable vibration isolating support device which changes the vibration isolating characteristics by shifting between the introduction of intake negative pressure produced in the intake system of an internal combustion engine and the introduction of atmospheric pressure;
an intake air amount detecting means which detects the amount of intake air of the internal combustion engine; and
an abnormality judging means which judges the abnormality of the variable vibration isolating support device, on the basis of the value detected by the intake air amount detecting means at the time of operation of the variable vibration isolating support device.

The above mentioned variable vibration isolating support device realizes the desired vibration isolating characteristics by shifting between the introduction of intake negative pressure and the introduction of atmospheric pressure. Then, in the variable vibration isolating support device, when the intake negative pressure is introduced after the atmospheric pressure has been introduced, the atmosphere in the variable vibration isolating support device flows to the intake system of the internal combustion engine, so that the amount of intake air of the internal combustion engine may be increased.

However, when the choking of the intake negative pressure introducing passage, the atmospheric pressure introducing passage, or the like for introducing intake negative pressure or atmospheric pressure into the variable vibration isolating support device, is produced, the amount of atmosphere flowing to the intake system from the variable vibration isolating support device, becomes less than that at the normal time.

Furthermore, when an operational defect of the variable vibration isolating support device itself, arises, the amount of atmosphere flowing to the intake system from the variable vibration isolating support device, becomes less than that at the normal time, or becomes more than that at the normal time.

Therefore, the abnormality judging means refers to the value detected by the intake air amount detecting means at the operational time of the variable vibration isolating support device, and detects the abnormality of the variable vibration isolating support device by judging whether the amount of intake air is increased similarly to that at the normal time or not.

Thus, the abnormality judging device according to the present invention can judges the abnormality of the variable vibration isolating support means by watching the amount of intake air or the engine speed at the time of operation of the variable vibration isolating means, on the basis of such characteristics that when the shifting between the introduction of intake negative pressure and the introduction of atmospheric pressure in the variable vibration isolating support means, is performed, the atmosphere introduced into the variable vibration isolating support means flows to the intake system of the internal combustion engine, and consequently, the amount of intake air of the internal combustion engine is increased or the engine speed is raised.

Accordingly, according to the present invention, since the judgment of the abnormality of the variable vibration isolating support device can be performed by using an existing intake air amount detecting means, it is unnecessary to newly provide an abnormality judging sensor.

Furthermore, it is also possible that the abnormality judging device of the variable vibration isolating support device according to the present invention, comprises:

a variable vibration isolating support device which changes the vibration isolating characteristics by shifting between the introduction of intake negative pressure produced in the intake system of an internal combustion engine and the introduction of atmospheric pressure;

a rotational speed detecting means which detects the engine speed of the internal combustion engine; and

an abnormality judging means which judges the abnormality of the variable vibration isolating support device on the basis of the value detected by the rotational speed detecting means at the time of operation of the variable vibration isolating support device.

In the above mentioned variable vibration isolating support device, when the intake negative pressure is introduced after the atmospheric pressure has been introduced, the atmosphere in the variable vibration isolating support device flows to the intake system of the internal combustion engine, so that the amount of intake air of the internal combustion engine may be increased.

On the other hand, the internal combustion engine obtains the engine output power by burning the gaseous mixture of air and fuel, and is controlled so as to inject an amount of fuel corresponding to the amount of intake air to form the gaseous mixture in which the ratio of air to fuel (air fuel ratio) becomes a desired air fuel ratio, and therefore, when the amount of intake air is increased or decreased, the amount of fuel injection is also increased or decreased according to the increasing amount.

Accordingly, in the internal combustion engine, when the atmosphere flows from the variable vibration isolating support device to the intake system of the internal combustion engine and the amount of intake air of the internal combustion engine is increased, the amount of fuel injection is increased according to the increasing amount thereof, and therefore, the gaseous mixture burned in the internal combustion engine is increased, and consequently, the engine speed is raised.

However, when the choking of the intake negative pressure introducing passage, the atmospheric pressure introducing passage, or the like in the variable vibration isolating support device, arises, the amount of atmosphere flowing to the intake system from the variable vibration isolating support device, becomes less than that at the normal time, and corresponding thereto, the amount of fuel injection also becomes less than that at the normal time, so that the rising amount of the engine speed may become less than that at the normal time.

Furthermore, when an operational defect of the variable vibration isolating support device itself, arises, the amount of atmosphere flowing to the intake system from the variable vibration isolating support device, becomes less than that at the normal time, or becomes more that at the normal time, and corresponding to that, the amount of fuel injection also becomes less than that at the normal time, or becomes more than that at the normal time, so that the rising amount of the engine speed may become less than that at the normal time or become more than that.

Therefore, the abnormality judging means of the present invention refers to the value detected by the rotational speed detecting means at the time of operation of the variable vibration isolating support device, and detects the abnormality of the variable vibration isolating support device, by judging whether the engine speed is increased similarly to that at the normal time or not.

Thus, since the abnormality judging device according to the present invention can judge the abnormality of the variable vibration isolating support device by using an existing engine speed detecting means, it is unnecessary to newly provide an abnormality judging sensor.

In the above mentioned abnormality judging device, it may also be arranged that when the shift control between the introduction of atmospheric pressure and the introduction of intake negative pressure, is performed in the variable vibration isolating support device, the abnormality judging means judges that the variable vibration isolating support device is abnormal if the detected value of the intake air amount detecting means or the rotational speed detecting means exceeds a specified range.

That is, it may also be arranged that the abnormality judging means judges that the variable vibration isolating support device is abnormal in a case where the detected value of the intake air amount detecting means or the rotational speed detecting means is smaller than a specified value, or the detected value is larger than a specified value.

Furthermore, it is desirable that the detected value of the intake air amount detecting means or the rotational speed detecting means is a value at the time when a specified time has elapsed since the start of the shift control in the variable vibration isolating support device.

Next, the abnormality judging means may be arranged to judge that the variable vibration isolating support device is abnormal, when the difference or the ratio between the detected value of the intake air amount detecting means or the rotational speed detecting means while the shift control of the introduction of atmospheric pressure and the introduction of intake negative pressure is performed in the variable vibration isolating support device, and the detected value thereof while the shift control of the introduction of atmospheric pressure and the introduction of intake negative pressure is not performed, exceeds a specified range.

Furthermore, in a case where the variable vibration isolating support device comprises: a variable vibration isolating support means which realizes desired vibration isolating characteristics in such a way that the means takes in the atmospheric pressure or the intake negative pressure produced in the intake system of the internal combustion engine; and a shifting means which is subjected to the duty control so as to selectively introduce the intake negative pressure and the atmospheric pressure into the variable vibration isolating support means, the abnormal judging device may further comprises a frequency control means which raises the frequency of the duty control signal to be applied to the shifting means by a specified amount, when the abnormal judging means performs the processing of abnormality judging.

In this case, the abnormality judging means judges the abnormality of the variable vibration isolating support device, on the basis of the amount of intake air (or the engine speed) of the internal combustion engine at the time of operating of the variable vibration isolating support device (when the shifting means is operated so as to shift between the introduction of atmospheric pressure and the introduction of intake negative pressure to the variable vibration isolating support means), and the amount of intake air (or the engine speed) of the internal combustion engine at the time of non-operating of the variable vibration isolating support device (when the shifting means is not operated so as to shift between the introduction of atmospheric pressure and the introduction of intake negative pressure to the variable vibration isolating support means).

In the processing of abnormality judging like this, when detecting the amount of intake air at the time of operating of the variable vibration isolating support device, the frequency control means raises, by a specified amount, the frequency of the duty control signal to be applied to the shifting means. In this case, if the variable vibration isolating support means is normal, the amount of atmosphere flowing from the variable vibration isolating support means to the internal combustion engine, is further increased, and therefore, the difference between the amount of intake air at the time of operating of the variable vibration isolating support means and that at the time of non-operating (or the difference between the engine speed at the time of operating and that at the time of non-operating), becomes remarkable. Consequently, the abnormality judging means may easily judge whether the variable vibration isolating support device is normal or abnormal, and it becomes difficult to make a misjudgment.

Furthermore, in a case where the frequency of the duty control signal to be applied to the shifting means is raised by a specified amount, the variable vibration isolating support means itself does not actually operate, and therefore, the vibration may not actively be worsened.

Accordingly, by the abnormality judging device according to the present invention, the abnormality of the variable vibration isolating support device can accurately be detected, while the worsening of the vibration because of the processing of abnormality judging is restrained.

Furthermore, in a case where the internal combustion engine has an idling speed control valve for controlling the amount of intake air so that the engine speed at the time of idling may be a desired target idling speed, it is also possible to provide a lower limit guard to the amount of opening of the idling speed control valve when the processing of abnormality judging by the abnormality judging means is performed.

The reason is to prevent the idling speed control valve from making the amount of opening small so as to make the engine speed converge on the target idling speed and from decreasing the amount of intake air, in a case where the amount of intake air of the internal combustion engine is increased by the operation of the variable vibration isolating support device and corresponding to that, the engine speed is raised, and to prevent the internal combustion engine from stopping because of the rapid decrease of the amount of intake air, in a case where the processing of abnormality judging is finished and the flow of atmosphere through the variable vibration isolating support device is lost.

Furthermore, the abnormality judging processing device may further comprises a compensating means which compensates the value of the duty control signal at the time of performing of the abnormality judging processing, according to the magnitude of the electric power driving the shifting means, or may further comprises a sweep means which makes the value of the duty control signal sweep, at the time of performing of the abnormality judging processing.

In a case where the abnormality judging processing device comprises a sweep means, the sweep means may also be arranged to change the range of sweeping of the value of the duty control signal, according to the magnitude of the driving electric power applied to the shifting means.

Next, as the method to deal with the case where the abnormality of the variable vibration isolating support device is judged, the following methods can be shown as examples.

First, as the first method, such a method that the abnormality judging device comprises: a shifting control stopping means which stops the shifting control between the introduction of atmospheric pressure and the introduction of intake negative pressure in the variable vibration isolating device when the abnormality judging means judges the abnormality of the variable vibration isolating support device at the time of idling of the internal combustion engine; and an idling speed changing means which raises the idling speed of the internal combustion engine by a specified amount when the shifting control of the variable vibration isolating support device is stopped by the shifting control stopping means, can be shown as an example.

That is, when an abnormality arises in the variable vibration isolating support device, not only the desired vibration isolating characteristics cannot be obtained, but also there is a risk of worsening the idling vibration, and therefore, for preventing that, the shifting control of the variable vibration isolating support device is stopped.

However, the idling speed of an internal combustion engine supported by a normal support device, is set in a rotational area where the idling vibration is restrained, but the idling speed of an internal combustion engine supported by a variable vibration isolating support device is set, considering the vibration isolating effect of the variable vibration isolating support device, in a rotational area rather lower than the normal area, and therefore, there is such a risk that the idling vibration is worsened when the control of the variable vibration isolating support device is stopped.

Therefore, in the variable vibration isolating support device according to the present invention, in a case where the abnormality of the variable vibration isolating support device is judged, the control of the variable vibration isolating support device is stopped by the shifting control stopping means, and at the same time, the idling speed is raised by the idling speed changing means by a specified amount, so that the idling speed of the internal combustion engine may be raised up to a rotational area where the idling vibration is restrained, and the worsening of the idling vibration may be prevented.

As the second method, such a method that the abnormality judging device comprises a compensating means which compensates the control value of the variable vibration isolating support device if the detected value of the intake air amount detecting means or the rotational speed detecting means exceeds a specified range and the exceeding amount is not more than a specified amount, so as to decrease the exceeding amount, in a case where the shifting control between the introduction of atmospheric pressure and the introduction of intake negative pressure is performed in the variable vibration isolating support device, can be shown as an example.

This method is made by supposing a state where a little abnormality arises in the variable vibration isolating support device, for example, a state where a choking arises in the intake negative pressure introducing passage, the atmospheric pressure introducing passage, or the like, but these passages are not completely choked up. In the case where such a little abnormality is produced, the vibration isolating characteristics of the variable vibration isolating support device can be approximated to desired vibration isolating characteristics by compensating the control value for the shifting control between the introduction of atmospheric pressure and the introduction of intake negative pressure to the variable vibration isolating support device, and the worsening of the vibration can be restrained to the minimum.

As the third method, such a method that the abnormality judging device comprises a compensating means which compensates the control value of the variable vibration isolating support device if the difference or the ratio between the detected value of the intake air amount detecting means or the rotational speed detecting means when the shifting control of the introduction of atmospheric pressure and the introduction of intake negative pressure is performed in the variable vibration isolating support device, and the detected value when the shifting control of the introduction of atmospheric pressure and the introduction of intake negative pressure is not performed, exceeds a specified range, and the exceeding amount is not more than a specified amount, so as to decrease the exceeding amount, can be shown as an example.

This method is also made by supposing a state where a little abnormality arises in the variable vibration isolating support device, similarly to the second method, and by compensating the control value for the shifting control between the introduction of atmospheric pressure and the introduction of intake negative pressure to the variable vibration isolating support device, the vibration isolating characteristics of the variable vibration isolating support device are approximated to the desired vibration isolating characteristics, so that the worsening of the vibration may be restrained to the minimum.

Next, the second abnormal judging device of a variable vibration isolating support device according to the present invention is a device which judges an abnormality of the variable vibration isolating support device operated to expand and to contract according to the vibration of the internal combustion engine, and has an abnormality judging means which judges an abnormality of the variable vibration isolating support device, by comparing the time required for the crank shaft of the internal combustion engine to rotate through a specified angle at the time of expanding operation or contracting operation of the variable vibration isolating support device, with the time required for the crank shaft to rotate through an angle corresponding to the specified angle at the time of non-operating of the variable vibration isolating support device.

The abnormality judging device arranged like this is made on the basis of such a knowledge of the inventor that by the action of expansion and contraction of the variable vibration isolating support device, a force of displacement centered at the crank shaft operates onto the internal combustion engine, and therefore, a specified deviation is produced between the time required for the crank shaft to rotate through a specified angle at the time of non-operating of the variable vibration isolating support device and that at the time of operating thereof, in a case where the variable vibration isolating support device is normal.

That is, when the variable vibration isolating support device performs the action of expansion and contraction, the internal combustion engine receives the pushing and pulling force from the variable vibration isolating support device, and is turned, centered at the crank shaft. Furthermore, since the rotational speed of the crank shaft is measured on the basis of the main body of the internal combustion engine (cylinder block), the time required for the crank shaft to rotate through a specified angle becomes slow as the amount of rotation of the main body of the internal combustion engine in the direction identical to the direction of rotation of the crank shaft, is increased, and becomes fast as the amount of rotation of the main body of the internal combustion engine in the opposite direction of the direction of rotation of the crank shaft, is increased. Consequently, if the variable vibration isolating support device is normal, a specified deviation is produced between the rotational speed of the crank shaft at the time of non-operating of the variable vibration isolating support device and that at the time of operating.

Therefore, it becomes possible that the abnormality judging means according to the present invention judges an abnormality of the variable vibration isolating support device, by comparing the time required for the crank shaft to rotate through a specified angle at the time of operation of the variable vibration isolating support device, with the time required for the crank shaft to rotate through an angle corresponding to the specified angle at the time of non-operating of the variable vibration isolating support device.

Accordingly, the abnormality judging device according to the present invention can judge whether the change of engine rotational speed caused by the action of expansion and contraction of the variable vibration isolating support device arises or not, that is, whether the variable vibration isolating support device normally performs the action of expansion and contraction or not, by comparing the time required for the crank shaft to rotate through a specified angle at the time of operation of the variable vibration isolating support device, with the time required for the crank shaft to rotate through an angle corresponding to the specified angle at the time of non-operating of the variable vibration isolating support device.

Furthermore, the variable vibration isolating support device may be a vacuum type variable vibration isolating support device which is operated to expand or to contract by introducing atmospheric pressure or negative pressure into the device, or may be a variable vibration isolating support device which uses a piezoelectric element layered product or the like. In short, it is suitable that the variable vibration isolating support device according to the present invention is a device arranged to perform the action of expansion and contraction, following the vibration of the internal combustion engine.

<u>BRIEF DESCRIPTION OF THE DRAWINGS</u>

Fig. 1 is a figure showing the rough arrangement of an internal combustion engine to which the present invention is applied;
Fig. 2 is a figure showing the rough arrangement of the variable engine mount 2;
Fig. 3 is a figure describing the action of the variable engine mount 2;
Fig. 4 is a figure showing the rough arrangement of a VSV 16;
Fig. 5 is a figure describing the action of the VSV 16;
Fig. 6 is a block diagram showing the internal arrangement of a ECU 31;
Fig. 7 is a figure showing one example of a map showing the relation between the VSV control duty ratio and the judgment value $\alpha$;
Fig. 8 is a flow chart showing the VSV abnormality judging routine;
Fig. 9 is a flow chart showing the control routine at the abnormal time;
Fig. 10 is a flow chart showing the processing of increase and decrease of the VSV;
Fig. 11 is a figure showing one example of a map showing the relation between the VSV control duty ratio and the judgment value $\beta$;
Fig. 12 is a flow chart showing the VSV abnormality judging routine in the second embodiment;
Fig. 13 is a flow chart showing the control routine at the abnormal time in the second embodiment;
Fig. 14 is a flow chart showing one example of the VSV control routine according to the third embodiment;

Fig. 15 is a flow chart showing one example of the ISCV feedback control routine;
Fig. 16 is a flow chart showing one example of the lower limit guard control routine;
Fig. 17 is a flow chart showing one example of the abnormality judging control routine;
Fig. 18 is a flow chart showing one example of the interruption control routine;
Fig. 19 is a flow chart (1) showing one example of the abnormality judging control routine in the fourth embodiment;
Fig. 20 is a flow chart showing one example of the interruption control routine in the fourth embodiment;
Fig. 21 is a flow chart (2) showing one example of the abnormality judging control routine in the fourth embodiment;
Fig. 22 is a flow chart showing one example of the abnormality judging processing routine in the fifth embodiment.

## DESCRIPTION OF PREFERRED EMBODIMENTS

〈Embodiment 1〉

The embodiments of an abnormality judging device of a variable vibration isolating support device according to the present invention will be described below on the basis of the drawings.
Fig. 1 is a figure of the rough arrangement of an internal combustion engine to which the present invention is applied.
The internal combustion engine 1 shown in Fig. 1 is a 4 cycle multi-cylinder gasoline engine, and has a cylinder block 1a in which a plurality of cylinders 29 are formed, and a cylinder head 1b fixed to the upper portion of the cylinder block 1a.
In each cylinder 29 of the cylinder block 1a, a piston 18 capable of sliding in the axial direction is loaded. The piston 18 is connected to a crank shaft 27 rotatably supported in the cylinder block 1a. This crank shaft 27 rotates in the clockwise direction in Fig. 1.
Above the piston 18, a combustion chamber 19 surrounded by the upper surface of the piston 18 and the inner wall surface of the cylinder head 1b, is formed.
In the cylinder head 1b, a spark plug 20 is attached, facing the combustion chamber 19, and the opening ends of an intake port 21 and an exhaust port 22 are formed, facing the combustion chamber 19. To the spark plug 20 of each cylinder 29, an ignition coil 20a including an igniter is connected.
Next, in the cylinder head 1b, an intake valve 23 and an exhaust valve 24 to open and close the opening ends of the intake and exhaust ports 21, 22, are supported such that advance and retreat are free, and a cam shaft 25 on the intake side and a cam shaft 26 on the exhaust side to drive the intake and exhaust valves 23, 24 to open and close, are rotatably supported.
The cam shaft 25 on the intake side and cam shaft 26 on the exhaust side are connected to the crank shaft 27 through a timing belt (not shown in the figure), and the rotational force of the crank shaft 27 is transmitted to the cam shaft 25 on the intake side and the cam shaft 26 on the exhaust side through the timing belt.
The internal combustion engine 1 has a cam position sensor 42 composed of a projection 42a formed at 1 position of the peripheral surface of the cam shaft 25 on the intake side and an electromagnetic pickup 42b attached to the cylinder head 1b.
Furthermore, the internal combustion engine 1 has a crank position sensor 28 composed of a timing rotor 28a attached to the end portion of the crank shaft 27 and an electromagnetic pickup 28b attached to the cylinder block 1a.
Furthermore, to the cylinder block 1a, a water temperature sensor 30 to output an electric signal corresponding to the temperature of cooling water flowing in a cooling water passage 1c formed in the cylinder block 1a, is attached.
The crank position sensor 28, the water temperature sensor 30, and the cam position sensor 42 are connected to an electronic control unit: ECU 31 for engine control through the electric wiring, and the output signal of each of the sensors 28, 30, 42 is arranged to be inputted into the ECU 31.
Next, the intake port 21 leads to an intake branch tube 5 attached to the cylinder head 1b. The intake branch tube 5 is connected to a surge tank 6. The surge tank 6 is connected to an air cleaner box 9 through an intake tube 7.
To the intake tube 7, a throttle valve 8 to control the flow rate of intake air in the intake tube 7, coupled with an accelerator pedal (not shown in the figure), is provided. When this throttle valve 8 is opened, the fresh air passing through the air cleaner box 9 is introduced into the surge tank 6 through the intake tube 7, and is distributed and supplied to the intake port 21 of each cylinder 29 through the intake branch tube 5 after the pulsation of intake air has been smoothed in the surge tank 6.
Next, to the intake branch tube 5, a fuel injection valve 17 is attached such that the injection hole thereof faces the intake port 21, and the fuel injected from this fuel injection valve 17 forms a gaseous mixture together with the fresh air distributed and supplied to the intake port 21. Then, when the intake valve 23 is opened at the intake stroke, the gaseous mixture receives the negative pressure produced by the fall of the piston 18, and is sucked into the combustion chamber 19.
The gaseous mixture sucked into the combustion chamber 19 is compressed by the rise of the piston 18 in the cylinder 29 when the intake valve 23 is closed and the cylinder 29 moves from the intake stroke to the compression stroke. Next, the gaseous mixture compressed in the combustion chamber 19 is ignited by the spark plug 20 and explodes when the piston 18 is positioned near the compression top dead center.

Consequently, the cylinder 29 moves to the explosion stroke.

At the explosion stroke, the piston 18 in the cylinder 29 falls by receiving the explosive force of the gaseous mixture. Here, since the piston 18 is connected to an eccentric position of the crank shaft 27, the crank shaft 27 is turned when the piston 18 falls. After that, the piston 18 rises again after falling to the bottom dead center. Consequently, the cylinder 29 moves to the exhaust stroke.

At the exhaust stroke, when the exhaust valve 24 is opened, the burned gaseous mixture is exhausted from the combustion chamber 19 to the exhaust port 22 by the rising piston 18.

Furthermore, to the intake tube 7, a bypass passage 10 connecting the up stream and the down stream of the throttle valve 8 is connected, and to this bypass passage 10, an idling speed control valve (ISCV) 11 to control the flow rate of the fresh air flowing in the bypass passage 10, is attached. This ISCV 11 realizes the idling speed control valve according to the present invention.

The ISCV 11 is composed of a valve body which repeats opening and closing, and a solenoid for driving this valve body, and when a driving pulse signal having a duty ratio corresponding to the ratio between the full opening time and the full closing time of the valve body, is inputted, the solenoid drives the valve body according to the driving pulse signal, and controls the flow rate of the air in the bypass passage 10.

Then, when the throttle valve 8 is fully closed, that is, when the internal combustion engine 1 is in an idling state, the ISCV 11 is opened, and the fresh air passing through the air cleaner box 9 is introduced through the bypass passage 10 to the surge tank 6, and next, is distributed and supplied to the intake port 21 of each cylinder 29 through the intake branch tube 5.

By the way, the idling speed control valve according to the present invention is not limited to the above mentioned ISCV 11, and it may be composed of a throttle valve and an actuator for driving the this throttle valve to open and close. The actuator controls the amount of intake air of the internal combustion engine by driving the throttle valve to open and close, at the time of idling (when the amount of depressing of the accelerator pedal is "0" ) of the internal combustion engine.

To the throttle valve 8, a throttle position sensor 13 to output an electric signal corresponding to the opening of the throttle valve 8, is attached, and to the intake tube 7 on the up stream side from the throttle valve 8, an air flow meter 12 to output an electric signal corresponding to the mass of fresh air flowing in the intake tube 7 (mass of intake air), is attached.

The air flow meter 12 and the throttle position sensor 13 are connected to the ECU 31 through the electric wiring, and the output signals of these sensors 12, 13 are inputted into the ECU 31 through the electric wiring.

The internal combustion engine 1 arranged as mentioned above, is supported onto the body side 4 of an automobile by a variable engine mount 2, an engine mount 3, and the like. The variable engine mount 2 is positioned on the side of the rotational direction side of the crank shaft 27 (in Fig. 1, on the right side of the internal combustion engine) and the engine mount 3 is positioned on the opposite side of the rotational direction side of the crank shaft 27 (in Fig. 1, on the left side of the internal combustion engine 1), when the crank shaft 27 is made to be the boundary.

The variable engine mount 2 is one example of the variable vibration isolating support means according to the present invention, and as shown in Figs. 2, 3, it comprises: an outer casing hardware 32 whose upper portion is open; a partition board 33 which is made of a disk-like rigid body with an outside diameter approximately equal to the inside diameter of this outer casing hardware 32 and divides the interior of the outer casing hardware 32 into upper and lower 2 chambers; a vibration isolating base body 35 which is made of an elastic body such as a rubber and is forced into the space on the upper side from the partition board 33 to be fixed to the outer casing hardware 32; and a vibration isolating base body 36 which is made of an elastic body such as a rubber and is forced into the space on the lower side from the partition board 33 to be fixed to the outer casing hardware 32.

On the upper side from the partition board 33, a space is formed by being surrounded by the vibration isolating base body 35 and the partition board 33, and this space is divided into a space portion 37 and a space portion 41 by a diaphragm 39 whose periphery is fixed to the partition board 33. In the space portion 37, liquid is sealed (hereafter, the space portion 37 is called a primary liquid chamber 37).

Furthermore, on the lower side from the partition board 33 of the variable engine mount 2, a space portion 38 is formed by being surrounded by the vibration isolating base body 36 and the partition board 33, and in this space portion 38, liquid is sealed (hereafter, the space portion 38 is called a secondary liquid chamber 38). Then, the primary liquid chamber 37 and the secondary liquid chamber 38 are connected through an orifice 40 formed in the partition board 33.

Furthermore, in the partition board 33 and the outer casing hardware 32, a connecting passage 34 connecting the space portion 41 and the outside, is formed, and this connecting passage 34 leads to a three way switching valve (VSV) 16.

Here, returning to Fig. 1, to the VSV 16, the connecting passage 34 of the variable engine mount 2 is connected, and an atmospheric pressure passage 14 connected to the intake tube 7 on the up stream side from the throttle valve 18 and an intake negative pressure passage 15 connected to the surge tank 6, are also connected. Furthermore, it is also possible that the atmospheric pressure passage 14 is not connected to the intake tube 7 on the up stream side from the throttle vale 8, and the opening end thereof is arranged to be positioned in the atmosphere.

As shown in Fig. 4, the VSV 16 has a housing 16h in which a space portion 16i; a first passage 16f connecting this space portion 16i and the atmospheric pressure passage 14; a second passage 16d connecting the space portion 16i and the intake negative passage 15; and a third passage 16e connecting the space portion 16i and the connecting passage 34 of the variable engine mount 2, are formed.

The housing 16h includes a solenoid coil 16b and a core 16c positioned at the axial center portion of this solenoid coil 16b, and further includes a valve body 16a which closes either of the opening end of the first passage 16f or the opening end of the second passage 16d, facing the space portion 16I and a spring 16g which urges this valve body 16a to close the first passage 16f. The valve body 16a is made of a magnetic body.

In the VSV 16 arranged like this, at the stationary time (when the driving power is not applied to the solenoid coil 16b), the valve body 16a receives the urging force of the spring 16g and closes the opening end of the first passage 16f, and at the same time, opens the opening end of the second passage 16d, and therefore, the second passage 16d and the third passage 16e become in a state of continuity through the space portion 16i. At this time, the intake negative pressure passage 15 and the connecting passage 34 are connected through the VSV 16.

Then, when the driving power is applied to the solenoid coil 16b, the core 16c is excited by the solenoid coil 16b, and generates a magnetic force to pull up the valve body 16a. At this time, the valve body 16a is pulled up by the core 16c against the urging force of the spring 16g, and as shown in Fig. 5, opens the opening end of the first passage 16f and at the same time, closes the opening end of the second passage 16d, and therefore, the first passage 16f and the third passage 16e become in a state of continuity through the space portion 16i, and the atmospheric pressure passage 14 and the connecting passage 34 are connected through the VSV 16.

Here, the solenoid coil 16b is controlled according to the driving pulse signal having a duty ratio corresponding to the ratio between the time of application of the driving power (time of opening of the first passage 16f) and the time of non-application (time of opening of the second passage 16d).

When the driving pulse signal of the duty ratio: 100% is applied to the solenoid coil 16b, the valve body 16a is driven so as to keep the state of continuity between the atmospheric pressure passage 14 and the connecting passage 34 (closing state of the intake negative pressure passage 15).

At this time, into the space portion 41 of the variable engine mount 2, as shown in Fig. 2, the atmosphere (atmospheric pressure) flowing in the intake tube 7 is introduced, and the diaphragm 39 becomes in a movable state, so that the spring constant of the total of the variable engine mount 2 may become low.

On the other hand, when the driving pulse signal of the duty ratio: 0% is applied to the solenoid coil 16b, the valve body 16a is driven so as to keep the state of continuity between the intake negative pressure passage 15 and the connecting passage 34 (closing state of the atmospheric pressure passage 14).

At this time, into the space portion 41 of the variable engine mount 2, as shown in Fig. 3, the intake tube negative pressure produced in the surge tank 6 is introduced, and the atmosphere in the space portion 41 is sucked out, and therefore, the diaphragm 39 adheres to the partition board 33, and the movement of the diaphragm 39 is restrained. Consequently, the spring constant of the total of the variable engine mount 2 becomes high.

Furthermore, when the driving pulse signal of a duty ratio larger than 0% and smaller than 100%, is applied to the solenoid coil 16b, the excitation and the non-excitation of the core 16c are alternately repeated, and consequently, the valve body 16a alternately repeats the opening of the first passage 16f (closing of the second passage 16d) and the opening of the second passage 16d (closing of the first passage 16f). That is, the VSV 16 alternately repeats the continuity between the atmospheric pressure passage 14 and the connecting passage 34, and the continuity between the intake negative pressure passage 15 and the connecting passage 34.

At this time, into the space portion 41 of the variable engine mount 2, the atmospheric pressure and the intake negative pressure are alternately introduced. Then, when the atmospheric pressure is introduced after the intake negative pressure has been introduced into the space portion 41, the volume of the space portion 41 is increased and at the same time, the volume of the primary liquid chamber 37 is decreased, and the pressure in the primary liquid chamber 37 is increased, and therefore, the vibration isolating base body 35 is pushed up. Consequently, the variable engine mount 2 performs the action of expansion.

On the other hand, when the intake negative pressure is introduced after the atmospheric pressure has been introduced into the space portion 41, the volume of the space portion 41 is decreased and at the same time, the volume of the primary liquid chamber 37 is increased, and the pressure in the primary liquid chamber 37 is decreased, and therefore, the vibration isolating base body 35 is pulled down. Consequently, the variable engine mount 2 performs the action of contraction.

Thus, the VSV 16 realizes the shifting means according to the present invention.

Here, returning to Fig. 1, to the ECU 31, a vehicle speed sensor 51, a shift position switch 52, an air conditioner switch 53, a starter switch 54, or the like is connected through the electric wiring, in addition to the above mentioned crank position sensor 28, water temperature sensor 30, cam position sensor 42, air flow meter 12, and throttle position sensor 13.

The ECU 31 is connected to a driving circuit 55 for driving the fuel injection valve 17, the ignition coil 20a, the ISCV 11, the VSV 16, and the like through the electric wiring.

The ECU 31 judges the operational state of the internal combustion engine 1 according to the output signals from the above mentioned various types of sensors and switches, and the like, and controls the ignition coil 20a, the driving circuit 55, the ISCV 11, the VSV 16, or the like according to the judged operational state and at the same time, performs the abnormality judging processing of the variable engine mount 2, which is the essential of the present invention.

As shown in Fig. 6, the ECU 31 has a CPU 43, a ROM 44, a RAM 45, a backup RAM 46, an input port 47, and an output port 49 which are mutually connected by a bi-directional bus 50, and further has an A/D converter (A/D) 48 connected to the input port 47.

The input port 47 inputs signals from the crank position sensor 28, the cam position sensor 42, the vehicle speed sensor 51, the throttle position sensor 13, the shift position switch 52, and the air conditioner switch 53, and sends these signals to the CPU 43 or the RAM 45.

Furthermore, the input port 47 inputs signals from the water temperature sensor 30 and the air flow meter 12 through the A/D converter 48, and sends these signals to the CPU 43 or the RAM 45.

The output port 49 outputs the control signal from the CPU 43 to the ignition coil 20a, the ISCV 11, the driving circuit 55, and the VSV 16.

The ROM 44 stores application programs such as a fuel injection amount control routine for determining the amount of fuel injection, an fuel injection timing control routine for determining the fuel injection timing, an ignition timing control routine for determining the ignition timing, an ISCV feedback control routine for controlling the ISCV 11 so that the engine speed at the time of idling may be the desired target idling speed, a VSV control routine for determining the duty ratio to control the VSV 16, and a routine for performing the abnormality judging processing which is the essential of the present invention, and various types of control maps.

The control maps are, for example, a fuel injection amount control map showing the relation between the operational state of the internal combustion engine 1 and the amount of fuel injection, a fuel injection timing control map showing the relation between the operational state of the internal combustion engine 1 and the fuel injection timing, an ignition timing control map showing the relation between the operational state of the internal combustion engine 1 and the ignition timing, a target opening control map showing the relation between the operational state of the internal combustion engine 1 and the target opening of the ISCV 11 (duty ratio corresponding to the target opening), a VSV control map showing the relation between the operational state of the internal combustion engine 1 and the duty ratio for the VSV control, and the like.

The VSV control map is a map showing the relation between the operational state of the internal combustion engine 1 at the time of idling and the duty ratio for the VSV control, and it includes a plurality of maps such as a map showing the relation between the engine speed at the time before the warming up of the internal combustion engine 1 is performed (for example, when the output signal value of the water temperature sensor 30 is less than 70°C) and when the air conditioner is in the ON state, and the VSV control duty ratio; a map showing the relation between the engine speed at the time before the warming up of the internal combustion engine 1 is performed and when the air conditioner is in the OFF state, and the VSV control duty ratio; a map showing the relation between the engine speed at the time after the warming up of the internal combustion engine 1 has been finished (for example, when the output signal value of the water temperature sensor 30 is not less than 70°C) and when the air conditioner is in the ON state, and the VSV control duty ratio; or a map showing the relation between the engine speed at the time after the warming up of the internal combustion engine 1 has been finished and when the air conditioner is in the OFF state, and the VSV control duty ratio.

Furthermore, in the present embodiment, in the ROM 44, an abnormality judging control map (refer to Fig. 7) showing the relation between the VSV control duty ratio and the judgment value $\alpha$ of the increasing amount of the amount of intake air, is stored. The judgment value $\alpha$ is a normal value of the difference between the amount of intake air (output signal value of the air flow meter 12) at the time of non-operating of the variable engine mount 2 (at the time of non-controlling of the VSV 16), and the amount of intake air (output signal value of the air flow meter 12) at the time of operating of the variable engine mount 2 (at the time of controlling of the VSV 16). The relation between the judgment value $\alpha$ and the VSV control duty ratio should have been found by experiments or the like in advance.

Next, the RAM 45 stores the output signal from each sensor, the result of calculations of the CPU 43, and the like. The result of calculations is, for example, the engine speed calculated from the output signal of the crank position sensor 28. Then, the output signal from each sensor, the result of calculations of the CPU 43, and the like are rewritten to the newest data each time the crank position sensor 28 outputs a signal. Furthermore, into the RAM 45, the areas to store various types of control flags are set.

Into the RAM 45, the areas to store various types of control flags are provided. As the control flag, a flag: Xdutyup to which "ON" is set at the time of abnormality judging of the variable engine mount 2, and which is reset to "OFF" when the performing of processing for the abnormality (for example, the compensating processing of the VSV control duty ratio) has been finished, can be shown as an example.

The backup RAM 46 is a non-volatile memory which keeps the data after the stop of the internal combustion engine 1.

Next, the CPU 43 operates according to the application program stored in the ROM 44, and judges the operational state of the internal combustion engine 1 from the output signal of each sensor, and calculates the amount of fuel injection, the timing of fuel injection, the ignition timing, the ISCV control duty ratio, the VSV control duty ratio, or the like, from the operational state and each control map. Then, the CPU 43 controls the driving circuit 55, the ignition coil 20a, the ISCV 11, the VSV 16, and the like, according to the calculated amount of fuel injection, timing of fuel injection, ignition timing, ISCV control duty ratio, VSV control duty ratio, and the like. Furthermore, the CPU 43 performs the abnormality judging processing of the variable engine mount 2 by performing the application program stored in the ROM 44.

For example, when controlling the driving circuit 55, the CPU 43 refers to the output signal of the air flow meter 12 (amount of intake air), and calculates the amount of fuel injection (time of fuel injection) corresponding to the amount of intake air so as to form a gaseous mixture of the theoretical air fuel ratio. Next, the CPU 43 calculates the engine speed from the output signal of the crank position sensor 28, and calculates the timing of fuel injection from this engine speed, and the like.

Then, when the output signal of the crank position sensor 28 agrees with the timing of fuel injection, the CPU 43 controls the driving circuit 55 to start the application of the driving current to the fuel injection valve 17, and to stop the application of the driving current to the fuel injection valve 17 after the elapse of the fuel injection time.

When controlling the ignition coil 20a, the CPU 43 calculates the engine load of the internal combustion engine 1 from the engine speed, the amount of intake air, and the like, and calculates the ignition timing corresponding to this engine load. Then, when the output signal of the crank position sensor 28 agrees with the ignition timing, the CPU 43 controls the ignition coil 20a to apply the driving power to the spark plug 20.

Furthermore, at the time of idling of the internal combustion engine 1, the CPU 43 repeatedly performs the ISCV feedback control routine for every specified time to control the ISCV 11. At that time, the CPU 43 calculates the target idling speed on the basis of the engine speed, the output signal of the water temperature sensor 30, and the like. Then, the CPU 43 compares the target idling speed with the actual engine speed, and calculates the most suitable duty ratio so as to decrease the deviation between both, and applies a driving pulse signal corresponding to the duty ratio to the ISCV 11.

When controlling the VSV 16, the CPU 43 judges the operational state of the internal combustion engine 1 on the basis of the output signals from the various types of sensors such as the crank position sensor 28, the vehicle speed sensor 51, the shift position switch 52, the water temperature sensor 30, the air conditioner switch 53, and controls the VSV 16 according to the judged operational state.

Specifically, if the output signal of the vehicle speed sensor 51 is not less than 50 km/h, the CPU 43 applies a driving pulse signal corresponding to the duty ratio: 0% to the VSV 16 so as to increase the spring constant of the variable engine mount 2, and prevents the shaking of the internal combustion engine 1 and improves the drivability.

Furthermore, if the output signal of the vehicle speed sensor 51 is not less than 3 km/h and less than 50 km/h, the CPU 43 applies a driving pulse signal corresponding to the duty ratio: 100% to the VSV 16 so as to decrease the spring constant of the variable engine mount 2, and prevents the shaking of the internal combustion engine 1 from being transmitted to the body side 4.

Furthermore, when the CPU 43 has judged that the internal combustion engine 1 is in a state of idling from the shift position switch 52, the engine speed, or the like, the CPU 43 judges whether the warming up of the internal combustion engine 1 is finished or not from the output signal of the water temperature sensor 30, or judges whether the air conditioner is in the ON state or not from the output signal of the air conditioner switch 53, or judges the equivalent, and accesses the VSV control map corresponding to each judgment result, and calculates the VSV control duty ratio complying with the engine speed of the internal combustion engine 1.

Then, the CPU 43 applies the driving pulse signal corresponding to the calculated VSV control duty ratio to the VSV 16. In this case, the variable engine mount 2 performs the action of expansion and contraction in synchronization with the engine speed of the internal combustion engine 1, and absorbs the vibration of the internal combustion engine 1.

That is, in the internal combustion engine 1, when transforming the linear motion of the piston 18 into the rotational movement of the crank shaft 27 at the explosion stroke of each cylinder 29, a force to turn the cylinder block 1a in the same direction as the crank shaft 27 (in Fig. 1, in the clockwise direction), is produced, and after that, a force to turn that in the opposite direction (in Fig. 1, in the counterclockwise direction), is produced by the reaction of the turning, and therefore, by making the variable engine mount 2 perform the action of expansion and contraction following these vibrations, the above mentioned vibrations are prevented from being transmitted to the body side 4.

Furthermore, in the case where the variable engine mount 2 is positioned on the opposite side of the rotational direction side of the crank shaft 27 when the crank shaft 27 is made to be the boundary, the CPU 43 performs a control in contrast with the above mentioned control.

Next, when performing the abnormality judging processing of the variable engine mount 2, first, the CPU 43 detects the amount of intake air of the internal combustion engine 1 at the time of non-operating of the variable engine mount 2 (when the VSV 16 is controlled at the duty ratio: 0% or 100%), and stores it in a specified area of the RAM 45.

Next, the CPU 43 detects the amount of intake air of the internal combustion engine 1 at the time of operating of the variable engine mount 2 (when the VSV 16 is controlled at the duty ratio larger than 0% and smaller than 100%).

Then, the CPU 43 compares the amount of intake air at the time of operating of the variable engine mount 2 with the amount of intake air at the time of operating of the variable engine mount 2, and judges the normality of the connecting passage 34, the atmospheric pressure passage 14, the intake negative pressure passage 15, and the VSV 16.

Specifically, the CPU 43 inputs the output signal value ga0 of the air flow meter 12 (amount of intake air), just before the control of the VSV 16 is performed, and stores this intake air amount ga0 in a specified area of the RAM 45.

Next, after a specified time has elapsed since the start of the control of the VSV 16, the CPU 43 inputs the output signal ga1 of the air flow meter 12 (amount of intake air), and subtracts the intake air amount ga0 from this intake air amount ga1 to calculate the difference $\Delta$ga. Then, the CPU 43 judges the normality of the connecting passage 34, the atmospheric pressure passage 14, the intake negative pressure passage 15, and the VSV 16 on the basis of the difference $\Delta$ga.

Here, when the variable engine mount 2 and the VSV 16 are normal, if the VSV 16 is controlled at the duty ratio larger than 0% and smaller than 100%, the valve body 16a of the VSV 16 alternately repeats the opening of the first passage 16f (closing of the second passage 16d) and the opening of the second passage 16d (closing of the first passage 16f). Consequently, the continuity between the atmospheric pressure passage 14 and the connecting passage 34, and the continuity between the intake negative pressure passage 15 and the connecting passage 34, are alternately repeated, and the atmosphere and the intake negative pressure are alternately introduced into the space portion 41 of the variable engine mount 2.

Then, in a case where the intake negative pressure is introduced after the atmospheric pressure has been introduced into the variable engine mount 2, the atmosphere in the space portion 41 flows to the surge tank 6 through the connecting passage 34, the VSV 16, and the intake negative pressure passage 15. Therefore, the amount of intake air of the internal combustion engine 1 is increased by the amount of atmosphere flowing from the variable engine mount 2 to the surge tank 6, in comparison with that in the case where the control of the VSV 16 is not performed.

On the other hand, in a case where a choking arises in the atmospheric pressure passage 14 or the intake negative pressure passage 15, even if the VSV 16 is controlled at the duty ratio larger than 0% and smaller than 100%, the intake negative pressure and the atmospheric pressure are not introduced alternately into the space portion 41 of the variable engine mount 2, or the degree of the introduced intake negative pressure or atmospheric pressure is decreased. Therefore, the amount of atmosphere introduced into the space portion 41 of the variable engine mount 2, or the amount of atmosphere flowing from the space portion 41 to the surge tank 6 is decreased to be less than that at the normal time.

Furthermore, in a case when an operational defect of the VSV 16 arises, for example, in a case when the VSV 16 falls in an operational defect in the state of continuity between the connecting passage 34 and the atmospheric pressure passage 14 or the intake negative pressure passage 15, the atmospheric pressure or the intake negative pressure is continuously introduced into the space portion 41 of the variable engine mount 2, and the amount of atmosphere flowing to the surge tank 6 from the variable engine mount 2 is decreased to be less than that at the normal time.

Therefore, the CPU 43 accesses the abnormality judging control map of the ROM 44, and calculates the judgment value $\alpha$ corresponding to the VSV control duty ratio at that time, and judges that an abnormality arises in the atmospheric pressure passage 14, the intake negative pressure passage 15, or the VSV 16, if the difference $\Delta$ga is not more than the judgment value $\alpha$.

By the way, the reason why the calculation timing of the intake air amount ga1 is made to be a timing after a specified time has elapsed since the start of performing of the VSV control, is for preventing the misjudgment because of the delay of response of air to the action of the VSV 16.

Furthermore, such a case that the VSV 16 falls in an operational defect in the state of continuity of the 3 passages: the connecting passage 34; the atmospheric pressure passage 14; and the intake negative pressure passage 15, and the atmosphere flowing from the atmospheric pressure passage 14 into the VSV 16 flows to the surge tank 6 through the intake negative pressure passage 15, and consequently, the amount of intake air of the internal combustion engine 1 is increased to be more than that at the normal time, is also considered. In such a case, it may also be arranged that whether or not the difference $\Delta$ga is a value larger than the judgment value $\alpha$ by a specified amount or more, is judged, and if the difference $\Delta ga$ is larger than the judgment value $\alpha$ by a specified amount or more, the arising of an abnormality in the VSV 16 is judged.

When the CPU 43 judges that an abnormality arises in the atmospheric pressure passage 14, the intake negative pressure passage 15, or the VSV 16, the CPU 43 finds the deviation between the difference $\Delta ga$ and the judgment value $\alpha$, and if the deviation is not less than a specified value, it judges that the variable engine mount 2 cannot be controlled, and stops the control of the VSV 16 and at the same time, sets the target idling speed used for the control of the idling speed control valve 11 to be higher by a specified speed.

On the other hand, if the deviation is less than a specified value, the CPU 43 judges that choking arises in the connecting passage 34, the atmospheric pressure passage 14, or the intake negative pressure passage 15, but that these passages are not completely choked up, and compensates the VSV control duty ratio so as to approximate the difference $\Delta ga$ to the judgment value $\alpha$.

Thus, the CPU 43 realizes the abnormality judging means, shifting control stopping means, idling speed changing means, and compensating means according to the present invention, by performing the application programs stored in the ROM 44.

The action and the effect of the present embodiment will be described below.

When the CPU 43 judges that the internal combustion engine 1 is in the state of idling, from the output signals of the throttle position sensor 13, the crank position sensor 28, and the like, the CPU 43 controls the VSV 16 so as to isolate the idling vibration of the internal combustion engine 1, and at the same time, performs the VSV abnormality judging routine as shown in Fig. 8. This VSV abnormality judging routine is a routine to be repeatedly performed for every specified time, and is stored in the ROM 44.

In the VSV abnormality judging routine, the CPU 43 judges, at S801, whether the condition of operation of the variable engine mount 2 is fulfilled or not.

If the CPU 43 judges at the S801 that the condition of operation of the variable engine mount 2 is fulfilled, the CPU 43 advances to S802, and judges whether the condition of operation of the variable engine mount 2 was unfulfilled or not at S801 when the present routine (VSV abnormality judging routine) was performed last time. That is, the CPU 43 judges whether or not it is true that when the VSV abnormality judging routine was performed last time, the operation of the variable engine mount 2 was not started and that this is the first time for the operation of the variable engine mount 2 to be started.

When the CPU 43 judges at the S802 that the condition of operation of the variable engine mount 2 was unfulfilled last time, the CPU 43 advances to S803, and inputs the output signal of the air flow meter 12, and stores this output signal in the RAM 45 as the intake air amount ga0 just before the operation of the variable engine mount 2.

At S804, the CPU 43 starts the control of the variable engine mount 2, and advances to S805.

At S805, the CPU 43 judges whether or not the value of the counter: CACM to clock the elapsed time since the start of control of the variable engine mount 2, is a specified time (for example, 1 sec) or more.

When the CPU 43 judges at the S805 that the value of the counter: CACM is a specified time or more, the CPU 43 judges that the operation of the VSV 16 is reflected onto the flow of the air, and advances to S806.

At S806, the CPU 43 inputs the output signal of the air flow meter 12, and stores this output signal as the intake air amount ga1 at the time of operation of the variable engine mount 2.

At S807, the CPU 43 subtracts the intake air amount ga0 inputted at the S803 from the intake air amount ga1 inputted at the S806 to calculate the difference $\Delta ga$, and at the same time, accesses the abnormality judging control map of the ROM 44, and calculates the judgment value $\alpha$ corresponding to the VSV control duty ratio at that time. Then, the CPU 43 judges whether the difference $\Delta ga$ is larger than the judgment value $\alpha$ or not.

When the CPU 43 judges at the 807 that the difference $\Delta ga$ is larger than the judgment value $\alpha$, the CPU 43 advances to S808, and continues the normal control of the variable engine mount 2.

When the CPU 43 judges at the 801 that the condition of the operation of the variable engine mount is not fulfilled, the CPU 43 advances to S809, and resets the value of the counter: CACM to "0".

In a case where the CPU 43 judges at the 802 that the condition of the operation of the variable engine mount was fulfilled when the present routine was performed last time, the CPU 43 advances to S804 without performing the processing of S803, and continues the control of the variable engine mount 2.

When the CPU 43 judges at the S805 that the value of the counter: CACM is less than a specified time (1 sec), the CPU 43 once finishes the processing of the VSV abnormality judging routine.

When the CPU 43 judges at the S807 that the difference $\Delta ga$ is not more than the judgment value $\alpha$, the CPU 43 considers that an abnormality arises in the atmospheric pressure passage 14, the intake negative pressure passage 15, or the VSV 16, and advances to S810.

At S810, the CPU 43 performs the processing corresponding to the time of arising of abnormality of the variable engine mount 2. Specifically, at S810, the CPU 43 performs the abnormal time control routine as shown in Fig. 9.

In the abnormal time control routine, the CPU 43 accesses the storing area of the flag: Xdutyup of the RAM 45 at S901, and judges whether "OFF" is stored or not.

When the CPU 43 judges at the S901 that the Xdutyup is "OFF" , the CPU 43 advances to S902, and resets the value of the counter: Cdutyup to clock the elapsed time since the start of the increase and decrease processing of the VSV control duty ratio (Cdutyup = 0), and at the same time, starts this counter: Cdutyup.

At S903, the CPU 43 judges whether the difference Δga obtained by subtracting the intake air amount ga0 from the intake air amount ga1, is "0" or not, that is, whether the ga1 and the ga0 are equal or not.

When the CPU 43 judges at S903 that the difference Δga is not "0" , the CPU 43 judges that a choking arises in the atmospheric pressure passage 14, the intake negative pressure passage 15, or the connecting passage 34 but the course in the passage is not completely closed, and advances to S904.

At S904, the CPU 43 performs the increase and decrease processing of the VSV control duty ratio. This increase and decrease processing is performed according to the increase and decrease processing routine shown in Fig. 10.

In the increase and decrease processing routine, at S1001, the CPU 43 judges whether the VSV control duty ratio is less than 50% or not.

When the CPU 43 judges at the S1001 that the VSV control duty ratio is less than 50% , the CPU 43 advances to S1002, and increases the VSV control duty ratio by 2%.

At S1003, the CPU 43 judges whether the VSV control duty ratio increased at the S1002 has exceeded 50% or not.

When the CPU 43 judges at the S1003 that the VSV control duty ratio increased at the S1002 has exceeded 50%, the CPU 43 advances to S1004, and sets the VSV control duty ratio to 50%. Then, the CPU 43 applies the driving current having a pulse width corresponding to the duty ratio: 50% to the VSV 16, and finishes the performing of the present routine.

When the CPU 43 judges at the S1003 that the VSV control duty ratio increased at the S1002 is not more than 50%, the CPU 43 applies the driving current having a pulse width corresponding to the VSV control duty ratio increased at the S1002 to the VSV 16, and after that, finishes the performing of the present routine.

Furthermore, when the CPU 43 judges at the S1001 that the VSV control duty ratio is not more than 50%, the CPU 43 advances to S1005, and judges whether the VSV control duty ratio exceeds 50% or not.

When the CPU 43 judges at the S1005 that the VSV control duty ratio exceeds 50%, the CPU 43 advances to S1006, and decreases the VSV control duty ratio by 2%.

Next, the CPU 43 advances to S1007, and judges whether the VSV control duty ratio decreased at the S1006 has become less than 50% or not.

When the CPU 43 judges at the 1007 that the VSV control duty ratio decreased at the S1006 has become less than 50%, the CPU 43 advances to S1008, and sets the VSV control duty ratio to 50%. Then, the CPU 43 applies the driving current having a pulse width corresponding to the duty ratio: 50% to the VSV 16, and finishes the performing of the present routine.

When the CPU 43 judges at the 1007 that the VSV control duty ratio decreased at the S1006 has not become less than 50%, that is, the VSV control duty ratio is not less than 50%, the CPU 43 applies the driving current having a pulse width corresponding to the duty ratio decreased at the S1006 to the VSV 16, and finishes the performing of the present routine.

Furthermore, when the CPU 43 judges at the S1005 that the VSV control duty ratio has not exceeded 50%, that is, the VSV control duty ratio is 50%, the CPU 43 advances to S1009, and stops the control of the VSV 16, and at the same time, sets the target idling speed: NT used for the control of the idling speed control valve 11 to the rotational speed: NAT higher than the normal target idling speed by a specified speed, and finishes the performing of the present routine.

The rotational speed: NAT is a rotational speed set to be approximately equal to the target idling speed to be set in the case where the internal combustion engine 1 is supported by a normal engine mount. That is, the target idling speed of an internal combustion engine supported by a variable engine mount is, considering the vibration isolating effect of the variable engine mount, set in a rotational area lower than that of an internal combustion engine supported by a normal engine mount, and therefore, when the variable engine mount is stopped, the idling vibration is worsened. However, the worsening of the idling vibration in a case where the control of the variable engine mount 2 is stopped, is restrained by raising the target idling speed at the time of stopping of the variable engine mount by a specified rotational speed to be a rotational speed approximately equal to the idling speed of an internal combustion engine supported by a normal engine mount.

When the CPU 43 has finished the performing of the increase and decrease processing routine, the CPU 43 returns to the abnormal time control routine in Fig. 9, and accesses the storing area of the flag: Xdutyup of the RAM 45, at S905, and writes in "ON".

At S906, the CPU 43 judges whether the value of the counter: Cdutyup exceeds a specified time (1 sec) or not. The specified time is a time set to prevent the delay of response of the air to the operation of the VSV 16 according to the increase and decrease processing at the S904, in other words, a time required for the increase and decrease processing at the S904 to be reflected to the flow of the air.

When the CPU 43 judges at the S906 that the value of the counter: Cdutyup exceeds a specified time, the CPU 43 judges that the increase and decrease processing at the S904 is reflected to the flow of the air and the air has become approximately in a steady state, and advances to S907.

At S907, the CPU 43 accesses the storing area of the flag: Xdutyup of the RAM 45, and writes in "OFF".

At S908, the CPU calculates a new difference Δga (difference Δga after the performing of the increase and decrease processing according to S904), and judges whether the calculated new difference Δga is a value larger than the desired judgment value $\alpha 0$ or not.

When the CPU 43 judges at the S908 that the new difference Δga is not more than the judgment value $\alpha 0$, the CPU 43 repeatedly performs the processing at the S904 and afterward until the difference Δga becomes a value larger than the judgment value $\alpha 0$. In this case, the increase and decrease processing according to the S904 is repeatedly performed until the difference Δga becomes a value larger than the judgment value $\alpha 0$, and consequently, the VSV control duty ratio is compensated so that the vibration isolating characteristics of the variable engine mount 2 may become the desired vibration isolating characteristics.

When the CPU 43 judges at the S906 that the value of the counter: Cdutyup is not more than a specified time, the CPU 43 once finishes the present routine, and performs the present routine again after the elapse of a specified time. When performing the present routine again, the flag: Xdutyup has been set at ON, and therefore, the CPU 43 judges at S901 that "OFF" is not stored in the storing area of the flag: Xdutyup, and performs the processing at S906 and afterward.

This processing is repeated until the value of the counter: Cdutyup is judged to be over a specified time at S906. Then, if the value of the counter: Cdutyup is judged to be over a specified time at the S906, the CPU 43 performs the processing at the S907 and afterward.

Furthermore, when the CPU 43 judges at the S903 that the difference Δga is "0" , that is, when the CPU 43 judges that the intake air amount of the internal combustion engine 1 does not change at all although the increase and decrease processing of the VSV control duty ratio has been performed, the CPU 43 judges that a choking which completely closes the course of the atmospheric pressure passage 14, the intake negative pressure passage 15, or the connecting passage 34, arises, or a defect of operation of the VSV 16 arises, and advances to S909.

At S909, the CPU 43 stops the control of the VSV 16, and at the same time, sets the target idling speed: NT used for the control of the idling speed control valve 11 to a rotational speed: NAT higher than the normal target idling speed by a specified rotational speed.

As described above, by the present embodiment, it is possible to detect an abnormality of the atmospheric pressure passage 14, the intake negative pressure passage 15, the connecting passage 34, or the VSV 16 by using an existing air flow meter.

Then, when an abnormality of the atmospheric pressure passage 14, the intake negative pressure passage 15, the connecting passage 34, or the VSV 16, is detected, the degree of the abnormality is discriminated. At that time, if the abnormality is such an abnormality that a choking arises in the atmospheric pressure passage 14, the intake negative pressure passage 15, or the connecting passage 34, but it is not a choking to completely close the course in the passage (small amount of air is flowing), the variable engine mount 2 can be made to have the desired vibration isolating characteristics by compensating the VSV control duty ratio.

Furthermore, when a choking which completely closes the course in the atmospheric pressure passage 14, the intake negative pressure passage 15, or the connecting passage 34, arises, or when a defect of operation of the VSV 16 arises, the control of the VSV 16 is stopped and at the same time, the target idling speed is raised by a specified rotational speed, and therefore, the idling speed of the internal combustion engine 1 becomes a rotational speed to restrain the idling vibration, so that the worsening of the idling vibration may be prevented.

Furthermore, in an internal combustion engine which uses a variable engine mount and an idling speed control valve simultaneously, it is considered to apply a system which control the idling speed control valve so that the opening may be throttled when controlling the VSV, estimating the increase of the intake air amount caused thereby, so as to prevent the change of the idling speed because of the increase of the intake air amount caused by the control of the variable engine mount. However, in a system like this, when an abnormality arises in the VSV or the intake passage, the atmosphere flowing from the variable engine mount to the intake system of the internal combustion engine, is decreased, and at the same time, the opening of the idling speed control valve is throttled, so that the intake air amount of the internal combustion engine may be decreased.

In this case, it should be arranged that at S807 of the above mentioned VSV abnormality judging routine, the value obtained by subtracting ga1 from ga0 is defined as the difference Δga and if this difference Δga is not less than the judgment value $\alpha$, an occurrence of abnormality of the VSV or a passage is judged.

Furthermore, in the present embodiment, the abnormality judging of the VSV or each passage is performed on the basis of the difference Δga obtained by subtracting the intake air amount ga0 from the intake air amount ga1, but it is also possible to perform the abnormality judging on the basis of the ratio between the intake air amount ga1 and the intake air amount ga0 (ga1/ga0 or ga0/ga1).

〈Embodiment 2〉

The second embodiment of the first abnormality judging device according to the present invention will be described below. Here, the arrangement different from that in the above mentioned embodiment will be described, and as for the same arrangement, the description will be omitted.

In the above mentioned embodiment, such an example that the normality of the VSV 16, the atmospheric pressure passage 14, the intake negative pressure passage 15, and the connecting passage 34 is judged on the basis of the amount of the change in the intake air amount of the internal combustion engine 1, has been described, but in the present embodiment, such an example that the normality of the VSV 16, the atmospheric pressure passage 14, the intake negative pressure passage 15, and the connecting passage 34 is judged on the basis of the amount of the change in the idling speed of the internal combustion engine 1, will be described.

As described in the above mentioned embodiment, when the shifting control between the introduction of the atmospheric pressure and the introduction of the intake negative pressure to the variable engine mount 2 is performed, a part of the atmosphere flowing in the intake tube 7 on the up stream side of the throttle valve 8 is introduced into the variable engine mount 2, and next, the atmosphere introduced into the variable engine mount 2 flows to the surge tank 6 through the intake negative pressure passage 14, so that the intake air amount of the internal combustion engine 1 may be increased.

The atmosphere introduced into the variable engine mount 2, in other words, the atmosphere flowing to the surge tank 6 from the variable engine mount 2 is an atmosphere taken in from the intake tube 7 on the down stream side of the air flow meter 12, and therefore, the amount of the atmosphere is detected by the air flow meter 12.

Then, the CPU 43 determines the fuel injection amount on the basis of the output signal of the air flow meter 12, and therefore, when the intake air amount is increased by the operation of the variable engine mount 2, the fuel injection amount is also increased along with that, and consequently, the amount of the gaseous mixture burned in the internal combustion engine 1 is increased, and the rotational speed of the internal combustion engine 1 is raised.

Thus, in the case where the VSV 16, the atmospheric pressure passage 14, the intake negative pressure passage 15, and the connecting passage 34 are normal, the engine speed is raised in accordance with the increase of the intake air amount. On the other hand, in the case where an abnormality arises in the VSV 16, the atmospheric pressure passage 14, the intake negative pressure passage 15, or the connecting passage 34, the intake air amount is decreased, and therefore, the amount of rising of the engine speed is decreased in accordance with that.

Therefore, in the present embodiment, at the time of idling of the internal combustion engine 1, the CPU 43 reads in the output signal of the crank position sensor 28 just before the performing of the control of the VSV, and calculates the engine speed NE0 on the basis of this output signal. Specifically, the CPU 43 measures the intervals at which the crank position sensor 28 outputs a signal, and calculates the rotational speed of the crank shaft 27, the so-called engine speed, by the measured intervals. Thus, the crank position sensor 28 and the CPU 43 realize the rotational speed detecting means according to the present invention.

Next, after the elapse of a specified time since the start of performing of the VSV control, the CPU 43 reads in the output signal of the crank position sensor 28, and calculates the engine speed NE1 on the basis of this signal. Here, the reason why the calculation timing of the engine speed NE1 is made to be after the elapse of a specified time since the start of performing of the VSV control, is to prevent the misjudgment because of the delay of response of the air to the action of the VSV 16, as descried in the above mentioned first embodiment.

Then, the CPU 43 judges the normality of the atmospheric pressure passage 14, the intake negative pressure passage 15, the connecting passage 34, and the VSV 16 on the basis of the difference ΔNE obtained by subtracting the engine speed NE0 from the engine speed NE1.

By the way, in the present embodiment, the abnormality judging control map (refer to Fig. 11) showing the relation between the VSV control duty ratio and the judgment value β of the amount of rising of the engine speed, should be stored in the ROM 45 of the ECU 31.

The judgment value β is a normal value of the difference between the engine speed NE0 at the time of non-operating of the variable engine mount 2 (at the time of non-controlling of the VSV 16) and the engine speed NE1 at the time of operating of the variable engine mount 2 (at the time of controlling of the VSV 16). Then, the relation between the judgment value β and the VSV control duty ratio should be found in advance by experiments or the like.

When judging the normality of the atmospheric pressure passage 14, the intake negative pressure passage 15, the connecting passage 34, and the VSV 16, if the difference ΔNE between the engine speed NE0 and the engine speed NE1 exceeds the judgment value β, the CPU 43 judges that the atmospheric pressure passage 14, the intake negative pressure passage 15, the connecting passage 34, and the VSV 16 are normal, and if the difference ΔNE is not more than the judgment value β, the CPU 43 judges that an abnormality arises in the atmospheric pressure passage 14, the intake negative pressure passage 15, the connecting passage 34, or the VSV 16.

Furthermore, such a case that the VSV 16 falls into an operational defect in the state of continuity of the 3 passages: the connecting passage 34; the atmospheric pressure passage 14; and the intake negative pressure passage 15, and the atmosphere flowing into the VSV 16 from the atmospheric pressure passage 14 flows to the surge tank 6 through the intake negative pressure passage 15, and consequently, the intake air amount of the internal combustion engine 1 is increased to be more than that at the normal time, is also considered. Therefore, the CPU 43 may also be arranged to judge that an abnormality arises in the VSV 16 when the difference ΔNE is a value larger than the judgment value β by a specified amount or more.

The other arrangement is similar to that in the above mentioned embodiment, and the description will be omitted.

The action and the effect of the present embodiment will be described below.

When judging that the internal combustion engine 1 is in an idling state, the CPU 43 controls the VSV 16 so as to isolate the idling vibration of the internal combustion engine 1, and at the same time, repeatedly performs the VSV abnormality judging routine shown in Fig. 12 for every specified time.

In the VSV abnormality judging routine, at S1201, the CPU 43 judges whether the operational condition of the variable engine mount 2 is fulfilled or not.

When the CPU 43 judges at the S1201 that the operational condition of the variable engine mount 2 is fulfilled, the CPU advances to S1202, and judges whether the operational condition of the variable engine mount 2 was unfulfilled or not at S1201 when the present routine was performed last time. That is, the CPU 43 judges whether it is true or not that when the present routine was performed last time, the operation of the variable engine mount 2 had not been started, and that this is the first time for the operation of the variable engine mount 2 to be started.

When the CPU 43 judges at the S1202 that the operational condition of the variable engine mount 2 was not fulfilled when the present routine was performed last time, the CPU advances to S1203, and reads in the output signal of the crank position sensor 28, and calculates the engine speed NE on the basis of that output signal. Then, the CPU 43 stores the engine speed NE in the RAM 45 as the engine speed NE0 just before the operation of the variable engine mount 2.

At S1204, the CPU 43 starts the control of the variable engine mount 2, and next, at S1205, it judges whether or not the value of the counter: CACM clocking the elapsed time since the start of the control of the variable engine mount 2, is a specified time (for example, 1 sec) or more.

When the CPU 43 judges at the S1205 that the value of the counter: CACM is less than a specified time, the CPU 43 once finishes the performing of the present routine, and performs the present routine again after the elapse of a specified time. Then, when the CPU 43 judges at the S1205 that the value of the counter: CACM is not less than a specified time, the CPU 43 advances to S1206.

At S1206, the CPU 43 reads in the output signal of the crank position sensor 28, and calculates the engine speed NE on the basis of this output signal. Then, the CPU 43 stores the engine speed NE in the RAM 45 as the engine speed NE1 at the time of operation of the variable engine mount 2.

At S1207, the CPU 43 subtracts the engine speed NE0 calculated at the S1203 from the engine speed NE1 calculated at the S1206 to calculate the difference ΔNE, and at the same time, accesses the abnormality judging control map of the RAM 45, and calculates the judgment value β corresponding to the VSV control duty ratio at that time. Then, the CPU 43 judges whether the difference ΔNE exceeds the judgment value β or not.

When the CPU 43 judges at the S1207 that the difference ΔNE exceeds the judgment value β, the CPU 43 considers that the atmospheric pressure passage 14, the intake negative pressure passage 15, the connecting passage 34, and the VSV 16 are normal, and advances to S1208.

At S1208, the CPU 43 continues the normal control of the variable engine mount 2.

On the other hand, when the CPU 43 judges at the S1201 that the operational condition of the variable engine mount is not fulfilled, the CPU advances to S1209, and resets the value of the counter: CACM to "0" , and finishes the performing of the present routine.

When the CPU 43 judges at the S1202 that the operational condition of the variable engine mount was fulfilled when the present routine was performed last time, the CPU advances to S1204 without performing the processing of S1203, and continues the control of the variable engine mount 2.

When the CPU 43 judges at the S1207 that the difference ΔNE between the engine speed NE0 and the engine speed NE1 is not more than the judgment value β, the CPU 43 considers that an abnormality arises in the atmospheric pressure passage 14, the intake negative pressure passage 15, the connecting passage 34, or the VSV 16, and advances to S1210.

At S1210, the CPU 43 performs the processing corresponding to the time of occurrence of an abnormality of the variable engine mount 2. Specifically, at S1210, the CPU 43 performs the abnormal time control routine as shown in Fig. 13.

In the abnormal time control routine, at S1301, the CPU 43 accesses the storing area of the flag: Xdutyup of the RAM 45, and "OFF" judges whether "OFF" is stored or not.

When the CPU 43 judges at the S1301 that "OFF" is stored in the storing area of the flag: Xdutyup of the RAM 45, the CPU 43 advances to S1302, and resets the value of the counter: Cdutyup to "0" , and at the same time, starts up this counter: Cdutyup.

At S1303, the CPU 43 judges whether the difference ΔNE calculated at S1206 of the VSV abnormality judging routine shown in Fig. 12, is "0" or not, that is, the engine speed NE1 and the engine speed NE0 are equal or not.

When the CPU 43 judges at the S1303 that the difference ΔNE is not "0" , the CPU 43 considers that a choking arises in the atmospheric pressure passage 14, the intake negative pressure passage 15, or the connecting passage 34, but that the course in the passage is not completely closed, and advances to S1304.

At S1304, the CPU 43 performs the increase and decrease processing of the VSV control duty ratio. Since this increase and decrease processing is similar to that in the above mentioned first embodiment, the description will be omitted here.

At S1305, the CPU 43 accesses the storing area of the flag: Xdutyup of the RAM 45, and writes in "ON".

At S1306, the CPU 43 judges whether or not the value of the counter: Cdutyup is a specified time (1 sec) or more.

When the CPU 43 judges at the S1306 that the value of the counter: Cdutyup is a specified time or more, the CPU 43 advances to S1307. At S1307, the CPU 43 accesses the storing area of the flag: Xdutyup of the RAM 45, and writes in "OFF".

At S1308, the CPU 43 calculates the engine speed NE1' at that time, and subtracts the engine speed NE0 from this engine speed NE1 ¨E'. Then, the CPU 43 judges whether the calculated difference ΔNE is a value larger than the desired judgment value β0 or not.

When the CPU 43 judges at the S1308 that the difference ΔNE is not more than the judgment value β0, the CPU 43 repeatedly performs the processing of the S1304 and afterward until the difference ΔNE becomes a value larger than the judgment value β0. In this case, the increase and decrease processing according to the S1304 is repeated until the difference ΔNE becomes a value larger than the judgment value β0, and consequently, the VSV control duty ratio is compensated so that the vibration isolating characteristics of the variable engine mount 2 may become the desired vibration isolating characteristics.

When the CPU 43 judges at the S1306 that the value of the counter: Cdutyup is less than a specified time, the CPU 43 once finishes the performing of the present routine, and performs the present routine again after the elapse of a specified time.

When the CPU 43 performs the present routine again, since the flag: Xdutyup is set at ON, it is judged at S1301 that "OFF" is not stored in the storing area of the flag: Xdutyup, and the processing at S1306 and afterward is performed. Such processing is repeated until it is judged at S1306 that the value of the counter: Cdutyup is not less than a specified time.

Furthermore, when the CPU 43 judges at the S1303 that the difference ΔNE is "0" , that is, when the CPU 43 judges that the engine speed of the internal combustion engine 1 does not change at all although the increase and decrease processing of the VSV control duty ratio has been performed, the CPU 43 considers that a choking to completely close the course of the atmospheric pressure passage 14, the intake negative pressure passage 15, or the connecting passage 34, arises, or that a defect of operation of the VSV 16 arises, and advances to S1309.

At S1309, the CPU 43 stops the control of the VSV 16 (stops the operation of the variable engine mount 2), and at the same time, sets the target idling speed NE used for the control of the idling speed control valve 11 to the rotational speed NEA higher than the normal target idling speed by a specified rotational speed.

In this case, the idling speed of the internal combustion engine 1 becomes approximately equal to the idling speed of an internal combustion engine supported by a normal engine mount, and the worsening of the idling vibration is restrained.

As mentioned above, by the present embodiment, even if an existing crank position sensor is used, the effect similar to that of the above mentioned first embodiment can be obtained.

Furthermore, in an internal combustion engine using the variable engine mount and the idling speed control valve together, in a case of an internal combustion engine having a system which estimates the increasing amount of the intake air amount caused by the operating of the variable engine mount and controls the idling speed control valve to throttle the opening thereof, so as to prevent the change of the idling speed because of the increase of the intake air amount caused by the operation of the variable engine mount, such an arrangement that the value obtained by subtracting NE1 from NE0 is defined as the difference ΔNE and if this difference ΔNE is not less than a specified value β, it is judged that an abnormality arises in the VSV or a passage, is sufficient.

Furthermore, in the present embodiment, an example is described, in which an abnormality of the VSV or each passage is judged on the basis of the difference ΔNE between the engine speed NE1 and the engine speed NE0, but it is also possible to judge an abnormality of the VSV or each passage on the basis of the ratio between the engine speed NE1 and the engine speed NE0 (NE1/NE0 or NE0/NE1).

〈Embodiment 3〉

The third embodiment of the first abnormality judging device according to the present invention will be described below. Here, the arrangement different from that in the above mentioned first embodiment will be described, and as for the same arrangement, the description will be omitted.

In the above mentioned first embodiment, an example is described, in which in the abnormality judging processing, the intake air amount ga1 at the time of operating of the variable engine mount 2 and the intake air amount ga0 at the time of non-operating of the variable engine mount 2, are detected, and the normality of the VSV 16 and each passage is judged on the basis of the difference between these intake air amounts ga0 and ga1. However, in the present embodiment, such an example that when detecting the intake air amount ga1 at the time of operating of the variable engine mount 2, the VSV 16 is controlled so as to positively increase the amount of atmosphere to be supplied from the variable engine mount 2 to the internal combustion engine 1, will be described.

In the present embodiment, when detecting the intake air amount ga1 at the time of operating of the variable engine mount in the abnormality judging processing, the CPU 43 of the ECU 31 raises the frequency of the driving pulse signal to be applied to the VSV 16 to a frequency higher than that at the normal time by a specified amount, and at the same time, prohibits the action of the ISCV 11 in the valve closing direction.

When the frequency of the driving pulse signal to be applied to the VSV 16 is gradually raised, the valve body 16a of the VSV 16 alternately repeats, at a high speed, the opening of the first passage 16f (closing of the second passage 16d) and the opening of the second passage 16d (closing of the first passage 16f). Then, when the frequency of the driving pulse signal is raised to a frequency higher than that at the normal time by a specified amount or more, the valve body 16a cannot follow the driving pulse signal, and becomes in a state as if it were stopping at the mid position between the opening end of the first passage 16f and the opening end of the second passage 16d.

In this case, in the VSV 16, a state where the first passage 16f and the second passage 16d are practically connected, is generated, and a state where the atmospheric pressure passage 14 and the intake negative pressure passage 15 are connected through the VSV 16, is generated. Then, the atmosphere supplied to the VSV 16 through the atmospheric pressure passage 14, flows to the intake negative pressure passage 15 from the VSV 16, and next, it is supplied to the surge tank 6, and consequently, the intake air amount of the internal combustion engine 1 is increased to be more than that in the case where the variable engine mount 2 is normally operated.

At that time, by prohibiting the operation of the ISCV 11 in the valve closing direction, even if the intake air amount is increased by the normal operation of the variable engine mount 2 and the VSV 16, the ISCV 11 does not operate so as to decrease the intake air amount, and therefore, the intake air amount of the internal combustion engine 1 keeps the increased state.

Accordingly, when the variable engine mount 2 and the VSV 16 are normal, the difference between the intake air amount at the time of operating of the variable engine mount 2 and the intake air amount at the time of non-operating thereof is shown clearly.

Furthermore, if the frequency of the driving pulse signal to be applied to the VSV 16 is gradually raised, the introduction of the intake negative pressure and the introduction of the atmospheric pressure are alternately performed at a high speed in the variable engine mount 2, and the diaphragm 39 does not follow the shifting between the introduction of the intake negative pressure and the introduction of the atmospheric pressure. Then, when the frequency of the driving pulse signal is raised to be higher than that at the normal time by a specified amount or more, and a state where the atmospheric pressure passage 14 and the intake negative pressure passage 15 are connected at the VSV 16, is generated, the atmospheric pressure and the intake negative pressure are hardly introduced into the variable engine mount 2.

Consequently, if the frequency of the driving pulse signal to be applied to the VSV 16 is raised, the variable engine mount 2 does not practically perform the action of expansion and contraction, and it does not expand when the vibration in the direction of compression is inputted, or it does not contract when the vibration in the direction of expansion is inputted, so that the vibration may not positively be worsened.

Thus, the CPU 43 realizes the frequency control means according to the present invention.

On the other hand, in the RAM 45 of the ECU 31, the areas to store various types of flags such as a start flag (flagst), a cam position signal interruption flag (flagcam), an abnormality judging performing flag (flagacm), a VSV control flag (flagacm1), an abnormality discrimination flag (flagng), and an ISCV control flag (flagisc), are set.

The start flag (flagst) is a flag which is set (= 1) at the time of start of the internal combustion engine 1, and which is reset (= 0) after the performing of the abnormality judging processing of the variable engine mount 2.

The cam position signal interruption flag (flagcam) is a flag which is set (= 1) when the cam position sensor 42 outputs a signal, and which is reset (= 0) automatically after the elapse of a specified time.

The abnormality judging performing flag (flagacm) is a flag which is set (= 1) at the time of start of the performing of the abnormality judging processing of the variable engine mount 2, and which is reset (= 0) at the time of interruption or end of the abnormality judging processing.

The VSV control flag (flagacm1) is a flag which is set (= 1) at the time of start of the control of the VSV 16 related to the abnormality judging processing, and which is reset (= 0) at the time of interruption or end of the abnormality judging processing.

The abnormality discrimination flag (flagng) is a flag which is set (= 1) when the abnormality of the variable engine mount 2 is judged, and which is reset (= 0) when the normality of the variable engine mount 2 is judged.

The ISCV control flag (flagisc) is a flag which is set (= 1) when calculating the lower limit guard value of the ISCV 11 used at the time of the abnormality judging processing of the variable engine mount 2, and which is reset (= 0) at the time of interruption or end of the abnormality judging processing.

The action and the effect according to the present embodiment will be described below.

The CPU 43 performs the VSV control routine shown in Fig. 14 at the time of operation of the internal combustion engine 1. This VSV control routine is a routine performed each time the crank position sensor 28 outputs a signal, and is stored in the ROM 44.

In the VSV control routine, at S1401, first, the CPU 43 accesses the storing area of the cam position signal interruption flag (flagcam) of the RAM 45, and judges whether "1" is stored or not.

When the CPU 43 judges at the S1401 that "1" is stored in the storing area of the cam position signal interruption flag (flagcam) of the RAM 45, the CPU 43 advances to S1402.

At S1402, the CPU 43 resets, to "0" , the value of the crank position counter (ccrnk) which is reset when the cam position signal interruption flag (flagcam) is set (flagcam = 1), and which is increased by 1 each time the crank position sensor 28 outputs a signal.

On the other hand, when the CPU 43 judges at the S1401 that "0" is stored in the storing area of the cam position signal interruption flag (flagcam) of the RAM 45, the CPU 43 advances to S1403, and increases the value of the crank position counter (ccrnk) by 1.

The CPU 43 which has finished performing of the processing of the S1402 or the S1403, advances to S1404, and calculates the engine speed or the like of the internal combustion engine 1 on the basis of the value of the crank position counter (ccrnk) and the like.

At S1405, the CPU 43 accesses the storing area of the abnormality judging performing flag (flagacm) of the RAM 45, and judges whether "1" is stored or not, that is, whether the abnormality judging processing is being performed or not.

When the CPU 43 judges at the S1405 that "0" is stored in the storing area of the abnormality judging performing flag (flagacm) of the RAM 45, the CPU 43 advances to S1406, and performs the normal VSV control so that the idling vibration of the internal combustion engine 1 may be absorbed.

Specifically, the CPU 43 performs the setting of the control mode of the VSV 16 (setting of the direct mode to start the control of the VSV 16 immediately, or setting of the time mode to start the control of the VSV 16 by the interruption processing after the elapse of a specified time), the calculation of the VSV control duty ratio in the time mode, the calculation of the start time of the VSV control corresponding to the VSV control duty ratio, the setting of the start time of the VSV control into the interruption timer TA which outputs an interruption signal at a specified time, and the like.

Furthermore, when at the S1406, the time mode is set as the control mode of the VSV 16, the CPU 43 performs the interruption control routine to be described later, and at the same time, starts the control of the VSV 16, at the time when the interruption timer TA outputs an interruption signal.

When the CPU 43 judges at the S1405 that "1" is stored in the storing area of the abnormality judging performing flag (flagacm) of the RAM 45, the CPU 43 finishes the performing of the present routine without performing the normal VSV control.

On the other hand, when the internal combustion engine 1 is in an idling state, the CPU 43 repeatedly performs the ISCV feedback control routine shown in Fig. 15 for every specified time.

In the ISCV feedback control routine, at S1501, the CPU 43 judges whether the performing conditions of the ISCV feedback control are fulfilled or not.

As the performing conditions of the ISCV feedback control, the conditions such as (1) a condition that the value of the output signal of the vehicle speed sensor 51 (vehicle running speed) is not more than a specified value, (2) a condition that the value of the output signal of the throttle position sensor 13 (opening of the throttle) is not more than a specified value, (3) a condition that the value of the output signal of the water temperature sensor 30 (temperature of the cooling water) is not less than a specified value, can be shown as examples.

When the CPU 43 judges at the S1501 that the performing conditions of the ISCV feedback control are not fulfilled, the CPU 43 advances to S1510, and calculates the ISCV control duty ratio (duty) corresponding to the operational state of the internal combustion engine 1 at that time, and stores the calculated ISCV control duty ratio (duty) in a specified area of the RAM 45.

Next, the CPU 43 advances to S1511, and applies, to the ISCV 11, the driving pulse signal corresponding to the ISCV control duty ratio (duty) calculated at the S1510.

On the other hand, when the CPU 43 judges at the S1501 that the performing conditions of the ISCV feedback control are fulfilled, the CPU 43 advances to S1502, and accesses the storing area of the abnormality discrimination flag (flagng) of the RAM 45, and judges whether "1" is stored or not.

When the CPU 43 judges at the S1502 that "0" is stored in the storing area of the abnormality discrimination flag (flagng) of the RAM 45, the CPU 43 advances to S1503. At S1503, the CPU 43 performs the calculating processing of the normal target idling speed, and calculates the target idling speed.

When the CPU 43 judges at the S1502 that "1" is stored in the storing area of the abnormality discrimination flag (flagng) of the RAM 45, the CPU 43 advances to S1504, and sets a rotational speed higher than the normal target idling speed as the target idling speed.

Here, it may be arranged that the target idling speed to be set at the S1504 has been stored in the ROM 44 or the like in advance, and in that case, it is preferable to be stored as the map showing the relation between the operational state of the internal combustion engine 1 and the target idling speed.

The CPU which has finished performing of the processing at the S1503 or the S1504 advances to S1505, and inputs the actual engine speed (actual rotational speed) calculated on the basis of the output signal of the crank position sensor 28, and subtracts the target idling speed set at the S1503 or the S1504 from this actual rotational speed to calculate the difference Δne 1 (= actual rotational speed - target idling speed) . Then, the CPU 43 judges whether the difference Δne1 is larger than a specified value (n) or not.

When the CPU 43 judges at the S1505 that the difference Δne1 is larger than a specified value (n), that is, when the CPU 43 judges that the actual rotational speed is higher than a rotational speed obtained by adding a specified value (n) to the target idling speed, the CPU 43 advances to S1506, and decreasingly compensates the ISCV control duty ratio (duty) used for the control of the ISCV 11 at that time so as to lower the actual rotational speed, and calculates a new ISCV control duty ratio (duty). The ISCV control duty ratio (duty) newly calculated at the S1506 is stored in a specified area of the RAM 45.

Furthermore, when the CPU 43 judges at the S1505 that the difference Δne1 is not more than a specified value (n), the CPU 43 advances to S1507, and judges whether the difference Δne2 obtained by subtracting the actual rotational speed from the target idling speed is larger than a specified value (n) or not.

When the CPU 43 judges at the S1507 that the difference Δne2 is larger than the specified value (n), that is, when the CPU 43 judges that the target idling speed is higher than a rotational speed obtained by adding a specified value (n) to the actual rotational speed, the CPU 43 advances to S1508.

At S1508, the CPU 43 increasingly compensates the ISCV control duty ratio (duty) used for the control of the ISCV 11 at that time so as to raise the actual rotational speed, and calculates a new ISCV control duty ratio (duty). The new ISCV control duty ratio (duty) calculated at the S1508 is stored in a specified area of the RAM 45.

When the CPU 43 judges at the S1507 that the difference Δne2 is smaller than the specified value (n), the CPU 43 considers that the difference between the target idling speed and the actual rotational speed is in the range of the allowable error, and does not compensate the ISCV control duty ratio (duty).

When the performing of the processing of the S1506 or the S1508 has been finished, or when it has been judged at the S1507 that the difference between the target idling speed and the actual rotational speed is not more than a specified value (n), the CPU 43 advances to S1509, and performs the lower limit guard processing of the ISCV control duty ratio (duty).

When performing the lower limit guard processing, the CPU 43 performs the lower limit guard control routine shown in Fig. 16.

In the lower limit guard control routine, at S1601, the CPU 43 accesses the storing area of the abnormality judging performing flag (flagacm) of the RAM 45, and judges whether "1" is stored or not.

When the CPU 43 judges at the S1601 that "1" is stored in the storing area of the abnormality judging performing flag (flagacm) of the RAM 45, the CPU 43 advances to S1602.

At S1602, the CPU 43 accesses the storing area of the VSV control flag (flagacm1) of the RAM 45, and judges whether "1" is stored or not, that is, whether the VSV 16 is driven by the driving pulse signal of a high frequency so as to perform the abnormality judging processing or not.

When the CPU 43 judges at the S1602 that "0" is stored in the storing area of the VSV control flag (flagacm1) of the RAM 45, the CPU 43 advances to S1603.

At S1603, the CPU 43 accesses the storing area of the ISCV control flag (flagisc) of the RAM 45, and judges whether "0" is stored or not.

When the CPU 43 judges at the S1603 that "0" is stored in the storing area of the ISCV control flag (flagisc) of the RAM 45, the CPU 43 considers that the number of times of performing of the S1603 and afterward is the first time, and advances to S1604.

At S1604, the CPU 43 accesses the storing area of the ISCV control flag (flagisc) of the RAM 45, and writes in "1".

At S1605, the CPU 43 sores the ISCV control duty ratio (duty) calculated in the ISCV feedback control routine, in a specified area of the RAM 45 as the initial value (dutym) used for the calculation of the average duty ration to be described later.

At S1606, the CPU 43 divides the value obtained by subtracting the initial value (dutym) set at the S1605 from the ISCV control duty ratio (duty) calculated in the ISCV feedback control routine, by a specified coefficient (in this case, "4" ), and adds the value obtained thereby ( (duty - dutym)/ 4 ) to the initial value (dutym) to calculate the average duty ratio (dutym).

By the way, when the number of times of performing of the S1603 and afterward is the first time, the duty ratio (duty) and the initial value (dutym) are the same, and therefore, the average duty ratio calculated by the above mentioned procedure becomes a value equal to the initial value (dutym).

The average duty ratio (dutym) calculated at the S1606 is stored in the RAM 45 instead of the initial value (dutym).

On the other hand, when the CPU 43 judges at the S1603 that "1" is stored in the storing area of the ISCV control flag (flagisc) of the RAM 45, the CPU 43 considers that the number of times of performing of S1603 and afterward is the second time and afterward, and advances to S1606.

At S1606, the average duty ratio (dutym) stored in a specified area of the RAM 45 is read out. Then, the CPU 43 divides the value obtained by subtracting the average duty ratio (dutym) from the ISCV control duty ratio (duty) used for the control of the ISCV 11 at that time, by a specified coefficient (in this case, "4" ), and adds the value obtained thereby ( (duty - dutym)/ 4 ) to the average duty ratio (dutym) to calculate a new average duty ratio (dutym). Then, the CPU 43 erases the average duty ratio (dutym) stored in the RAM 45, and writes in the average duty ratio (dutym) newly calculated at the S1606.

The average duty ratio (dutym) calculated by repeatedly performing the present routine like this, becomes the average value of the ISCV control duty ratio at the time of non-operating of the variable engine mount 2.

Furthermore, after the CPU 43 has repeatedly performed the present routine, if the CPU 43 judges at the S1602 that "1" is stored in the storing area of the VSV control flag (flagacm1) of the RAM 45, the CPU 43 considers that the control of the VSV 16 by the driving pulse signal of a high frequency has been started, and advances to S1608.

At S1608, the CPU 43 compares the ISCV control duty ratio (duty) calculated in the ISCV feedback control routine with the average duty ratio (dutym) stored in the RAM 45.

When the CPU 43 judges at the S1608 that the ISCV control duty ratio (duty) is not less than the average duty ratio (dutym), the CPU 43 finishes the performing of the present routine.

On the other hand, when the CPU 43 judges at the S1608 that the ISCV control duty ratio (duty) is less than the average duty ratio (dutym), the CPU 43 advances to S1609, and performs the so-called lower limit guard processing in which the average duty ratio (dutym) is considered as a new ISCV control duty ratio (duty), and finishes the performing of the present routine.

After finishing the performing of the above mentioned lower limit guard processing, the CPU 43 advances to S1511 shown in Fig. 15, and applies a driving pulse signal corresponding to the ISCV control duty ratio (duty) determined by the lower limit guard processing, to the ISCV 11, and once finishes the performing of the present routine.

Thus, since the CPU 43 performs the ISCV feedback control routine and the lower limit guard control routine shown in Figs. 15, 16, the control to the closing side of the ISCV 11 is prohibited, when the VSV 16 is driven by the driving pulse signal of a high frequency at the time of performing of the abnormality judging processing of the variable engine mount 2 and the VSV16.

Next, the abnormality judging processing according to the present embodiment will be described. When performing the abnormality judging processing, the CPU 43 performs the abnormality judging control routine shown in Fig. 17. This abnormality judging control routine is a routine repeatedly performed for every specified time, and is stored in the ROM 44.

In the abnormality judging control routine, at S1701, the CPU 43 inputs an output signal of the starter switch 54, and judges whether the starter switch 54 is in an ON state or not, that is, whether the internal combustion engine 1 is in a state of start or not.

When the CPU 43 judges at the S1701 that the starter switch 54 is in an ON state, the CPU 43 advances to S1724, and writes "1" in the storing area of the start flag (flagst) of the RAM 45, and advances to S1702.

On the other hand, when the CPU 43 judges at the S1701 that the starter switch 54 is in an OFF state, the CPU 43 directly advances to S1702.

At S1702, the CPU 43 judges whether "1" is stored in the storing area of the start flag (flagst) of the RAM 45 or not.

When the CPU 43 judges at the S1702 that "0" is stored in the storing area of the start flag (flagst), the CPU 43 considers that the abnormality judging processing of the variable engine mount 2 has already been finished, and advances to S1720.

At S1720, the CPU 43 accesses the storing area of the abnormality judging performing flag (flagacm) of the RAM 45, and writes in "0".

Next, the CPU 43 advances to S1721, and accesses the storing area of the VSV control flag (flagacm1) of the RAM 45, and writes in "0".

At S1722, the CPU 43 resets, to "0" , the free run timer ( c ) started up at the time of performing of the abnormality judging processing to be described later.

At S1723, the CPU 43 inputs the output signal value (ga) of the air flow meter 12 (intake air amount), and writes this intake air amount (ga) in a specified area of the RAM 45 as the initial value (gam) used for the calculation of the average intake air amount to be described later, and finishes the performing of the present routine.

Here, in a case when the initial value or the average intake air amount has already been stored in a specified area of the RAM 45, the previously stored initial value or average intake air amount is erased, and the intake air amount (ga) inputted at the S1723 is written in.

Furthermore, when the CPU 43 judges at the S1702 that "1" is stored in the storing area of the start flag (flagst), the CPU 43 considers that the abnormality judging processing has not yet been completed, and advances to the processing of S1703 and afterward.

At S1703 to S1706, the CPU 43 judges whether the conditions of performing of the abnormality judging processing are fulfilled or not. As the conditions of performing of the abnormality judging processing, the conditions such as a condition (1) that the internal combustion engine 1 is in a stable idling state, and a condition (2) that the output voltage of the battery as the driving source of the VSV 16 is not less than a specified value: D, can be shown as examples.

Then, the CPU 43 performs the processing at S1703 to S1705 so as to judge whether the condition (1) is fulfilled or not.

At S1703, the CPU 43 inputs the value of the output signal of the throttle position sensor 13 (throttle opening), and judges whether or not the throttle opening is a specified value: A or less.

At S1704, the CPU 43 inputs the value of the output signal of the vehicle speed sensor 51 (vehicle running speed), and judges whether or not the vehicle running speed is a specified value: B or less.

At S1705, the CPU 43 inputs the value of the output signal of the water temperature sensor 30 (cooling water temperature), and judges whether or not the cooling water temperature is a specified value: C or more, that is, whether or not the warming up of the internal combustion engine 1 is finished.

If at least either of the judging requirements according to the S1703 to S1705 is unfulfilled, the CPU 43 performs the processing of S1720 to S1723, and after that, finishes the performing of the present routine.

On the other hand, if all of the judging requirements according to the S1703 to S1705 are fulfilled, the CPU 43 performs the processing of S1706 so as to judge whether the condition (2) is fulfilled or not.

At S1706, the CPU 43 judges whether or not the output voltage of the battery is a specified value: D or more.

When the CPU 43 judges at the S1706 that the output voltage of the battery is less than a specified value: D, the CPU 43 performs the processing of S1720 to S1723, and after that, finishes the performing of the present routine.

On the other hand, when the CPU 43 judges at the S1706 that the output voltage of the battery is not less than a specified value: D, the CPU 43 advances to S1707.

At S1707, the CPU 43 accesses the storing area of the abnormality judging performing flag (flagacm) of the RAM 45, and writes in "1".

At S1708, the CPU 43 starts up the free run timer ( c ) if the number of times of performing of the present routine is the first time after the start of the internal combustion engine 1. If the number of times of performing of the present routine is the second time and afterward after the start of the internal combustion engine 1, that is, if the free run timer ( c ) has already been started up, the CPU 43 advances to S1709 without performing the processing of S1708.

At S1709, the CPU 43 judges whether or not the clocking time of the free run timer ( c ) is 3 seconds or more.

When the CPU 43 judges at the S1709 that the clocking time of the free run timer ( c ) is less than 3 seconds, the CPU 43 advances to S1719, and inputs the output signal value (ga) of the air flow meter 12 (intake air amount), and at the same time, reads out the initial value (gam) stored in the RAM 45. Then, the CPU 43 adds the value ( (ga - gam)/4 ) obtained by dividing the difference (ga - gam) between the intake air amount (ga) and the initial value (gam) by a specified coefficient (in this case, "4" ), to the initial value (gam), and calculates an average intake air amount (gam). The average intake air amount (gam) is stored in a specified area of the RAM 45 instead of the initial value (gam).

After performing the processing of the S1709, the CPU 43 once finishes the performing of the present routine, and performs the present routine again after the elapse of a specified time. When performing the present routine again, if the CPU 43 judges at S1709 that the measuring time of the free run timer ( c ) is less than 3 seconds, the CPU 43 performs the processing of the S1719 again, and renews the average intake air amount (gam). Such processing is repeated until the measuring time of the free run timer ( c ) reaches a time not less than 3 seconds at S1709, and consequently, the CPU 43 calculates the average value of the intake air amount for 3 seconds as the intake air amount at the time of non-operating of the VSV 16.

However, if at least either of the judging requirements according to S1703 to S1707 becomes unfulfilled before the measuring time of the free run timer ( c ) reaches a time not less than 3 seconds, the CPU 43 performs the processing of S1720 to S1723 so as to interrupt the performing of the abnormality judging processing, and the average intake air amount (gam) stored in the RAM 45 is once reset.

Furthermore, if the CPU 43 judges at S1709 that the measuring time of the free run timer ( c ) is not less than 3 seconds after repeatedly performing the present routine, the CPU 43 advances to S1710.

At S1710, the CPU 43 accesses the storing area of the VSV control flag (flagacm1) of the RAM 45, and judges whether "1" is stored or not, that is, whether the control of VSV 16 has been started so as to perform the abnormality judging or not.

When the CPU 43 judges at the S1710 that "1" is not stored in the storing area of the VSV control flag (flagacm1) of the RAM 45, the CPU 43 considers that the control of the VSV 16 has not been started, and advances to S1711.

At S1711, the CPU 43 writes "1" in the storing area of the VSV control flag (flagacm1) of the RAM 45.

At S1712, the CPU 43 sets the control mode of the VSV 16 at the time mode, and next, at S1713, sets the start time of the control of the VSV 16 (T (present time) + t (specified time (ms) ) ) as the time for the interruption timer TA to output an interruption signal.

After that, when a specified time: t has elapsed and an interruption signal is outputted from the interruption timer TA, the CPU 43 once interrupts the performing of the present routine or another control routine, and performs the interruption control routine to be described later. In this interruption control routine, the CPU 43 performs a processing for driving the VSV 16 by the driving pulse signal of a high frequency.

On the other hand, at S1714, the CPU 43 inputs the value (ga) of the output signal of the air flow meter 12 (intake air amount) when the VSV 16 is driven by the driving pulse signal of a high frequency. The CPU 43 accesses the RAM 45, and reads out the average intake air amount (gam) at the time of non-operating of the VSV 16. The CPU 43 subtracts the average intake air amount (gam) from the intake air amount (ga) to calculate the difference $\Delta$ga (= ga - gam) . The CPU 43 judges whether or not the difference $\Delta$ga is a specified value (x) or more.

When the CPU 43 judges at the S1714 that the difference $\Delta$ga is the specified value (x) or more, the CPU 43 considers that the variable engine mount 2 and the VSV 16 are normal, and advances to S1715.

At S1715, the CPU 43 accesses the storing area of the abnormality discrimination flag (flagng) of the RAM 45, and writes in "0".

On the other hand, when the CPU 43 judges at the S1714 that the difference $\Delta$ga is less than the specified value (x), the CPU 43 advances to S1717, and judges whether or not the clocking time of the free run timer ( c ) is 7 seconds or more, that is, whether or not the state where the difference $\Delta$ga is less than the specified value (x) continues for a specified time (in this case, 4 seconds) or more.

When the CPU 43 judges at the S1717 that the clocking time of the free run timer ( c ) is less than 7 seconds, the CPU 43 once finishes the performing of the present routine. Then, the CPU 43 repeatedly performs the present routine, and if the CPU 43 judges at S1717 that the clocking time of the free run timer ( c ) reaches 7 seconds or more, the CPU 43 judges that the variable engine mount 2 or the VSV 16 is abnormal, and advances to S1718.

At S1718, the CPU 43 accesses the storing area of the abnormality discrimination flag (flagng) of the RAM 45, and writes in "1".

However, when repeatedly performing the present routine, if the difference $\Delta$ga becomes not less than a specified value (x) at the S1714, that is, if the state where the difference $\Delta$ga is less than a specified value (x) does not continue for 4 seconds, the CPU 43 judges that the variable engine mount 2 and the VSV 16 are normal, and advances to S1715.

After finishing the performing of the processing of the S1715 or the S1718, the CPU 43 advances to S1716, and accesses the storing area of the start flag (flagst) of the RAM 45, and writes in "0" , and finishes the performing of the present routine.

After the start flag (flagst) has been reset (flagst = 0) like this, even if the present routine is performed again, it is judged at S1701 that the internal combustion engine 1 is not in a state of start, and next, it is judged at S1702 that "0" is stored in the storing area of the start flag (flagst) of the RAM 45, so that the abnormality judging processing may not repeatedly be performed. That is, the abnormality judging processing according to the present embodiment is performed only one time for every one operation of the internal combustion engine 1.

Furthermore, in a case where the conditions of performing of the abnormality judging processing are unfulfilled at the S1702 to S1706 when the abnormality judging control routine is performed again in the course of the abnormality judging processing, the CPU 43 performs the processing of S1720 to S1723 so as to interrupt the performing of the abnormality judging processing.

Next, the above mentioned interruption control routine will be described along the flow chart in Fig. 18. This interruption control routine is a routine which the CPU 43 performs by using the interruption signal outputted from the interruption timer TA as a trigger.

In the interruption control routine, at S1801, the CPU 43 accesses the storing area of the VSV control flag (flagacm1) of the RAM 45, and judges whether "1" is stored or not.

When the CPU 43 judges at the S1801 that "0" is stored in the storing area of the VSV control flag (flagacm1) of the RAM 45, the CPU 43 advances to S1809, and performs the normal VSV control.

On the other hand, when the CPU 43 judges at the S1801 that "1" is stored in the storing area of the VSV control flag (flagacm1) of the RAM 45, the CPU 43 advances to S1802.

At S1802, the CPU 43 judges whether the VSV 16 is in an ON state (state where the driving electric power is applied and the atmospheric pressure passage 14 and the connecting passage 34 are continuous) at that time or not.

When the CPU 43 judges at the S1802 that the VSV16 is in an ON state, the CPU 43 advances to S1803, and makes the VSV 16 be in an OFF state (state where the driving electric power is not applied and the intake negative pressure passage 15 and the connecting passage 34 are continuous), and next, sets the control mode of the VSV 16 at the time mode, at S1804.

Next, the CPU 43 advances to S1805, and sets a new VSV control start time (T (present time) + 3 (ms) ) into the interruption timer TA, and finishes the performing of the present routine.

After that, when the clocking time of the interruption timer TA reaches the T + 3 (ms), and the interruption timer TA outputs an interruption signal, the CPU 43 performs the interruption control routine again. At that time, if the CPU 43 judges at S1801 that "1" is stored in the storing area of the VSV control flag (flagacm1) of the RAM 45, and if the CPU 43 judges at S1802 that the VSV 16 is in an OFF state, the CPU 43 advances to S1806.

At S1806, the CPU 43 makes the VSV 16 be in an ON state, and advances to S1807. At S1807, the CPU 43 sets the control mode of the VSV 16 at the time mode.

At S1808, the CPU 43 sets a new VSV control start time (T (present time + 7 (ms) ) into the interruption timer TA, and finishes the performing of the present routine.

After that, when the clocking time of the interruption timer TA reaches the T + 7 (ms) and the interruption timer TA outputs an interruption signal, the CPU 43 performs the present interruption control routine again.

At that time, if the CPU 43 judges at S1801 that " 1" is stored in the storing area of the VSV control flag (flagacm1) of the RAM 45, and if the CPU 43 judges at S1802 that the VSV 16 is in an ON state, the CPU 43 performs the processing of S1803 and afterward, again.

If such processing is repeatedly performed, the driving pulse signal applied to the VSV 16 becomes a driving pulse signal of 100 Hz, which is in an OFF state for 3 ms within 10 ms and is in an ON state for the rest 7 ms. This driving pulse signal corresponds to the duty ratio: 70%.

If the above mentioned driving pulse signal of a high frequency is applied to the VSV 16, the valve body 16a of the VSV 16 cannot follow the shifting between the ON state and the OFF state, and stops at the position to connect the atmospheric pressure passage 14 and the intake negative pressure passage 15.

Consequently, approximately all of the atmosphere flowing into the VSV 16 through the atmospheric pressure passage 14, flows into the surge tank 6 through the intake negative pressure passage 15, so that the amount of atmosphere supplied to the internal combustion engine 1 may become approximately the maximum amount. On the other hand, into the variable engine mount 2, the atmospheric pressure and the intake negative pressure are hardly introduced, so that the variable engine mount 2 may become in an non-operating state substantially.

By the way, the reason why the ON time of the VSV 16 is set to be longer than the OFF time, is that if the ON time becomes shorter than the OFF time when driving the VSV 16 by the driving pulse signal of a high frequency, the exciting time of the core 16c becomes extremely short, and therefore, there is such a risk that the valve body 16a does not operate against the spring 16g, so that the first passage 16f (atmospheric pressure passage 14) may not be opened.

Furthermore, in the example of Fig. 18, such an example that a pulse signal of 100 Hz is generated as the driving pulse signal of a high frequency, has been described, but of course, the frequency is not limited to this frequency, and it is preferable to generate a driving pulse signal of a frequency corresponding to the characteristics of the internal combustion engine 1 and the VSV 16.

In the above mentioned embodiment, in a case where the abnormality judging processing is performed on the basis of the difference between the intake air amount at the time of non-operating of the variable engine mount (at the time of non-controlling of the VSV) and that at the time of operating (at the time of controlling of the VSV), the atmospheric pressure passage and the intake negative pressure passage can be made to be substantially continuous through the VSV by raising the frequency of the driving pulse signal to be applied to the VSV by a specified amount, so that the amount of atmosphere supplied to the internal combustion engine through the variable engine mount or the VSV, may be increased while restraining the action of expansion and contraction of the variable engine mount.

Accordingly, if the variable engine mount and the VSV are normal, the intake air amount introduced into the internal combustion engine through the variable engine mount and the VSV at the time of operating of the variable engine mount, is increased, and the difference between the intake air amount at the time of non-operating of the variable engine mount and that at the time of operating thereof, becomes obvious. Consequently, the discrimination between the normal time of the variable engine mount and the VSV and the abnormal time thereof, becomes easy.

Furthermore, in the case of an internal combustion engine having a function to control the ISCV by the feedback control so that the engine speed at the time of idling may be the target idling speed, at the time of abnormality judging processing, by prohibiting the operation of the ISCV to the valve closing side especially at the time of operating of the variable engine mount, the ISCV does not operate so as to decrease the intake air amount even if the intake air amount is increased by the operation of the variable engine mount, and therefore, the difference between the intake air amount at the time of non-operating of the variable engine mount and that at the time of operating thereof can surely be detected.

〈Embodiment 4〉

The fourth embodiment of the first abnormality judging device according to the present invention will be described below. Here, the arrangement different from that of the above mentioned third embodiment will be described, and as for the same arrangement, the description will be omitted.

In the above mentioned third embodiment, such an example that when detecting the intake air amount at the time of operating of the variable engine mount 2 in the abnormality judging processing, the VSV 16 is controlled at a constant duty ratio, has been described, but it is also possible that the VSV control duty ratio is made to gradually change, that is, the VSV control duty ratio is made to perform the so-called sweep.

Generally, there are such cases that because of the initial tolerance, the deterioration with age, or the like of the parts (a solenoid, a spring, a core, and the like) composing the VSV, the operational mode is different for each VSV, and the duty ratio which is most suitable for making the amount of atmosphere supplied to the internal combustion engine through the variable engine mount or the VSV to be the maximum amount, is different for each VSV.

On the other hand, in the present embodiment, by making the VSV control duty ratio sweep in the range of considering the initial tolerance, the deterioration with age, or the like of the VSV when performing the abnormality judging processing, it is arranged that all of the most suitable duty ratios for various types of VSV " is stored in the storing area of the VSV control flag (flagacm1) of the RAM 45, that is, when the number of times of performing of the processing at S1910 and afterward, is the first time, the CPU 43 advances to S1911, and writes "1" in the storing area of the VSV control flag (flagacm1) of the RAM 45.

Next, at S1912, the CPU 43 sets the initial value 5 (ms) of the VSV ON time: TIME of the VSV control duty ratio.

At S1913, the CPU 43 sets the control mode of the VSV 16 to the time mode.

At S1914, the CPU 43 sets the control start time of the VSV 16 (T (present time) + t (specified time (ms) ) ) into the interruption timer TA.

When the performing of the processing of the S1914 is finished, or when the CPU 43 judges at the S1910 that "1" is stored in the storing area of the VSV control flag (flagacm1) of the RAM 45 (when the number of times of performing of S1910 and afterward, is the second time and afterward), the CPU 43 advances to S1915, and adds a specified value (in this case, 20 μs) to the VSV ON time: TIME to calculate a new VSV ON time: TIME (= TIME + 20 μs). The new VSV ON time: TIME (= TIME + 20 μs) is stored in a specified area of the RAM 45.

At S1916, the CPU 43 inputs the value (ga) of the output signal of the air flow meter 12 (intake air amount) when the VSV 16 is driven by the interruption processing set at the S1913 and S1914, that is, when the VSV 16 is driven according to the VSV ON time: TIME (= 5 ms) set at the S1912, The CPU 43 accesses a specified area of the RAM 45, and reads out the average intake air amount (gam) at the time of non-operating of the VSV 16. The CPU 43 subtracts the average intake air amount (gam) from the intake air amount (ga) to calculate the difference Δga (= ga - gam) . The CPU 43 judges whether or not the difference Δga is a specified value (x) or more.

When the CPU 43 judges at the S1916 that the difference Δga is the specified value (x) or more, the CPU judges that the variable engine mount 2 and the VSV 16 are normal, and advances to S1917.

At S1917, the CPU 43 accesses the storing area of the abnormality discrimination flag (flagng) of the RAM 45, and writes in "0".

On the other hand, when the CPU 43 judges at the S1916 that the difference Δga is less than the specified value (x), the CPU 43 advances to S1919, and judges whether or not the clocking time of the free run timer ( c ) is 7 seconds or more, that is, whether or not the state where the difference Δga is less than the specified value (x), continues for a specified time (in this case, for 4 seconds) or more.

When the CPU 43 judges at the S1919 that the clocking time of the free run timer ( c ) is less than 7 seconds, the CPU 43 once finishes the performing of the present routine.

After that, the CPU 43 repeatedly performs the present routine until the CPU 43 judges at the S1919 that the clocking time of the free run timer ( c ) is not less than 7 seconds. At that time, the VSV ON time: TIME is renewed each time the present routine is performed, and corresponding thereto, the VSV control duty ratio is made to change (sweep) gradually.

Consequently, when the clocking time of the free run timer ( c ) reaches a time not less than 7 seconds, the CPU 43 judges at the S1919 that the clocking time of the free run timer ( c ) is not less than 7 seconds, and considers that the variable engine mount 2 or the VSV 16 is abnormal. Then, at S1920, the CPU 43 accesses the storing area of the abnormality discrimination flag (flagng) of the RAM 45, and writes in "1" .

When finishing the performing of the processing of the S1917 or the S1920, the CPU 43 advances to S1918, and writes "0" in the storing area of the start flag (flagst) of the RAM 45, and finishes the performing of the present routine.

Here, one example of the interruption control routine will be shown in Fig. 20. In this interruption control routine, at S2001, the CPU 43 accesses the storing area of the VSV control flag (flagacm1) of the RAM 45, and judges whether "1" is stored or not.

When the CPU 43 judges at the S2001 that "1" is stored in the storing area of the VSV control flag (flagacm1) of the RAM 45, the CPU 43 advances to S2002, and judges whether the VSV 16 is in an ON state or not.

When the CPU 43 judges at the S2002 that the VSV 16 is in an ON state, the CPU 43 advances to S2003, and make the VSV 16 be in an OFF state, and advances to S2004.

At S2004, the CPU 43 sets the control mode of the VSV 16 to the time mode.

At S2005, the CPU 43 reads out the VSV ON time: TIME set by the abnormality judging control routine from a specified area of the RAM 45, and calculates a new VSV control start time (T (present time) + (10 ms - TIME) ) by using this VSV ON time: TIME. The CPU 43 sets the newly calculated VSV control start time into the interruption timer TA, and finishes the performing of the present routine.

After that, when the clocking time of the interruption timer TA reaches the T + (10 ms - TIME) , and the interruption timer TA outputs an interruption signal, the CPU 43 performs the interruption control routine again. At that time, if the CPU 43 judges at S2001 that "1" is set in the storing area of the VSV control flag (flagacm1) of the RAM 45, the CPU 43 judges at S2002 that the VSV 16 is in an OFF state, and advances to S2006.

At S2006, the CPU 43 makes the VSV 16 be in an ON state, and next, sets the control mode of the VSV 16 to the time mode at S2007.

Next, the CPU 43 advances to S2008, and reads out the VSV ON time: TIME from the RAM 45, and calculates a new VSV control start time (T (present time) + TIME) by using this VSV ON time: TIME. The CPU 43 sets the newly calculated VSV ON time: TIME into the interruption timer TA, and finishes the performing of the present routine.

After that, when the clocking time of the interruption timer TA reaches the T + TIME, and the interruption timer TA outputs an interruption signal, the CPU 43 performs the interruption control routine again. At that time, if the CPU 43 judges at S2001 that "1" is set in the storing area of the VSV control flag (flagacm1) of the RAM 45, the CPU 43 judges at S2002 that the VSV 16 is in an ON state, and performs the processing of S2003 and afterward.

If the interruption control routine is repeatedly performed like this, the driving pulse signal applied to the VSV 16 becomes a driving pulse signal of 100 Hz in which the time: TIME in 10 ms is the ON time, and the rest time (10 ms - TIME) is the OFF time.

Here, if the initial value of the TIME is 5 ms, the driving pulse signal first applied to the VSV 16 is a driving pulse signal of 100 Hz in which for 5 ms in 10 ms, the VSV 16 is in the ON state and for the rest 5 ms, the VSV 16 is in the OFF state, and this driving pulse signal corresponds to the duty ratio of 50%.

Then, if the interruption control routine is repeatedly performed, the VSV ON time: TIME is renewed in the above mentioned abnormality judging control routine, and therefore, the duty of the driving pulse signal applied to the VSV 16 is also swept according to the renewal of the VSV ON time: TIME.

In the abnormality judging control routine shown in Fig. 19, the VSV ON time: TIME is increased by 20 μsec at a time for 4 seconds while the free run timer ( c ) clocks 3 to 7 seconds, and therefore, the VSV ON time: TIME after the elapse of 4 seconds becomes 9 msec (= 5 msec + ( (400/20) × 20 μsec)/ 1000). Consequently, the VSV control duty ratio is swept in the range of 50% to 90%.

Thus, by performing the abnormality judging control routine, the CPU 43 realizes the sweep means according to the present invention.

As mentioned above, according to the present embodiment, the most suitable duty ratio for each VSV can be covered by making the VSV control duty sweep, even if the duty ratio at which the amount of atmosphere supplied to the internal combustion engine 1 through the variable engine mount 2 and the VSV 16 becomes the maximum amount, is different for every VSV.

By the way, it is arranged that in the abnormality judging control routine of the Fig. 19, the VSV control duty ratio is made to sweep in the range of 50% to 90%, but it is preferable that the range of sweep is limited as much as possible.

That is, if the range of sweep is widened, all of the most suitable duty ratios corresponding to each VSV can be covered, but the time when the VSV control duty ratio determined by the sweep processing agrees with the most suitable value, becomes extremely short, and therefore, there is a possibility of canceling by the pulsation of intake air and the like. Accordingly, it is preferable that the range of sweep is narrowed as much as possible and the time when the VSV control duty ratio agrees with the most suitable value, is lengthened as much as possible.

Furthermore, since the VSV 16 uses a battery as the driving source, the operational mode of the VSV 16 is changed when the output voltage of the battery is changed. For example, when the output voltage of the battery is not less than a specified value, the VSV 16 can drive the valve body 16a against the urging force of the spring 16g even if the applying time of the driving power is made short, but when the output voltage of the battery is lowered to be less than a specified value, the VSV 16 cannot drive the valve body 16a against the urging force of the spring 16g if the applying time of the driving power is not made to be longer.

Therefore, it is preferable to change the range of sweep according to the output voltage of the battery. In this case, it is also suitable that the upper limit value of the VSV ON time: TIME has previously been determined, and at the same time, the initial value control map showing the relation between the output voltage of the battery and the initial value of the VSV ON time: TIME, and the renewal value control map showing the relation between the initial value of the VSV ON time: TIME and the increasing amount of the VSV ON time renewed by one sweep, are stored in the ROM 44.

The initial value control map is set so that the initial value may be longer as the output voltage of the battery is lower, and is set so that the initial value may be shorter as the output voltage of the battery is higher. For example, when the output voltage of the battery is 12 V, the initial value is made to be 7 ms (range of sweep is 7 ms to the upper limit value), and when the output voltage of the battery is 14 V, the initial value is made to be 6 ms (range of sweep is 6 ms to the upper limit value).

Furthermore, the renewal value control map is set so that the renewal value may be smaller as the initial value is set to be higher, and is set so that the renewal value may be larger as the initial value is set to be lower. For example, when the upper limit value of the VSV ON time is 9 ms and the initial value is set to 7 ms, the renewal value is made to be 10 $\mu$sec, and when the initial value is set to 6 ms, the renewal value is made to be 15 $\mu$sec.

Corresponding thereto, the CPU 43 performs the abnormality judging control routine shown in Fig. 21 when judging the abnormality of the variable engine mount 2 and the VSV 16.

In the abnormality judging control routine, the processing of S2101 to S2111 is similar to that in the abnormality judging control routine of the Figs. 17, 19.

At S2112, the CPU 43 inputs the value of the output voltage of the battery, and at the same time, accesses the initial value control map of the ROM 44, and calculates the initial value corresponding to the value of the output voltage of the battery, and writes the calculated initial value in a specified area of the RAM 45 as the VSV ON time: TIME.

At S2113, the CPU 43 accesses the renewal value control map of the ROM 44, and calculates a renewal value: s corresponding to the initial value calculated at the S2112, and writes that in a specified area of the RAM 45.

At S2114 and S2115, the CPU 43 sets the control mode of the VSV 16 to the time mode, and sets the control start time of the VSV 16 (T (present time) + t (specified time (ms) ) ) in the interruption timer TA.

Thus, when the performing of the processing of S2115 is finished, or when it is judged at S2110 that " 1" is stored in the storing area of the VSV control flag (flagacm1) of the RAM 45 (when the number of times of performing of the processing at S2110 and afterward, is the second time and afterward), the CPU 43 advances to S2116, and adds the renewal value: s to the VSV ON time: TIME, and calculates a new VSV ON time: TIME (= TIME + s $\mu$sec). The newly calculated VSV ON time: TIME is stored in a specified area of the RAM 45.

Next, at S2117, the CPU 43 inputs the intake air amount (ga) (value of the output signal of the air flow meter 12) when the VSV 16 is driven according to the VSV ON time: TIME set at the S2112, by the interruption processing set at S2114 and S2115, that is, when the VSV 16 is driven by the driving pulse signal of a high frequency. Then, the CPU 43 reads out the average intake air amount (gam) at the time of non-operating of the VSV 16 from the RAM 45, and judges whether or not the difference $\Delta$ga (= ga - gam) obtained by subtracting the average intake air amount (gam) from the intake air amount (ga), is a specified value (x) or more.

When the CPU 43 judges at the S2117 that the difference $\Delta$ga is the specified value (x) or more, the CPU 43 judges that the variable engine mount 2 and the VSV 16 are normal, and writes "0" in the storing area of the abnormality discrimination flag (flagng) of the RAM 45, at S2118.

On the other hand, when the CPU 43 judges at the S2117 that the difference $\Delta$ga is less than the specified value (x), the CPU 43 advances to S2120, and judges whether or not the clocking time of the free run timer ( c ) is 7 seconds or more, that is, whether or not the state where the difference $\Delta$ga is less than the specified value (x), continues for a specified time (in this case, for 4 seconds) or more.

When the CPU 43 judges at the S2120 that the clocking time of the free run timer ( c ) is less than 7 seconds, the CPU 43 once finishes the performing of the present routine. Then, the CPU 43 repeatedly performs the present routine until it is judged at S2120 that the clocking time of the free run timer ( c ) is 7 seconds or more. At that time, the VSV ON time: TIME is renewed by the renewal value: s each time the present routine is performed, and corresponding thereto, the VSV control duty ratio is gradually changed (swept).

Then, when it is judged at the S2120 that the clocking time of the free run timer ( c ) is not less than 7 seconds, the CPU 43 judges that the variable engine mount 2 or the VSV 16 is abnormal, and sets "1" in the storing area of the abnormality discrimination flag (flagng) of the RAM 45, at S2121.

After finishing the performing of the processing of the S2118 or the S2121, the CPU 43 advances to S2119, and writes "0" in the storing area of the start flag (flagst) of the RAM 45, and finishes the performing of the present routine.

Thus, by performing the abnormality judging control routine, the CPU 43 realizes the compensating means and the sweep means according to the present invention.

As described above, even if the output voltage of the battery is low and the driving power of the VSV 16 is small, by changing the range of sweep according to the value of the output voltage of the battery, the time when the VSV control duty ratio agrees with the most suitable value, is lengthened so that the VSV 16 can surely be operated, and the amount of atmosphere supplied to the internal combustion engine 1 through the variable engine mount 2 and the VSV 16, can be made to be the maximum amount.

〈Embodiment 5〉

The embodiment of the second abnormality judging device according to the present invention will be described below. Here, the arrangement different from that of the above mentioned first embodiment will be described, and the similar description will be omitted.

In the present embodiment, when performing the abnormality judging processing, the CPU 43 of the ECU 31 measures the time required for the crank shaft 27 to turn through a specified angle at the time of non-operating of the variable engine mount 2. Next, the CPU 43 measures the time required for the crank shaft 27 to turn through an angle equal to the specified angle at the time of operating of the variable engine mount 2.

Here, at the time of the expansion stroke of each cylinder 29, if the variable engine mount 2 normally performs the action of contraction so as to absorb the input power in the compression direction, the internal combustion engine 1 performs the rotational displacement following the action of contraction of the variable engine mount 2, and the amount of displacement thereof becomes larger than that in a case where the variable engine mount 2 does not perform the action of contraction.

Furthermore, the electromagnetic pickup 28b of the crank position sensor 28 is attached on the cylinder block 1a side of the internal combustion engine 1, and therefore, when the internal combustion engine 1 performs the rotational displacement in the direction identical to the rotational direction of the crank shaft 27, the electromagnetic pickup 28b is also performs the rotational displacement following the crank shaft 27 (timing rotor 28a attached to the crank shaft 27). Consequently, when the variable engine mount 2 performs the action of contraction, the rotational speed of the timing rotor 28a on the basis of the electromagnetic pickup 28b, becomes slow.

That is, the rotational speed of the crank shaft 27 in a case when the variable engine mount 2 normally performs the action of contraction and the amount of rotational displacement of the internal combustion engine 1 becomes larger, becomes slower than that in a case when the variable engine mount 2 does not perform the action of contraction (at the time of non-operating of the variable engine mount 2).

Then, the CPU 43 calculates the difference between the time required for the crank shaft 27 to rotate through a specified angle at the time of non-operating of the variable engine mount 2 and the time required for the crank shaft 27 to rotate through a specified angle at the time of operating of the variable engine mount 2, and judges that the variable engine mount 2 normally operates if this difference is not less than a specified value. On the other hand, the CPU 43 judges that the variable engine mount 2 does not normally operate (variable engine mount 2 is abnormal) if the difference is less than a specified value.

By the way, the rotational speed of the crank shaft 27 is changed by the operational state of the internal combustion engine 1, the load of the auxiliary machinery such as an air conditioner, and the like, and therefore, it is preferable that the operational state of the internal combustion engine 1 or the state of the auxiliary machinery at the time of judging, is the same state. Furthermore, at the time of operating and at the time of non-operating of the variable engine mount 2, if the time required for the crank shaft 27 to turn through a specified angle, is measured only once and the abnormality judging is performed by the value of that one measuring, there is a risk to cause a misjudgment because of the variation of the output characteristics of the electromagnetic pickup 28b or the like.

Therefore, the CPU 43 according to the present embodiment uses the engine speed: NE and the intake air amount: GN as the parameters to judge the operational state of the internal combustion engine 1 and the state of the auxiliary machinery, and on condition that these parameters are in a specified range, the CPU 43 measures the time required for the crank shaft 27 to turn through a specified angle (for example, to turn through 30 degrees from the compression top dead center) at the beginning of the expansion stroke, and the time required for the crank shaft 27 to turn through a specified angle (for example, to turn through 30 degrees from 60 degrees from the compression top dead center) at the latter part of the expansion stroke, at the time of each of non-operating and operating of the variable engine mount 2, and the CPU 43 calculates the difference: dlt between these times. Such processing is repeated until a specified number (= kj) of pieces of differences: dlt at the time of operating of the variable engine mount and a specified number (= kj) of pieces of differences: dlt at the time of non-operating, are each collected.

When a number (= kj) of pieces of differences: dlt at the time of operating of the variable engine mount and a number (= kj) of pieces of differences: dlt at the time of non-operating, are each collected, the CPU 43 calculates the statistical value: dlaon of the differences: dlt at the time of operating of the variable engine mount and the statistical value: dlaoff of the differences: dlt at the time of non-operating of the variable engine mount, and calculates the difference: dcr (= |dlaoff - dlaon|) between these 2 statistical values.

Usually, when the gaseous mixture is normally exploded and burned in each cylinder 29 at the explosion stroke, the piston 18 is lowered by the explosion force and the burning force thereof, and therefore, the rotational speed of the crank shaft 27 becomes fastest at the beginning of the explosion stroke. Then, at the latter part of the explosion stroke, the rotational speed of the crank shaft 27 becomes slower than the rotational speed of the crank shaft 27 at the beginning of the explosion stroke. That is, when the variable engine mount 2 is in a state of non-operating, the time for the crank shaft 27 to turn through a specified angle at the beginning of the explosion stroke, is shorter than the time for the crank shaft to turn through a specified angle at the latter part of the explosion stroke, but the difference is little.

On the other hand, when the variable engine mount 2 is in a state of operating, the amount of rotational displacement of the internal combustion engine 1 is increased by the action of contraction of the variable engine mount 2, and therefore, the rotational speed of the crank shaft 27 at the latter part of the explosion stroke, is slower than that at the time of non-operating of the variable engine mount. That is, at the time of operating of the variable engine mount 2, the difference between the time for the crank shaft 27 to turn through a specified angle at the beginning of the explosion stroke and the time for the crank shaft 27 to turn through a specified angle at the latter part of the explosion stroke, is a value much larger than that at the time of non-operating of the variable engine mount.

Accordingly, if the variable engine mount is normal, a large deviation arises between the statistical value: dlaon at the time of operating of the variable engine mount and the statistical value: dlaoff at the time of non-operating of the variable engine mount, and if the variable engine mount is abnormal, the deviation between the statistical value: dlaon at the time of operating of the variable engine mount and the statistical value: dlaoff at the time of non-operating of the variable engine mount, is decreased, and therefore, the CPU 43 can judge that the variable engine mount 2 is normal if the difference: dcr is not less than the reference value: Δkcr, and the CPU 43 can judge that the variable engine mount 2 is abnormal if the difference: dcr is less than the reference value: Δ kcr.

Thus, the CPU 43 realizes the abnormality judging means according to the present invention.

The action and the effect of the present embodiment will be described below.

The CPU 43 performs the abnormality judging routine shown in Fig. 22 each time the crank shaft 27 turns through 30 degrees.

By the way, here, the crank position sensor 28 outputs a signal each time the crank shaft 27 turns through 30 degrees.

In the abnormality judging routine, first, at S2201, the CPU 43 refers to the flag: exckok to judge whether the abnormality judging processing of the variable engine mount 2 has already been finished or not (exckok = ON when the abnormality judging processing has been finished, and exckok = OFF when the abnormality judging processing has not been finished), and judges whether the flag: exckok is in an OFF state or not.

When it is judged at the S2201 that the flag: exckok is in an ON state, the CPU 43 advances to the S2208, and makes the flag: exckok be in an OFF state, and next, advances to S2211 to be described later.

On the other hand, when it is judged at the S2201 that the flag: exckok is in an OFF state, the CPU 43 advances to S2202, and judges whether the engine speed: ne is in the operational area of the variable engine mount 2 (NEA ≦ ne ≦ NEB) or not.

When it is judged at the S2202 that the engine speed: ne is in the operational area of the variable engine mount 2 (NEA ≦ ne ≦ NEB), the CPU 43 advances to S2203, and judges whether the value of the output signal of the air flow meter 12 (intake air amount: gn) is in the operational area of the variable engine mount 2 (GNA ≦ gn ≦ GNB) or not.

When it is judged at the S2203 that the intake air amount: gn is in the operational area of the variable engine mount 2 (GNA ≦ gn ≦ GNB), the CPU 43 advances to S2204, and judges whether the value of the output signal of the water temperature sensor 30 (cooling water temperature: thw) is in the operational area of the variable engine mount 2 (THWA ≦ thw ≦ THWB) or not.

When it is judged at the S2204 that the cooling water temperature: thw is in the operational area of the variable engine mount 2 (THWA ≦ thw ≦ THWB), the CPU 43 advances to S2205, and rewrites, to [ON], the value of the flag: xacmck to judge whether the operational state of the internal combustion engine 1 is in the operational area of the variable engine mount or not (xacmck = ON when the state is in the operational area of the variable engine mount, and xacmck = OFF when the state is in the non-operational area of the variable engine mount).

Next, the CPU 43 advances to S2206, and judges whether or not the value of the counter: noff to count the number of pieces of the differences: dlaoff at the time of non-operating of the variable engine mount, is a specified number: kj of pieces or more.

When it is judged at the S2206 that the value of the counter: noff is a specified number: kj of pieces or more, the CPU 43 advances to S2207, and forcedly makes the variable engine mount 2 be in an operational state so as to collect a number (kj) of pieces of differences: dlaon at the time of operating of the variable engine mount.

Furthermore, when it is judged at the S2206 that the value of the counter: noff is less than a specified number: kj of pieces, the CPU 43 advances to S2209, and judges whether or not the value of the counter: non to count the number of pieces of the differences: dlaon at the time of operating of the variable engine mount, is a specified number: kj of pieces or more.

When it is judged at the S2209 that the value of the counter: non is a specified number: kj of pieces or more, the CPU 43 advances to S2210, and forcedly makes the variable engine mount 2 be in a non-operational state so as to collect a number (kj) of pieces of differences: dlaoff at the time of non-operating of the variable engine mount.

Then, when the performing of the processing of the S2207 or the S2210 has been finished, the CPU 43 advances to S2211, and judges whether the crank shaft 27 is positioned at the compression top dead center of a certain cylinder 29 or not, on the basis of the output signal of the crank position sensor 27.

When it is judged at the S2211 that the crank shaft 27 is positioned at the compression top dead center of a certain cylinder 29, the CPU 43 advances to S2212, and resets the value of the counter: ccrnk to [0]. Here, the counter: ccrnk is a counter which is increased by 1 each time the crank position sensor 28 outputs a signal during the period when the crank shaft 27 turns from the compression top dead center to 90 degrees after the compression top dead center of each cylinder 29 (ccrnk = 1 at the time of 30 degrees after the compression top dead center, and ccrnk = 2 at the time of 60 degrees after the compression top dead center, and ccrnk = 3 at the time of 90 degrees after the compression top dead center).

On the other hand, when it is judged at the S2211 that the crank shaft 27 is not positioned at the compression top dead center of a certain cylinder 29, the CPU 43 advances to S2213, and increases the value of the counter: ccrnk by 1.

The CPU 43 which has finished the performing of the processing of the S2212 or the S2213, advances to S2214, and judges whether the value of the counter: ccrnk is [1] or not. When it is judged in the processing of this S2214 that the value of the counter: ccrnk is [1], the CPU 43 advances to S2215.

At the S2215, the CPU 43 inputs the value of the free run timer: frt for clocking the present time, and at the same time, reads out the time: time 0 (this time: time 0 is a time when the value of the counter: ccrnk is [0], that is, when the crank shaft 27 is positioned at the compression top dead center of a certain cylinder 29) which was held at S2238 to be described later when the present routine was performed last time. Then, the CPU 43 subtracts the time 0 from the frt, and calculates the time: t301 (= frt - time 0) required for the crank shaft 27 to turn from the compression top dead center to 30 degrees after the compression top dead center, and keeps this time: t301. Here, the time: t301 is one example of the time required for the crank shaft 27 to turn through a specified angle at the beginning of the expansion stroke.

When the performing of the processing of the S2215 is finished, or when it is judged at the S2214 that the value of the counter: ccrnk is not [1], the CPU 43 advances to S2216, and judges whether the value of the counter: ccrnk is [3] or not.

When it is judged at the S2216 that the value of the counter: ccrnk is a value other than [3], the CPU 43 advances to S2240, and resets (= 0) the values of the counter: non and the counter: noff, and next, advances to S2238, and inputs the clocking time: frt of the free run timer: frt, and holds the clocking time: frt as time 0, and once finishes the present routine.

On the other hand, when it is judged at the S2216 that the value of the counter: ccrnk is [3], the CPU 43 advances to S2217. At the S2217, the CPU 43 inputs the value of the free run timer: frt, and at the same time, reads out the time: time 0 (this time: time 0 is a time when the value of the counter: ccrnk is [2], that is, when the crank shaft 27 was positioned at 60 degrees after the compression top dead center of a certain cylinder 29) which was held at S2238 when the present routine was performed last time.

Then, the CPU 43 subtracts the time 0 from the frt to calculate the time: frt-time 0 required for the crank shaft 27 to turn from 60 degrees after the compression top dead center to 90 degrees after the compression top dead center. This time: frt-time 0 is one example of the time required for the crank shaft 27 to turn through a specified angle at the latter part of the expansion stroke.

Next, the CPU 43 subtracts the time: frt-time 0 required for the crank shaft 27 to turn through 30 degrees from 60 degrees after the compression top dead center, from the time: t301 required for the crank shaft 27 to turn through 30 degrees from the compression top dead center, and calculates the difference: dlt30 (= t301 - (frt - time 0) ).

Next, the CPU 43 advances to S2218, and performs the misfire judging processing of the cylinder 29 by using the difference: dlt30 calculated at the S2217, and next, advances to S2219. At the S2219, the CPU 43 judges whether the flag: xacmck is in an ON state or not, that is, whether the operational state of the internal combustion engine 1 is in the operational area of the variable engine mount or not.

When it is judged at the SS219 that the flag: xacmck is in an OFF state, the CPU 43 advances to S2240, and resets (= 0) the values of the counter: non and the counter: noff, and next, advances to S2238, and inputs a clocking time: frt of the free run timer: frt, and makes the clocking time: frt be time 0 and holds that, and once finishes the present routine.

On the other hand, when it is judged at the S2219 that the flag: xacmck is in an ON state, the CPU 43 advances to S2220. At the S2220, the CPU 43 calculates the present engine speed: ne, and at the same time, calculates the value: $nesm_i$ obtained by annealing the engine speed: ne. Specifically, the CPU 43 subtract the annealed value: $nesm_{i-1}$, calculated when this S2220 was performed last time, from the present engine speed: ne to calculate the difference: $(ne-nesm_{i-1})$. Next, the CPU 43 adds the value $(= (ne-nesm_{i-1})/kn)$ obtained by dividing the difference: $(ne-nesm_{i-1})$ by a specified coefficient (kn), to the last annealed value: $nesm_{i-1}$, and calculates the annealed value: $nesm_i$ $(= nesm_{i-1}+(ne- nesm_{i-1})/kn)$ of the engine speed.

Furthermore, the CPU 43 calculates the value: $gnsm_i$ obtained by annealing the present intake air amount: gn simultaneously with the above processing. This annealed value is an annealed value: $gnsm_i$ of the intake air amount which is calculated such that the value obtained by subtracting the annealed value: $gnsm_{i-1}$ calculated when this S2220 was performed last time from the present intake air amount: gn, is divided by a specified coefficient: kg, and further, the value: $(gn-gnsm_{i-1})/kg$ obtained by the dividing processing is added to the last annealed value: $gnsm_{i-1}$.

Next, the CPU 43 advances to S2221, and finds the absolute value of a value $(= ne-nesm_i = ne-(nesm_{i-1}+(ne- nesm_{i-1})/kn))$ obtained by subtracting the annealed value: $nesm_i$ of the engine speed calculated at the S2220 from the present engine speed: ne, and judges whether or not the absolute value is a specified rotational speed: $\Delta NE$ or less, that is, whether the present engine speed: ne is in the abnormality judging area or not.

When it is judged at the S2221 that the present engine speed: ne is not in the abnormality judging area, the CPU 43 performs the processing of S2240 and S2238 in turn, and after that, once finishes the present routine.

On the other hand, when it is judged at the S2221 that the present engine speed: ne is in the abnormality judging area, the CPU 43 advances to S2222, and finds the absolute value of a value $(= gn-gnsm_i = gn-(gnsm_{i-1}+(gn-gnsm_{i-1})/kg))$ obtained by subtracting the annealed value: $gnsm_i$ of the intake air amount calculated at the S2220 from the present intake air amount: gn, and judges whether or not the absolute value is a specified intake air amount: $\Delta gn$ or less, that is, whether the present intake air amount: gn is in the abnormality judging area or not.

When it is judged at the S2222 that the present intake air amount: gn is not in the abnormality judging area, the CPU 43 performs the processing of S2240 and S2238 in turn, and after that, once finishes the present routine.

On the other hand, when it is judged at the S2222 that the present intake air amount: gn is in the abnormality judging area, the CPU 43 advances to S2223, and judges whether the flag: exacm to judge whether the variable engine mount 2 is in an operating state or in a non-operating state (exacm = ON at the time of operating of the variable engine mount, and exacm = OFF at the time of non-operating of the variable engine mount), is in an ON state or not, that is, whether the variable engine mount 2 is in an operating state or not.

When it is judged at the S2223 that the flag: exacm is in an ON state, the CPU 43 advances to S2224, and increases the value of the counter: non by 1.

Next, the CPU 43 advances to S2225, and judges whether the value of the counter: non is [1] or not. Here, if the value of the counter: non is [1], the CPU 43 advances to S2226, and sets the difference: dlt30 calculated at the S2217, as the initial value of the statistical value: dlaon of the difference: dlt30 at the time of operating of the variable engine mount.

Furthermore, when it is judged at the S2225 that the value of the counter: non is a value other than [1], the CPU 43 advances to S2227, and calculates a new statistical value: dlaon by using the statistical value: dlaon calculated when the processing of this S2227 was performed last time, and the difference: dlt30 calculated at the S2217. Specifically, the CPU 43 divides the value (= dlt30 - dlaon) obtained by subtracting the last statistical value: dlaon from the difference: dlt30, by a specified coefficient: k, and adds the value: (dlt30 - dlaon)/k obtained by this dividing processing, to the last statistical value, and calculates a new statistical value: dlaon + (dlt30 - dlaon)/k.

On the other hand, when it is judged at the S2223 that the flag: exacm is in an OFF state, the CPU 43 advances to S2228, and increases the value of the counter: noff by 1. Next, the CPU 43 advances to S2229, and judges whether the value of the counter: noff renewed at the S2228 is [1] or not.

When it is judged at the S2229 that the value of the counter: noff is [1], the CPU 43 advances to S2230, and sets the difference: dlt30 calculated at the S2217, as the initial value of the statistical value: dlaoff of the difference: dlt30 at the time of non-operating of the variable engine mount.

Furthermore, when it is judged at the S2229 that the value of the counter: noff is a value other than [1], the CPU 43 advances to S2231, and calculates a new statistical value: dlaoff by using the statistical value: dlaoff calculated when the processing of this S2231 was performed last time, and the difference: dlt30 calculated at the S2217. Specifically, the CPU 43 divides the value (= dlt30 - dlaoff) obtained by subtracting the last statistical value: dlaoff from the difference: dlt30, by a specified coefficient: k, and adds the value: (dlt30 - dlaoff)/k obtained by this dividing processing, to the last statistical value, and calculates a new statistical value: dlaoff + (dlt30 - dlaoff)/k.

The CPU 43 which has finished the performing of the processing of the S2226, S2227, S2230, or S2231, advances to S2232, and judges whether or not the value of the counter: noff is a specified value: kj or more, that is, whether the specified number: kj of pieces of differences: dlt30 at the time of non-operating of the variable engine mount, are collected or not.

When it is judged at the S2232 that the value of the counter: noff is less than a specified value: kj, that is, when it is judged that the specified number: kj of pieces of differences: dlt30 at the time of non-operating of the variable engine mount, are not collected, the CPU 43 performs the processing of S2238, and after that, once finishes the present routine.

On the other hand, when it is judged at the S2232 that the value of the counter: noff is not less than a specified value: kj, the CPU 43 advances to S2233, and judges whether or not the value of the counter: non is a specified value: kj or more, that is, whether or not the specified number: kj of pieces of differences: dlt30 at the time of operating of the variable engine mount, are collected.

When it is judged at the S2233 that the value of the counter: non is less than a specified value: kj, that is, when it is judged that the specified number: kj of pieces of differences: dlt30 at the time of operating of the variable engine mount, are not collected, the CPU 43 performs the processing of S2238, and once finishes the present routine.

On the other hand, when it is judged at the S2233 that the value of the counter: non is not less than a specified value: kj, the CPU 43 advances to S2234, and calculates the absolute value: dcr (= |dlaoff - dlaon| ) of the difference between the statistical value: dlaon calculated at the S2227 and the statistical value: dlaoff calculated at the S2231.

Next, the CPU 43 advances to S2235, and judges whether or not the value: dcr calculated at the S2234 is the judging reference value: Δkcr or more. Here, if it is judged that the dcr is the judging reference value: Δkcr or more, the CPU 43 advances to S2236, and judges that the variable engine mount 2 normally operates. On the other hand, if it is judged at the S2235 that the value of the dcr is less than the judging reference value: Δkcr, the CPU 43 advances to S2239, and judges that the variable engine mount 2 does not normally operate and an abnormality arises.

The CPU 43 which has finished the performing of the processing of the S2236 or the S2239, advances to S2237, and makes the flag: exckok be in an ON state, and next, makes the clocking time of the free run timer: frt be time 0 and holds that, and finishes the present routine.

As described above, according to the present embodiment, on condition that the operational state of the internal combustion engine 1 is approximately the same state, the time required for the crank shaft to turn through a specified angle at the time of the contracting action of the variable engine mount 2 is compared with the time required for the crank shaft 27 to turn through a specified angle at the time of non-operating of the variable engine mount, and the judging of the abnormality of the variable engine mount 2 is performed on the basis of the deviation between both, so that it may be possible to accurately judge whether the variable engine mount actually operates or not.

Furthermore, in the present embodiment, a specified number of pieces of times required for the crank shaft 27 to turn through a specified angle at the time of operating of the variable engine mount, and a specified number of pieces of times required for the crank shaft 27 to turn through a specified angle at the time of non-operating of the variable engine mount, are collected, and the deviation is calculated on the basis of the statistical values thereof, so that an accurate abnormality judging can be performed without being influenced by the variation of the output characteristics of the crank position sensor 28 or the like.

Furthermore, in the present embodiment, an example in which the abnormality judging processing is performed on the basis of the deviation between the rotating time of the crank shaft 27 at the time of contracting action of the variable engine mount 2 and that at the time of non-operating of the variable engine mount 2, has been described, but, of course, it is also possible to perform the abnormality judging processing on the basis of the deviation between the rotating time of the crank shaft 27 at the time of expansion action of the variable engine mount 2 and that at the time of non-operating of the variable engine mount 2. In that case, when the variable engine mount 2 performs an expansion action, the internal combustion engine 1 performs a rotational displacement in the opposite direction of the crank shaft 27, and the rotating time of the crank shaft 27 at the time of expansion action of the variable engine mount becomes shorter than the rotating time at the time of non-operating, and therefore, the CPU 43 judges that the variable engine mount 2 is normal if the difference between the statistical value at the time of expansion action of the variable engine mount and the statistical value at the time of non-operating, is less than the reference value, and judges that the variable engine mount 2 is abnormal if the difference is not less than the reference value.

Furthermore, in the present embodiment, an example of a vacuum type variable engine mount is given as the variable vibration isolating support device, but a variable engine mount using a piezoelectric element layered body or the like, is also suitable, of course. In short, any variable engine mount is suitable, if it is arranged to perform the action of expansion or contraction following the vibration of the internal combustion engine 1.

## Claims

**1.** An abnormality judging device of a variable vibration isolating support device, comprising:

a variable vibration isolating support device which changes vibration isolating characteristics by shifting between the introduction of intake negative pressure arising in an intake system of an internal combustion engine and the introduction of atmospheric pressure;

an intake air amount detecting means which detects the amount of intake air of said internal combustion engine; and

an abnormality judging means which judges an abnormality of said variable vibration isolating support device on the basis of a value detected by said intake air amount detecting means at the time of operating of said variable vibration isolating support device.

2. An abnormality judging device of a variable vibration isolating support device, comprising:

a variable vibration isolating support device which changes vibration isolating characteristics by shifting between the introduction of intake negative pressure arising in an intake system of an internal combustion engine and the introduction of atmospheric pressure;

a rotational speed detecting means which detects the engine speed of said internal combustion engine; and

an abnormality judging means which judges an abnormality of said variable vibration isolating support device on the basis of a value detected by said rotational speed detecting means at the time of operating of said variable vibration isolating support device.

3. The abnormality judging device of a variable vibration isolating support device described in claim 1 or claim 2, wherein said abnormality judging means judges that said variable vibration isolating support device is abnormal, if the value detected by said intake air amount detecting means or said rotational speed detecting means, exceeds a specified range, when the control of shifting between the introduction of atmospheric pressure and the introduction of intake negative pressure, is performed in said variable vibration isolating support device.

4. The abnormality judging device of a variable vibration isolating support device described in claim 1 or claim 2, wherein said abnormality judging means judges that said variable vibration isolating support device is abnormal, if the difference or the ratio between the value detected by said intake air amount detecting means or said rotational speed detecting means when the control of shifting between the introduction of atmospheric pressure and the introduction of intake negative pressure is performed in said variable vibration isolating support device, and the value detected when the control of shifting between the introduction of atmospheric pressure and the introduction of intake negative pressure is not performed, exceeds a specified range.

5. The abnormality judging device of a variable vibration isolating support device described in claim 1 or claim 2, further comprising:

a shifting control stopping means which stops the control of shifting between the introduction of atmospheric pressure and the introduction of intake negative pressure in said variable vibration isolating support device, when said abnormality judging means judges an abnormality of said variable vibration isolating support device at the time of idling of said internal combustion engine; and

an idling speed changing means which raises the idling speed of said internal combustion engine by a specified amount, when the control of shifting of said variable vibration isolating support device is stopped by said shifting control stopping means.

6. The abnormality judging device of a variable vibration isolating support device described in claim 1 or claim 2, wherein said variable vibration isolating support device has a variable vibration isolating support means which realizes desired vibration isolating characteristics by taking in atmospheric pressure or intake negative pressure arising in an intake system of an internal combustion engine, and a shifting means which is controlled by duty control so as to selectively introduce intake negative pressure and atmospheric pressure into the variable vibration isolating support means,

the abnormality judging device further comprising a frequency control means which raises the frequency of a duty control signal to be applied to said shifting means by a specified amount, when said abnormality judging means performs the abnormality judging processing.

7. The abnormality judging device of a variable vibration isolating support device described in claim 1 or claim 2, wherein said internal combustion engine has an idling speed control valve which controls the intake air amount so that the engine speed at the time of idling may be a desired target idling speed, and

wherein a lower limit guard is provided to the amount of opening of said idling speed control valve, when the abnormality judging processing by said abnormality judging means is performed.

8. The abnormality judging device of a variable vibration isolating support device described in claim 6, further comprising a compensating means which compensates the value of a duty control signal at the time of performing of the abnormality judging processing, according to the magnitude of electric power for driving said shifting means.

9. The abnormality judging device of a variable vibration isolating support device described in claim 6, further comprising a sweep means which makes the value of a duty control signal sweep, at the time of performing of the abnormality judging processing by said abnormality judging means.

10. The abnormality judging device of a variable vibration isolating support device described in claim 9, wherein said sweep means changes the range to make said value of a duty control signal sweep, according to the magnitude of the driving electric power applied to said shifting means.

F I G. 1

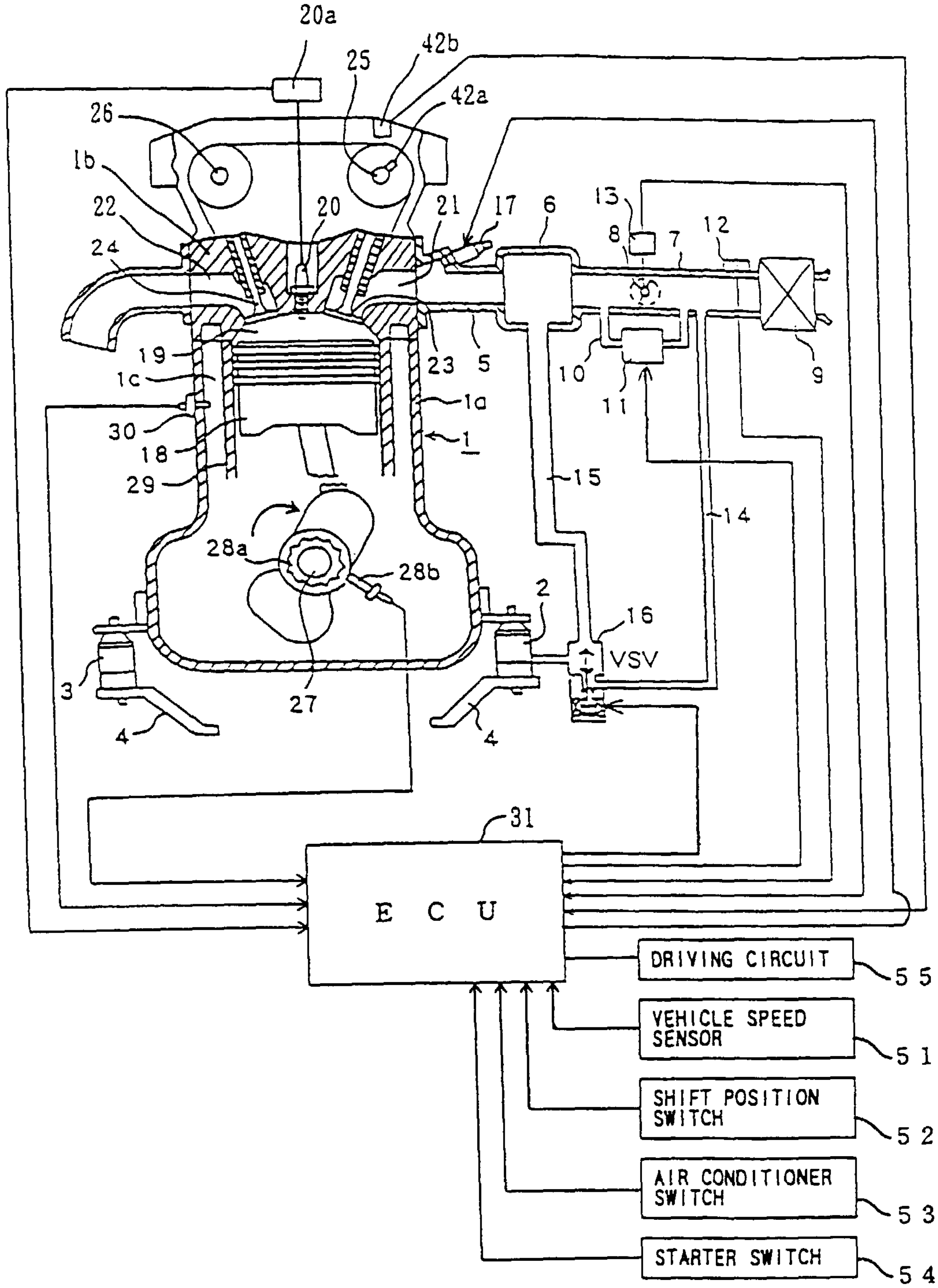
20a
25
42b
42a
26
1b
22
20
21
17
6
13
8
7
12
24
19
1c
30
18
29
23
5
10
11
9
1a
1
15
14
28a
28b
2
16
VSV
3
27
4
4
31
E C U
DRIVING CIRCUIT
55
VEHICLE SPEED SENSOR
51
SHIFT POSITION SWITCH
52
AIR CONDITIONER SWITCH
53
STARTER SWITCH
54

F I G. 2

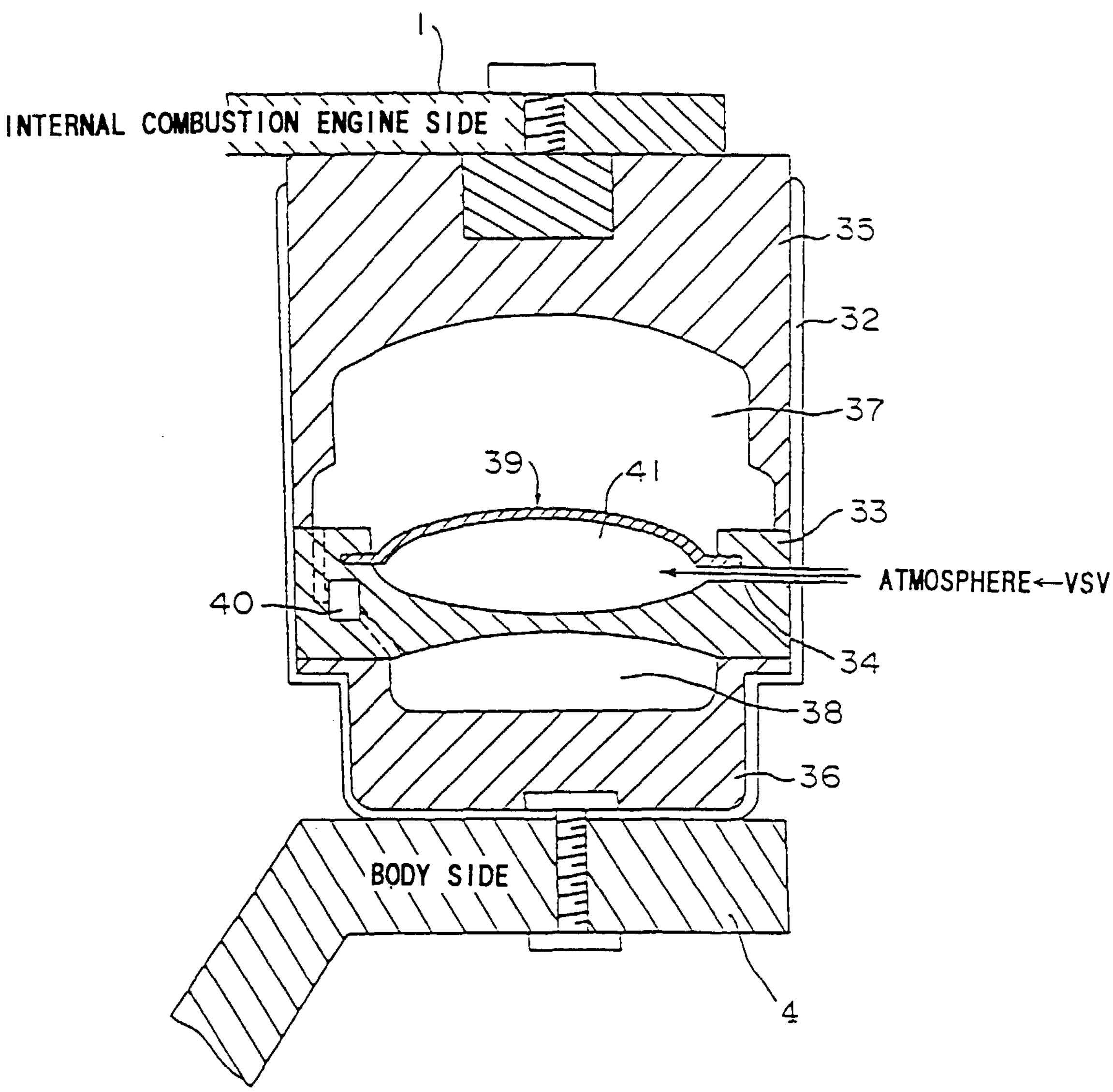
1
INTERNAL COMBUSTION ENGINE SIDE
35
32
37
39
41
33
ATMOSPHERE←VSV
40
34
38
36
BODY SIDE
4

F I G. 3

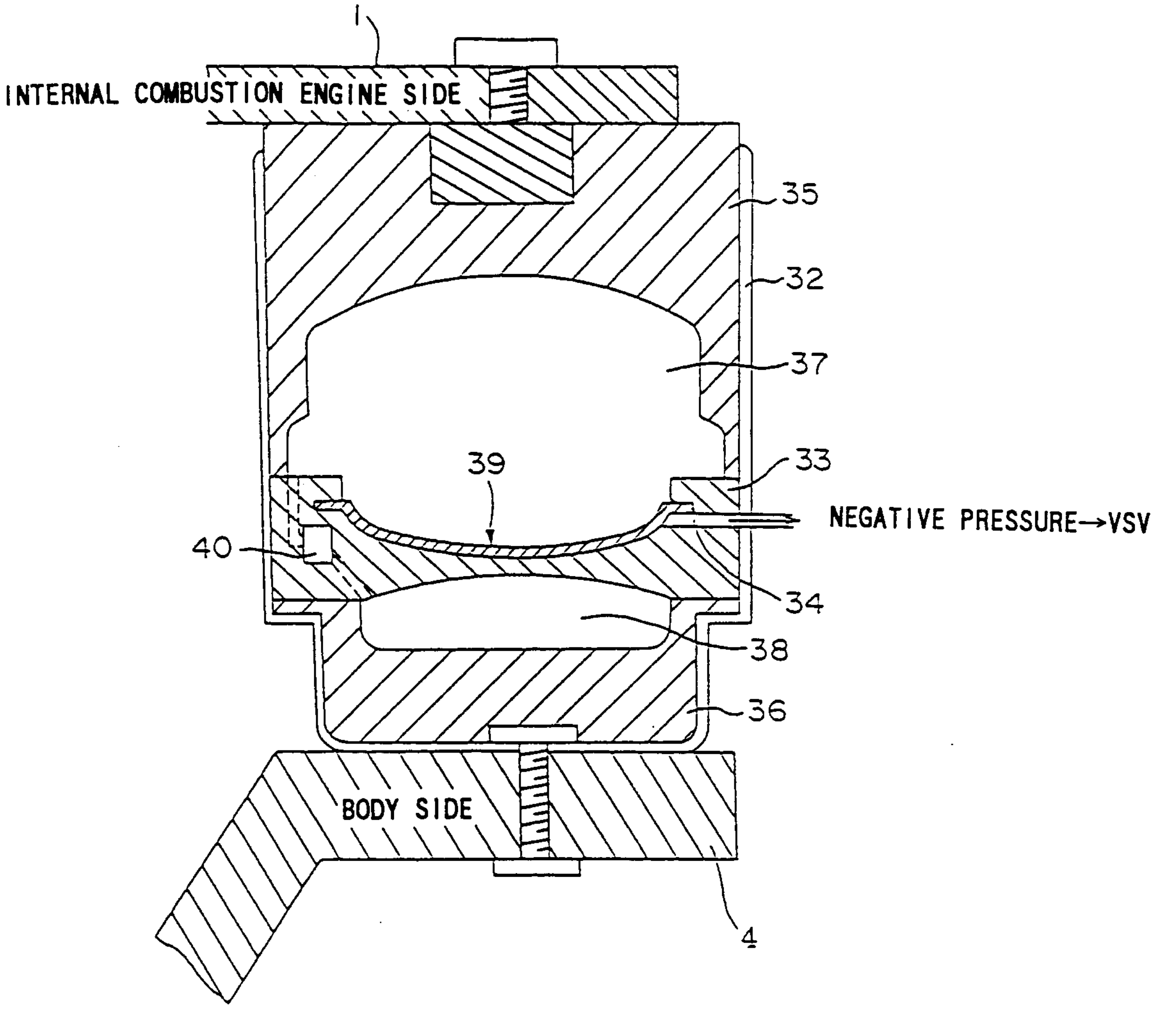
1
INTERNAL COMBUSTION ENGINE SIDE
35
32
37
39
33
NEGATIVE PRESSURE→VSV
40
34
38
36
BODY SIDE
4

FIG. 4

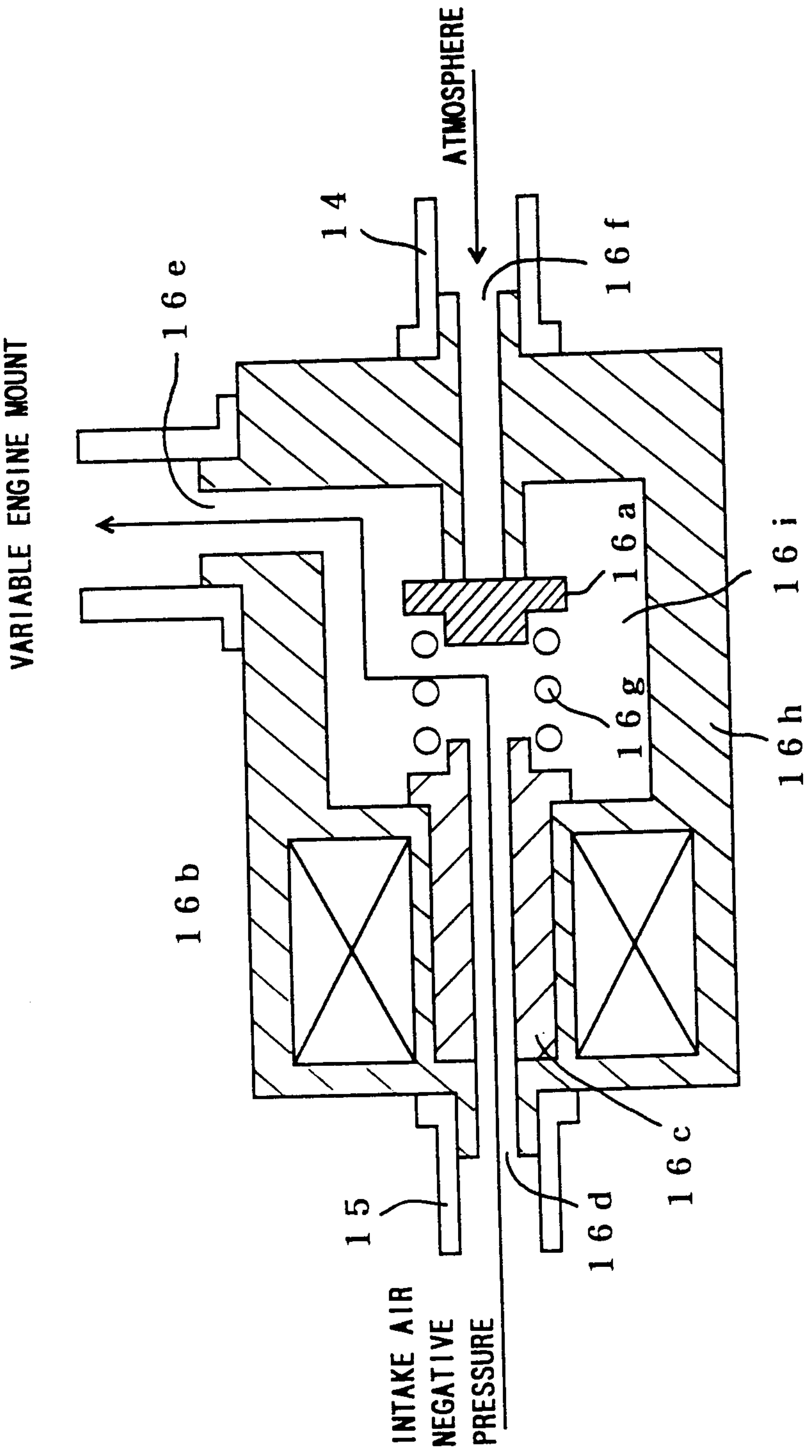
VARIABLE ENGINE MOUNT
ATMOSPHERE
14
16e
16f
16a
16i
16g
16h
16b
16c
16d
15
INTAKE AIR
NEGATIVE
PRESSURE

# FIG. 5

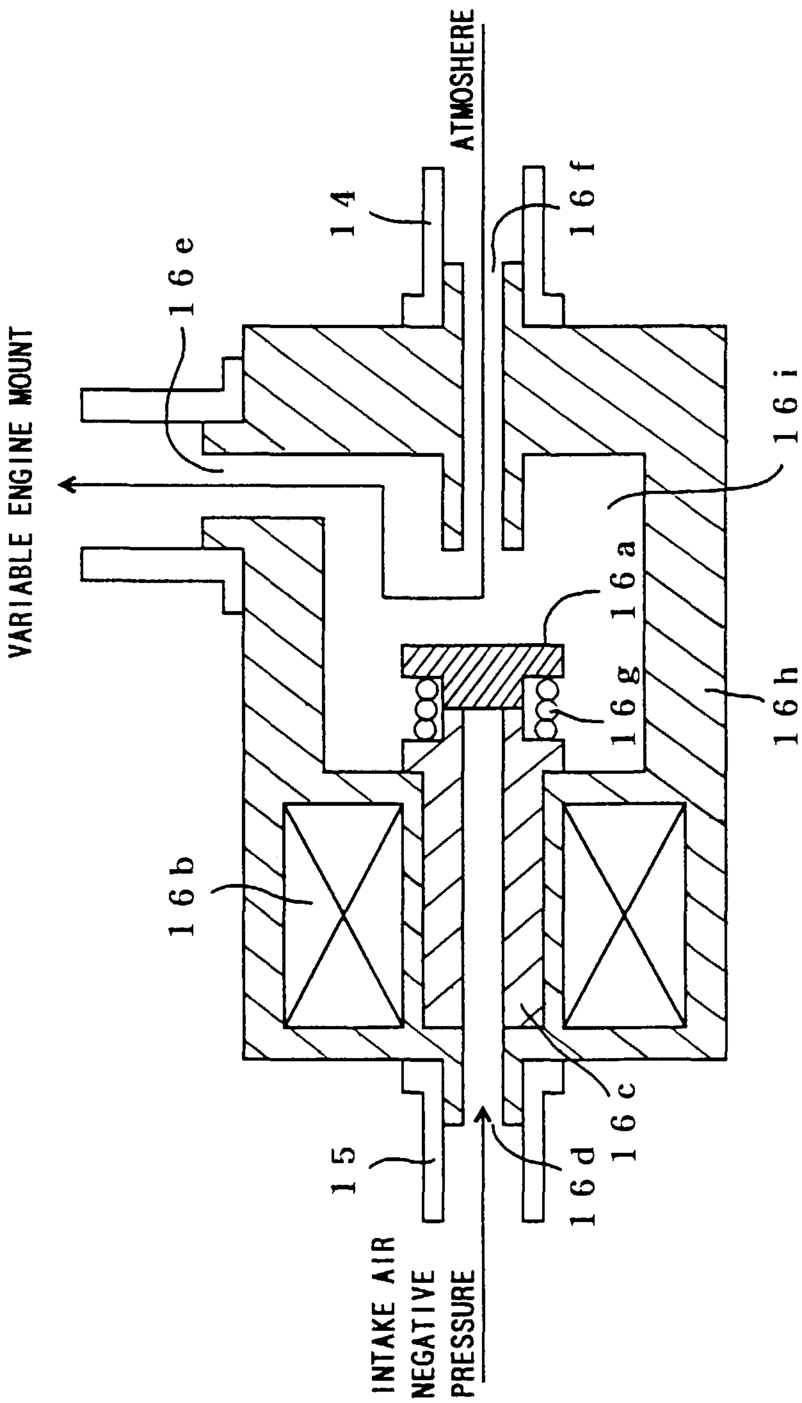
ATMOSHERE
14
16f
16e
VARIABLE ENGINE MOUNT
16i
16a
16g
16h
16b
16c
16d
15
INTAKE AIR
NEGATIVE
PRESSURE

FIG. 6

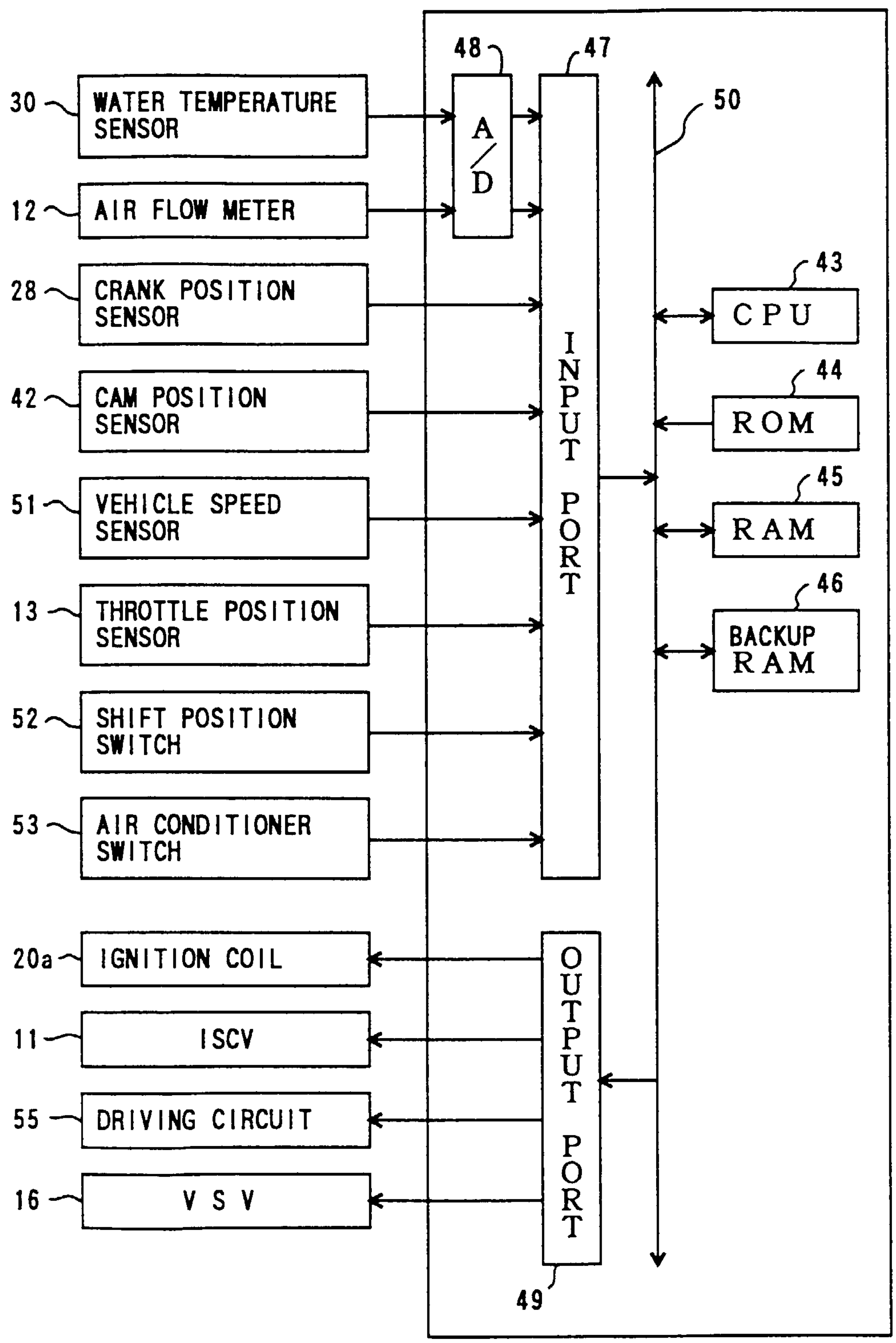
30
WATER TEMPERATURE SENSOR
12
AIR FLOW METER
28
CRANK POSITION SENSOR
42
CAM POSITION SENSOR
51
VEHICLE SPEED SENSOR
13
THROTTLE POSITION SENSOR
52
SHIFT POSITION SWITCH
53
AIR CONDITIONER SWITCH
20a
IGNITION COIL
11
ISCV
55
DRIVING CIRCUIT
16
V S V
48
A/D
47
INPUT PORT
49
OUTPUT PORT
50
43
CPU
44
ROM
45
RAM
46
BACKUP RAM

FIG. 7

| | | | | |
|---|---|---|---|---|
| VSV CONTROL DUTY RATIO (%) | 0 | 15 | 85 | 100 |
| $\alpha$ (g/sec) | 0 | 1.5 | 1.5 | 0 |

FIG. 8

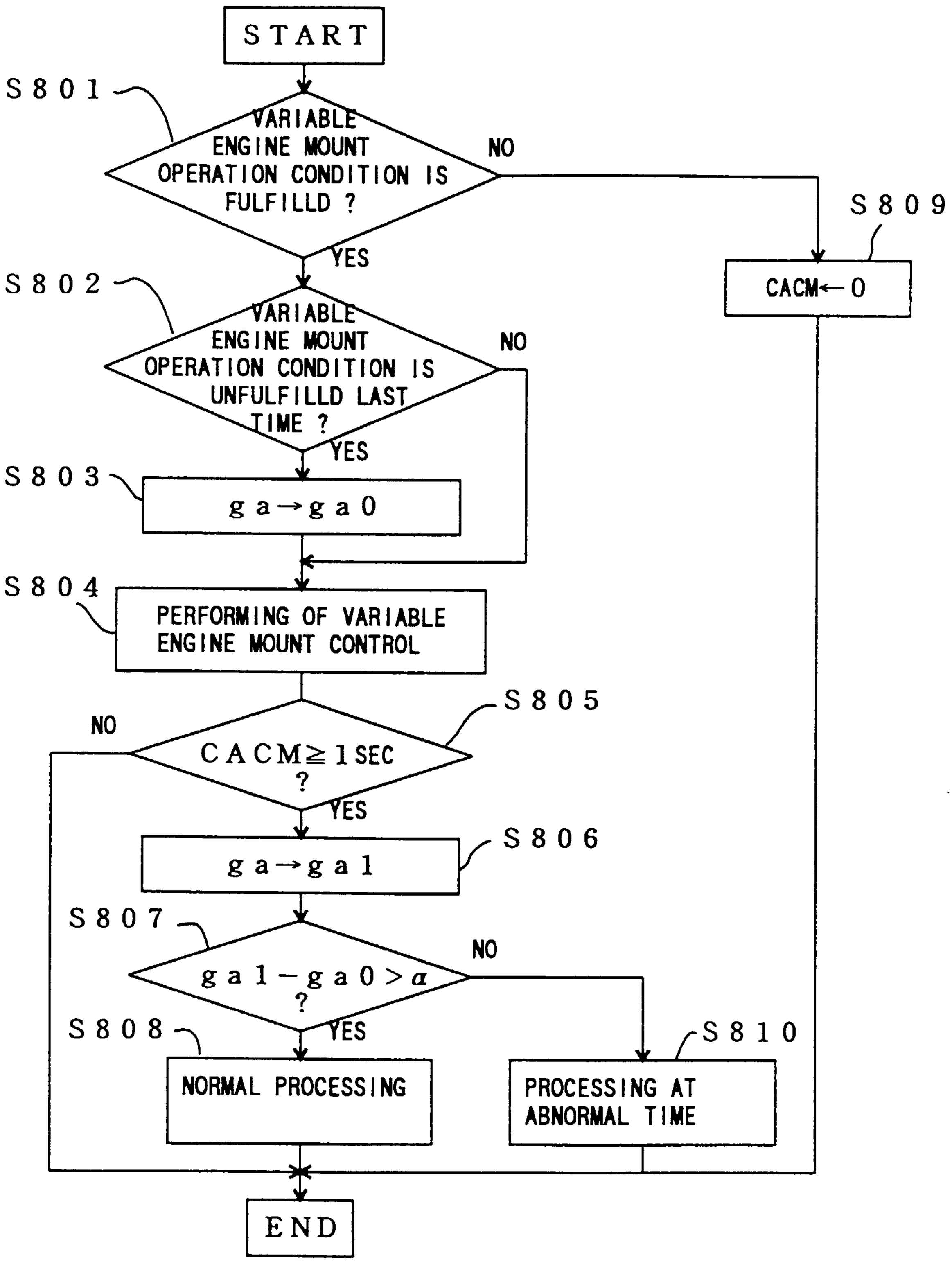
START
S801
VARIABLE ENGINE MOUNT OPERATION CONDITION IS FULFILLD ?
NO
YES
S809
CACM← 0
S802
VARIABLE ENGINE MOUNT OPERATION CONDITION IS UNFULFILLD LAST TIME ?
NO
YES
S803
ga→ga0
S804
PERFORMING OF VARIABLE ENGINE MOUNT CONTROL
S805
NO
CACM≧1SEC ?
YES
ga→ga1
S806
S807
NO
ga1−ga0>α ?
S808
YES
S810
NORMAL PROCESSING
PROCESSING AT ABNORMAL TIME
END

FIG. 9

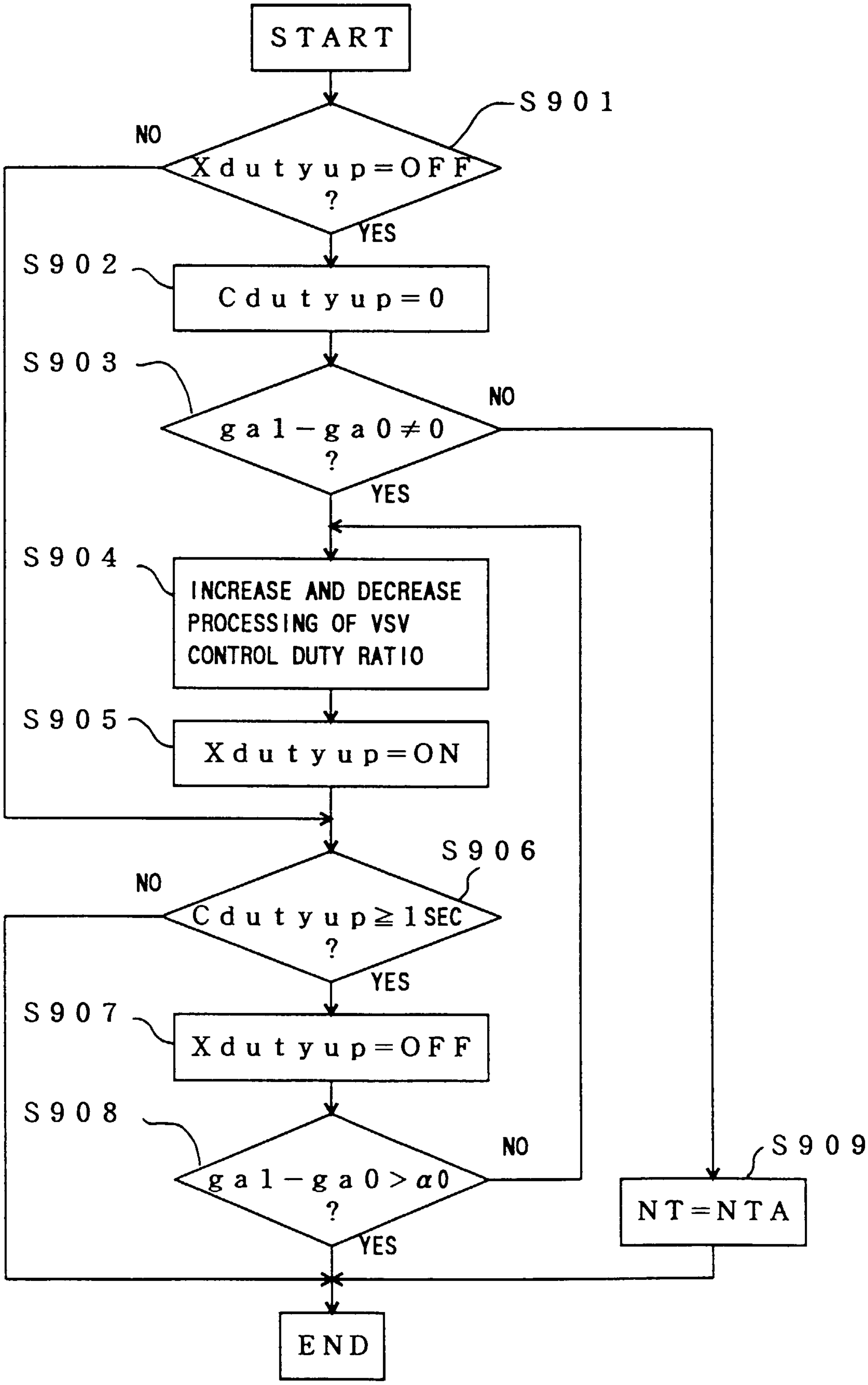
START
S901
NO
Xdutyup=OFF
?
YES
S902
Cdutyup=0
S903
ga1−ga0≠0
?
NO
YES
S904
INCREASE AND DECREASE
PROCESSING OF VSV
CONTROL DUTY RATIO
S905
Xdutyup=ON
S906
NO
Cdutyup≧1SEC
?
YES
S907
Xdutyup=OFF
S908
ga1−ga0>α0
?
NO
YES
S909
NT=NTA
END

# FIG. 10

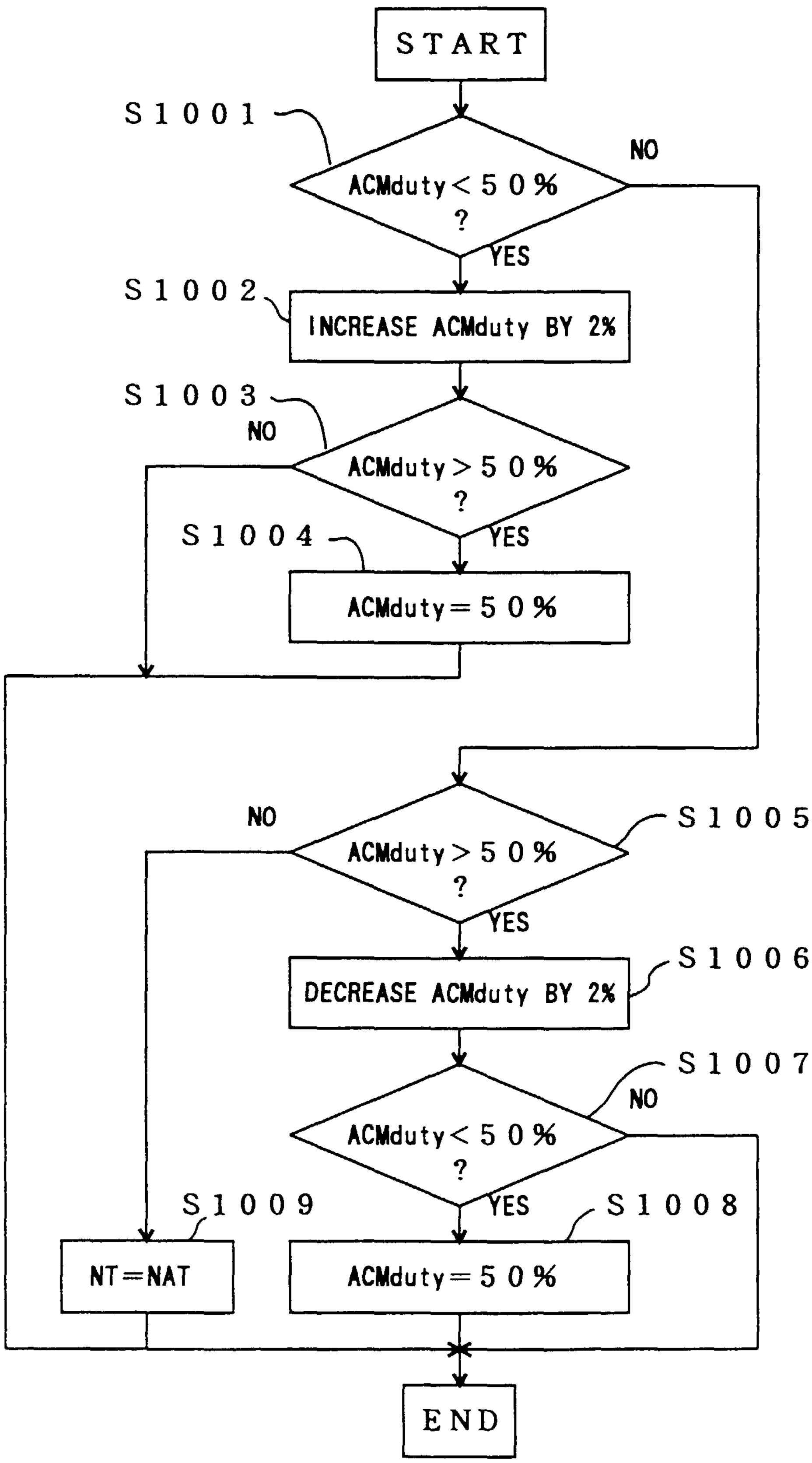
START
S1001
ACMduty<50%
?
NO
YES
S1002
INCREASE ACMduty BY 2%
S1003
NO
ACMduty>50%
?
YES
S1004
ACMduty=50%
NO
ACMduty>50%
?
S1005
YES
DECREASE ACMduty BY 2%
S1006
S1007
NO
ACMduty<50%
?
YES
S1009
S1008
NT=NAT
ACMduty=50%
END

# FIG. 11

| VSV CONTROL DUTY RATIO (%) | 0 | 15 | 85 | 100 |
|---|---|---|---|---|
| $\beta$ (rpm) | 0 | 100 | 100 | 0 |

# FIG. 12

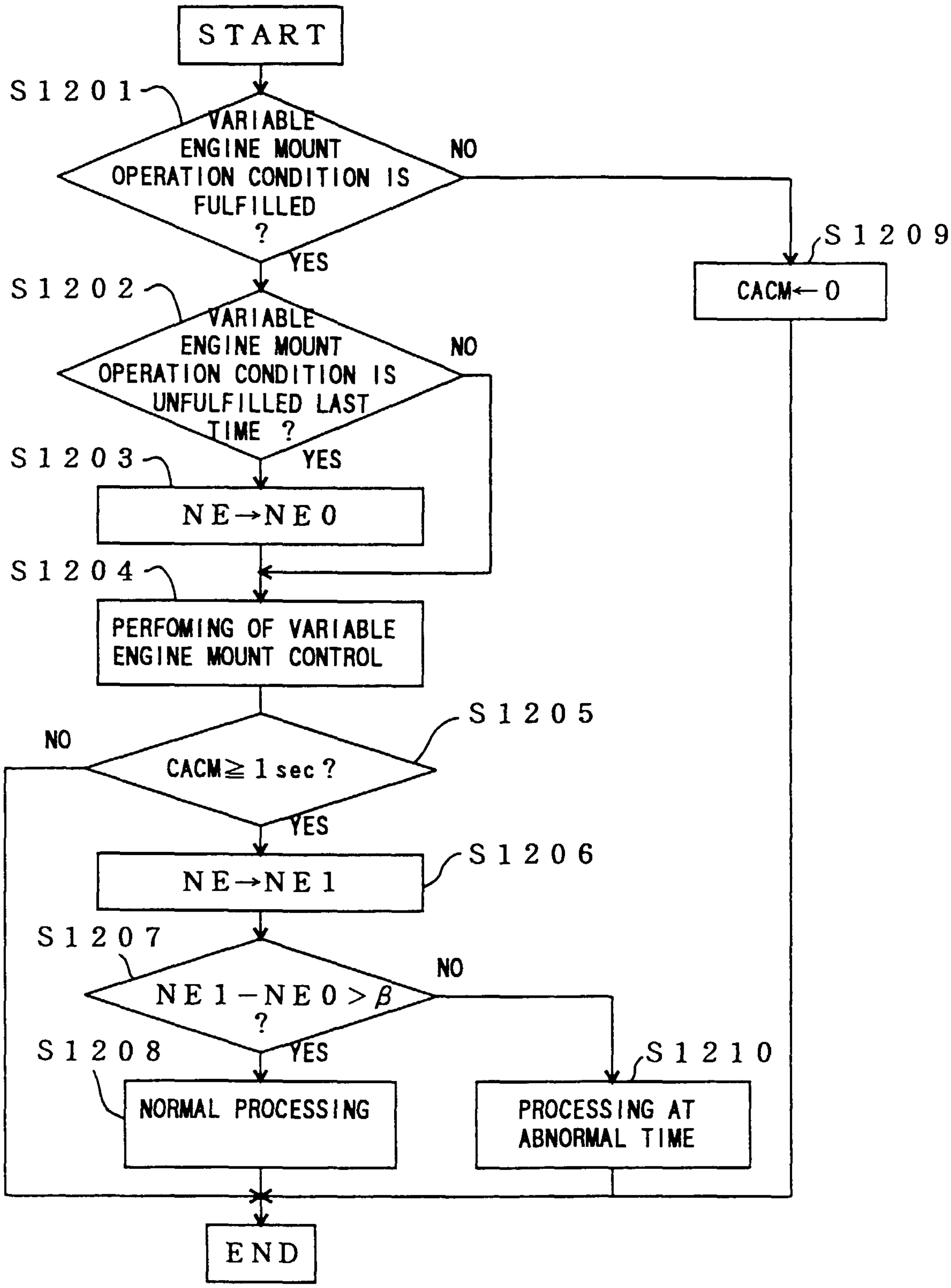
START
S1201
VARIABLE ENGINE MOUNT OPERATION CONDITION IS FULFILLED ?
NO
YES
S1209
CACM← 0
S1202
VARIABLE ENGINE MOUNT OPERATION CONDITION IS UNFULFILLED LAST TIME ?
NO
YES
S1203
NE→NE0
S1204
PERFOMING OF VARIABLE ENGINE MOUNT CONTROL
S1205
CACM≧1 sec ?
NO
YES
S1206
NE→NE1
S1207
NE1−NE0>β ?
NO
YES
S1208
NORMAL PROCESSING
S1210
PROCESSING AT ABNORMAL TIME
END

# FIG. 13

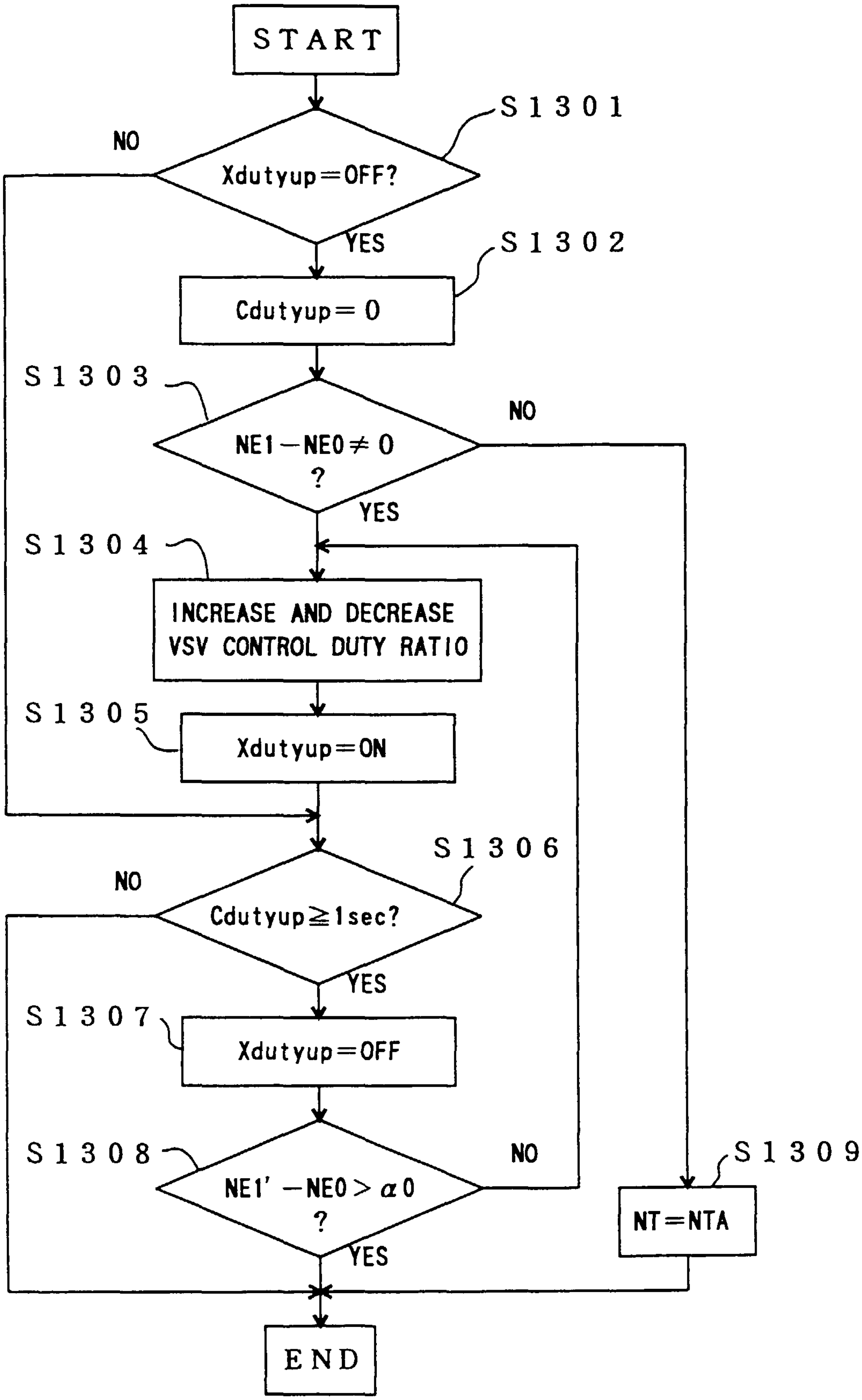
START
S1301
NO
Xdutyup=OFF?
YES
S1302
Cdutyup=0
S1303
NO
NE1−NE0≠0
?
YES
S1304
INCREASE AND DECREASE
VSV CONTROL DUTY RATIO
S1305
Xdutyup=ON
S1306
NO
Cdutyup≧1sec?
YES
S1307
Xdutyup=OFF
S1308
NO
NE1′ −NE0>α0
?
YES
S1309
NT=NTA
END

FIG. 14

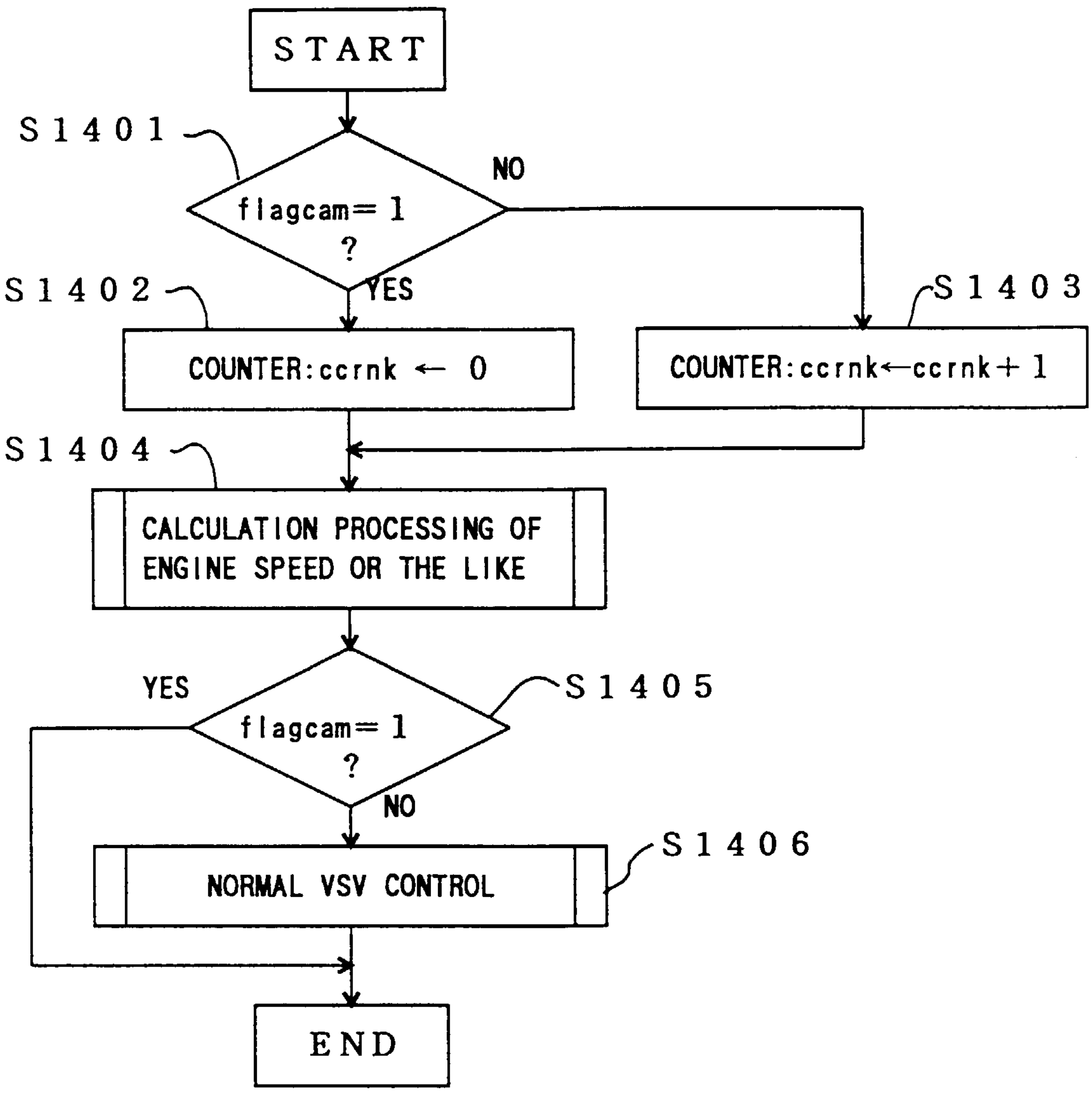
START
S1401
flagcam=1
?
NO
YES
S1402
COUNTER:ccrnk ← 0
S1403
COUNTER:ccrnk←ccrnk+1
S1404
CALCULATION PROCESSING OF
ENGINE SPEED OR THE LIKE
YES
flagcam=1
?
S1405
NO
S1406
NORMAL VSV CONTROL
END

FIG. 15

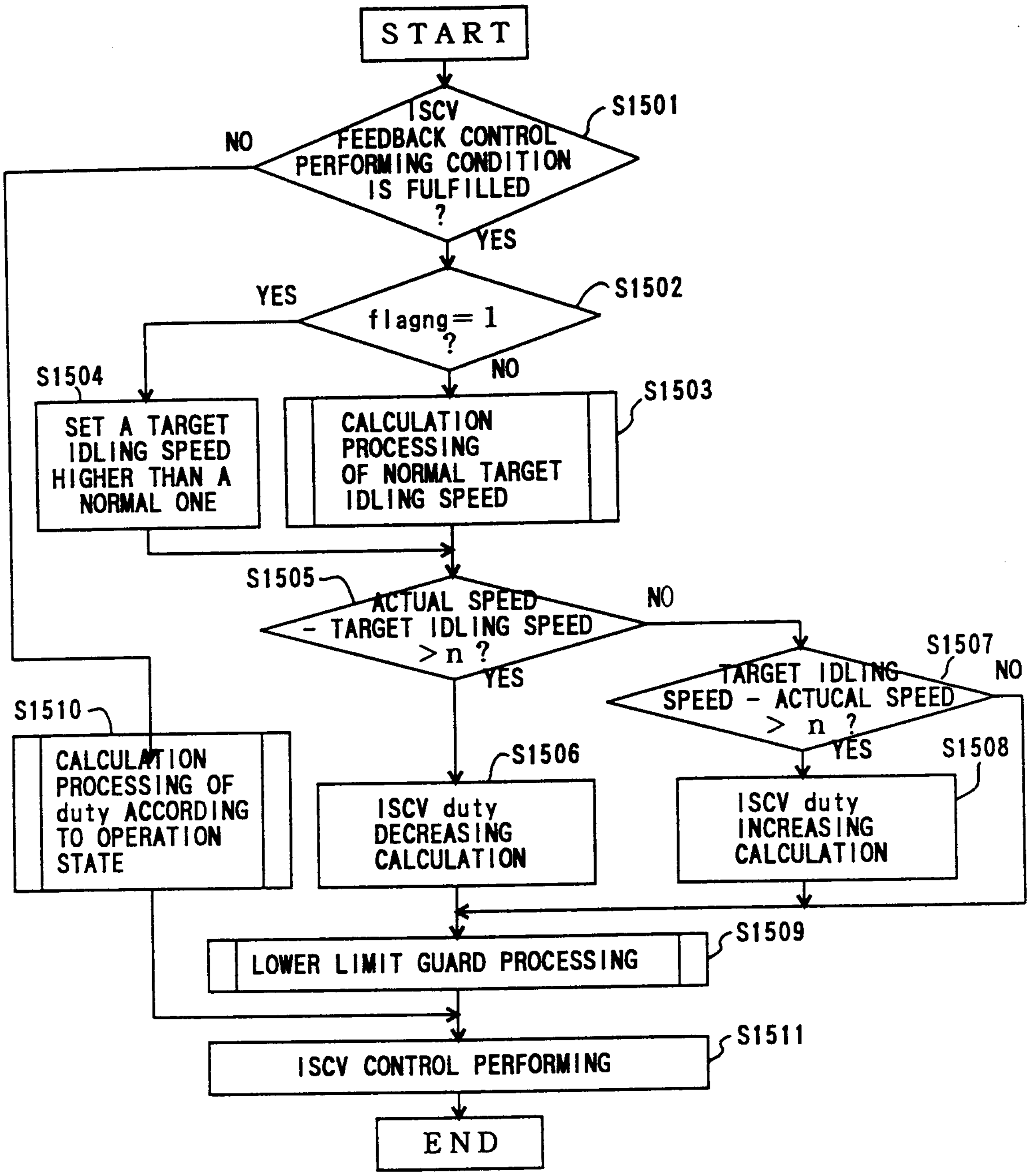
START
ISCV FEEDBACK CONTROL PERFORMING CONDITION IS FULFILLED ?
S1501
NO
YES
flagng = 1 ?
S1502
YES
NO
S1504
SET A TARGET IDLING SPEED HIGHER THAN A NORMAL ONE
CALCULATION PROCESSING OF NORMAL TARGET IDLING SPEED
S1503
S1505
ACTUAL SPEED - TARGET IDLING SPEED > n ?
NO
YES
TARGET IDLING SPEED - ACTUCAL SPEED > n ?
S1507
NO
YES
S1510
CALCULATION PROCESSING OF duty ACCORDING TO OPERATION STATE
S1506
ISCV duty DECREASING CALCULATION
S1508
ISCV duty INCREASING CALCULATION
LOWER LIMIT GUARD PROCESSING
S1509
ISCV CONTROL PERFORMING
S1511
END

# FIG. 16

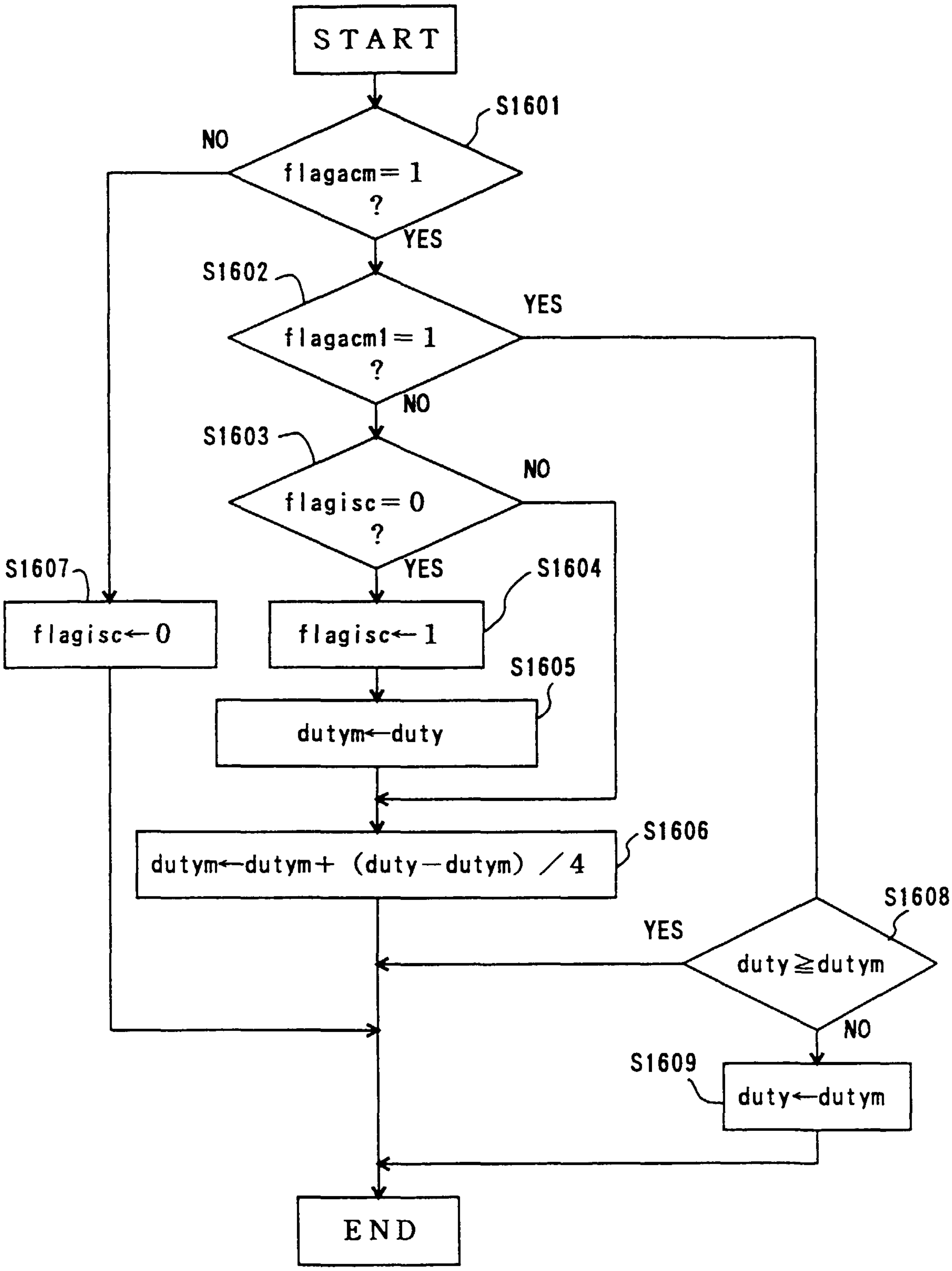
START
S1601
NO
flagacm=1
?
YES
S1602
YES
flagacm1=1
?
NO
S1603
NO
flagisc=0
?
YES
S1607
S1604
flagisc←0
flagisc←1
S1605
dutym←duty
S1606
dutym←dutym+ (duty−dutym) ／4
S1608
YES
duty≧dutym
NO
S1609
duty←dutym
END

FIG. 17

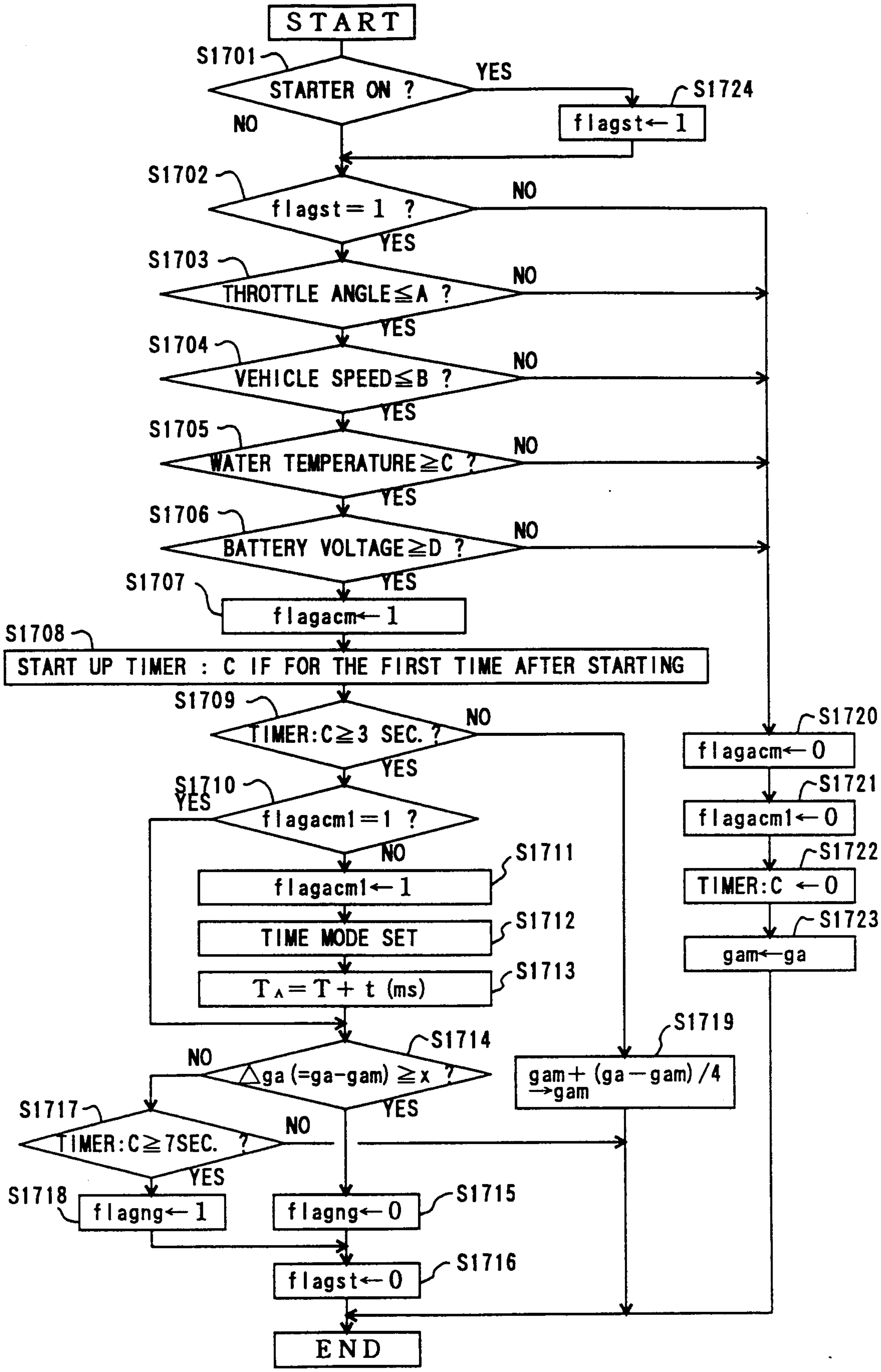
START
S1701
STARTER ON ?
YES
NO
S1724
flagst←1
S1702
flagst=1 ?
NO
YES
S1703
THROTTLE ANGLE≦A ?
NO
YES
S1704
VEHICLE SPEED≦B ?
NO
YES
S1705
WATER TEMPERATURE≧C ?
NO
YES
S1706
BATTERY VOLTAGE≧D ?
NO
YES
S1707
flagacm←1
S1708
START UP TIMER : C IF FOR THE FIRST TIME AFTER STARTING
S1709
TIMER:C≧3 SEC. ?
NO
YES
S1710
flagacml=1 ?
YES
NO
S1711
flagacml←1
S1712
TIME MODE SET
S1713
TA=T+t (ms)
S1714
△ga (=ga-gam) ≧x ?
NO
YES
S1717
TIMER:C≧7SEC. ?
NO
YES
S1718
flagng←1
S1715
flagng←0
S1716
flagst←0
END
S1719
gam+(ga−gam)/4 →gam
S1720
flagacm←0
S1721
flagacml←0
S1722
TIMER:C ←0
S1723
gam←ga

FIG. 18

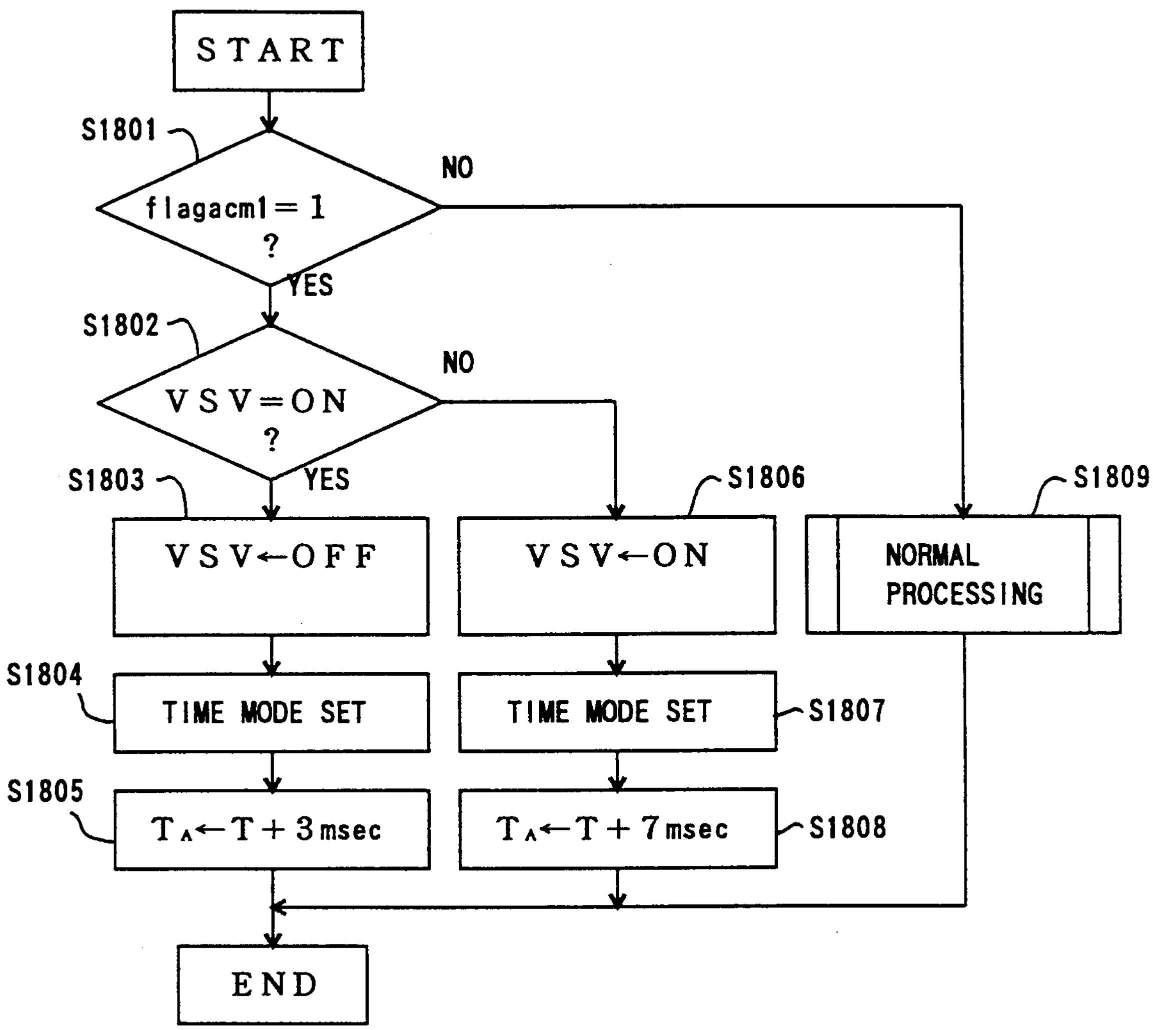
START
S1801
flagacm1 = 1
?
NO
YES
S1802
VSV = ON
?
NO
YES
S1803
VSV←OFF
S1806
VSV←ON
S1809
NORMAL
PROCESSING
S1804
TIME MODE SET
TIME MODE SET
S1807
S1805
$T_A$←T + 3 msec
$T_A$←T + 7 msec
S1808
END

FIG. 19

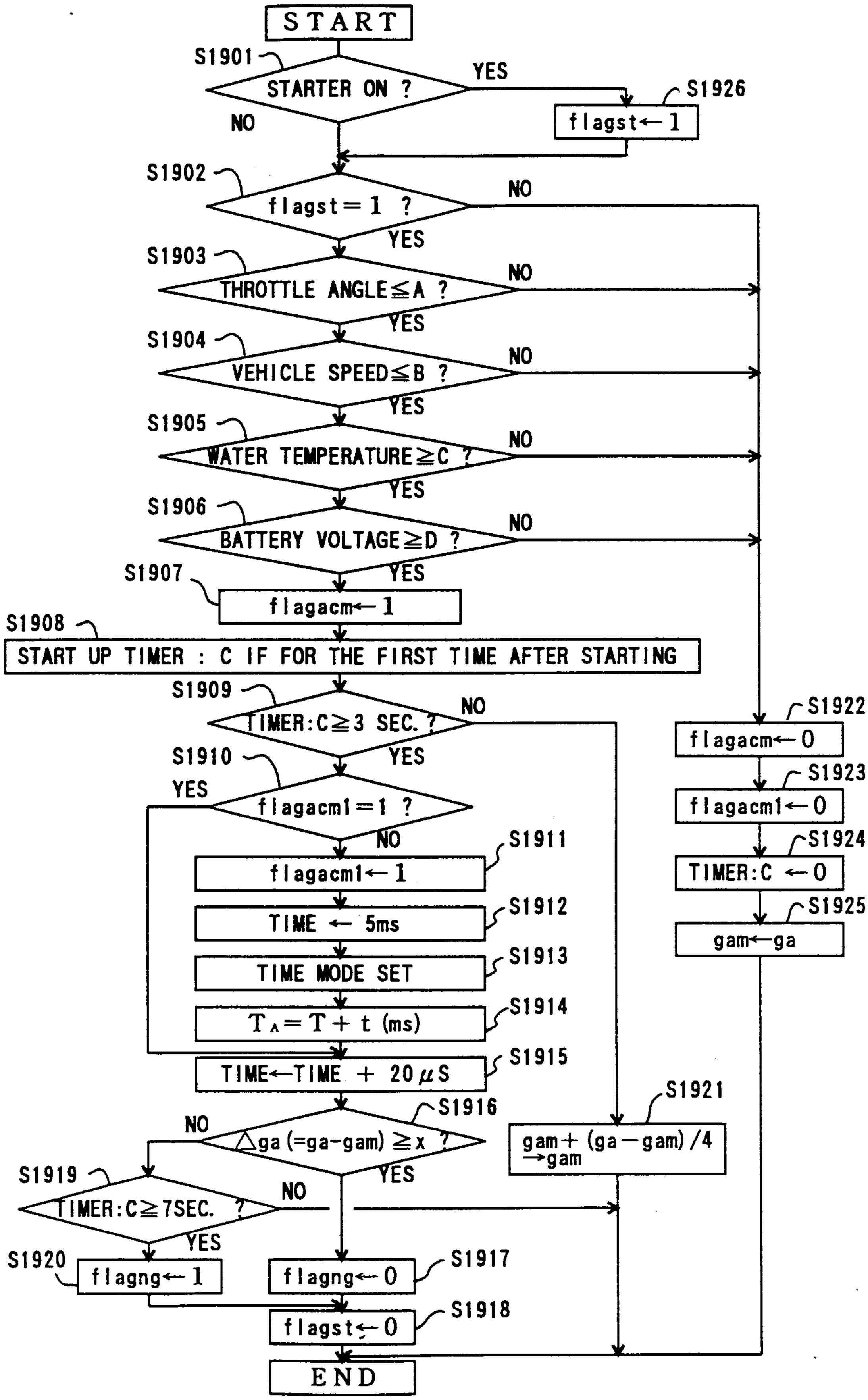
START
S1901
STARTER ON ?
YES
NO
S1926
flagst←1
S1902
flagst=1 ?
NO
YES
S1903
THROTTLE ANGLE≦A ?
NO
YES
S1904
VEHICLE SPEED≦B ?
NO
YES
S1905
WATER TEMPERATURE≧C ?
NO
YES
S1906
BATTERY VOLTAGE≧D ?
NO
YES
S1907
flagacm←1
S1908
START UP TIMER : C IF FOR THE FIRST TIME AFTER STARTING
S1909
TIMER:C≧3 SEC. ?
NO
YES
S1910
flagacm1=1 ?
YES
NO
S1911
flagacm1←1
S1912
TIME ← 5ms
S1913
TIME MODE SET
S1914
T_A=T+t (ms)
S1915
TIME←TIME + 20μS
S1916
△ga (=ga-gam) ≧x ?
NO
YES
S1919
TIMER:C≧7SEC. ?
NO
YES
S1920
flagng←1
flagng←0
S1917
flagst←0
S1918
END
S1921
gam+(ga−gam)/4 →gam
S1922
flagacm←0
S1923
flagacm1←0
S1924
TIMER:C ←0
S1925
gam←ga

# FIG. 20

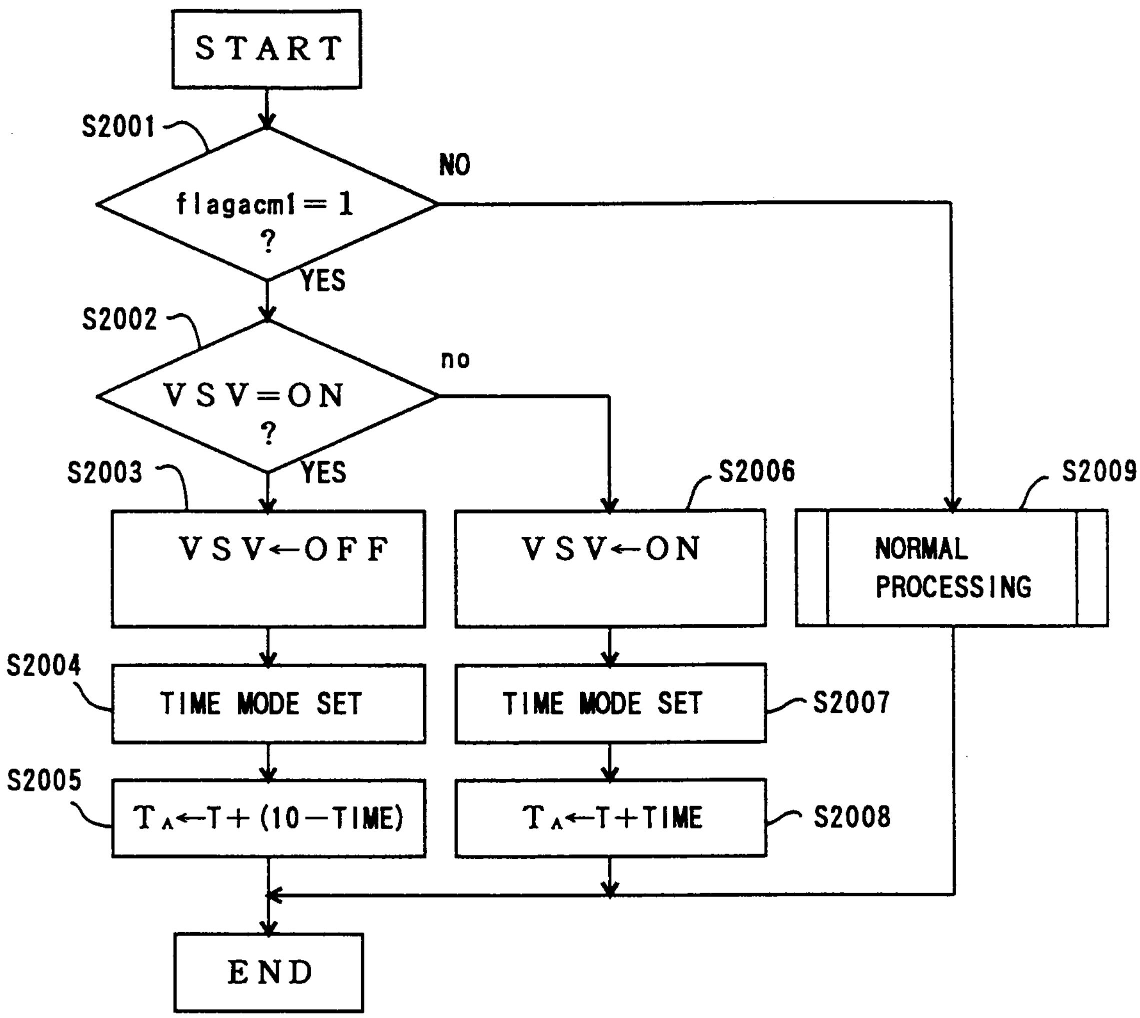

START
S2001
flagacml = 1 ?
NO
YES
S2002
VSV = ON ?
no
YES
S2003
VSV←OFF
S2006
VSV←ON
S2009
NORMAL PROCESSING
S2004
TIME MODE SET
TIME MODE SET
S2007
S2005
$T_A$←T+(10−TIME)
$T_A$←T+TIME
S2008
END

FIG. 21

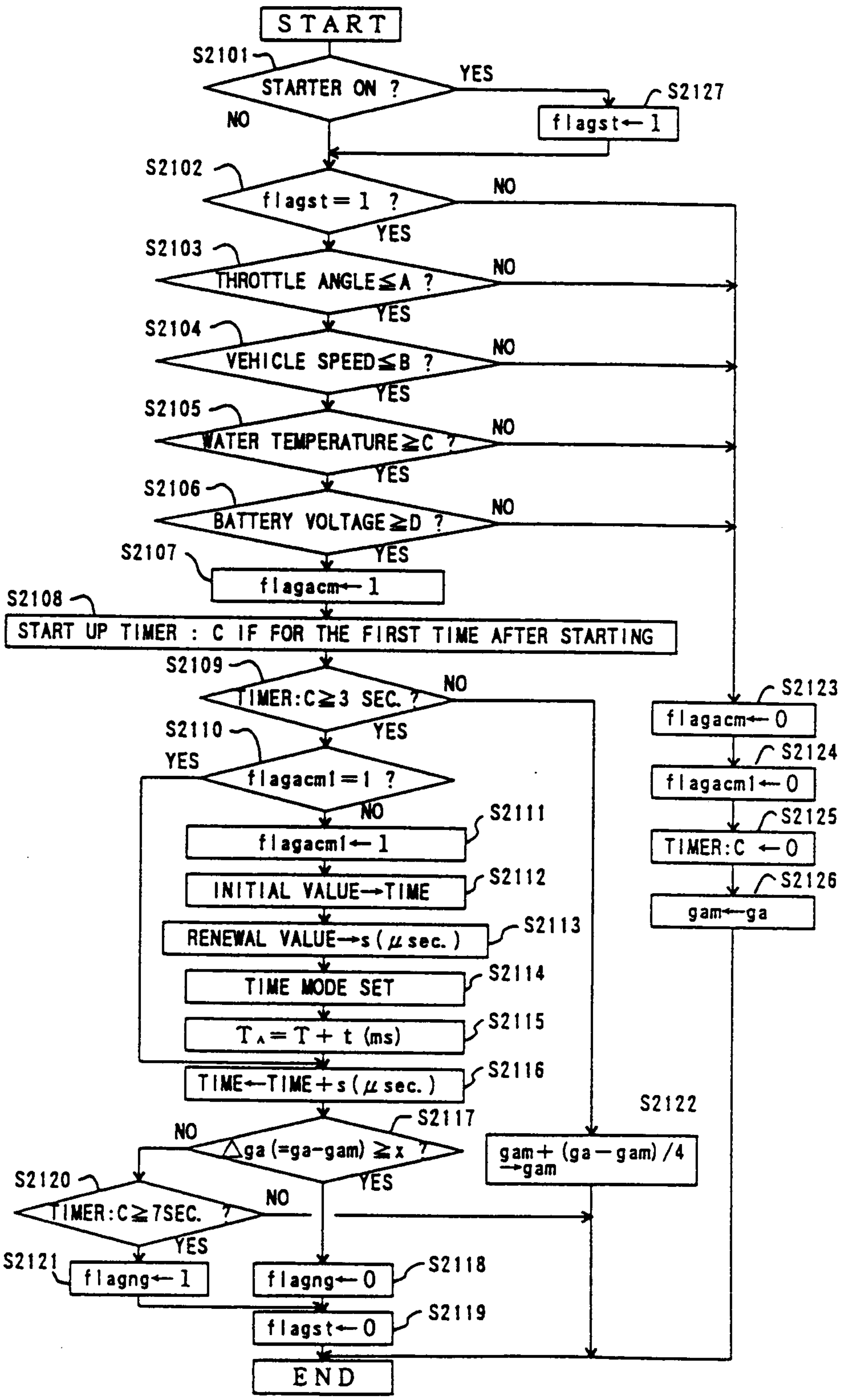
START
S2101
STARTER ON ?
YES
NO
S2127
flagst←1
S2102
flagst=1 ?
NO
YES
S2103
THROTTLE ANGLE≦A ?
NO
YES
S2104
VEHICLE SPEED≦B ?
NO
YES
S2105
WATER TEMPERATURE≧C ?
NO
YES
S2106
BATTERY VOLTAGE≧D ?
NO
YES
S2107
flagacm←1
S2108
START UP TIMER : C IF FOR THE FIRST TIME AFTER STARTING
S2109
TIMER:C≧3 SEC. ?
NO
YES
S2110
YES
flagacm1=1 ?
NO
S2111
flagacm1←1
S2112
INITIAL VALUE→TIME
S2113
RENEWAL VALUE→s (μsec.)
S2114
TIME MODE SET
S2115
T_A=T+t (ms)
S2116
TIME←TIME+s (μsec.)
S2117
NO
Δga (=ga−gam) ≧x ?
YES
S2120
TIMER:C≧7SEC. ?
NO
YES
S2121
flagng←1
S2118
flagng←0
S2119
flagst←0
END
S2122
gam+(ga−gam)/4 →gam
S2123
flagacm←0
S2124
flagacm1←0
S2125
TIMER:C ←0
S2126
gam←ga

FIG. 22

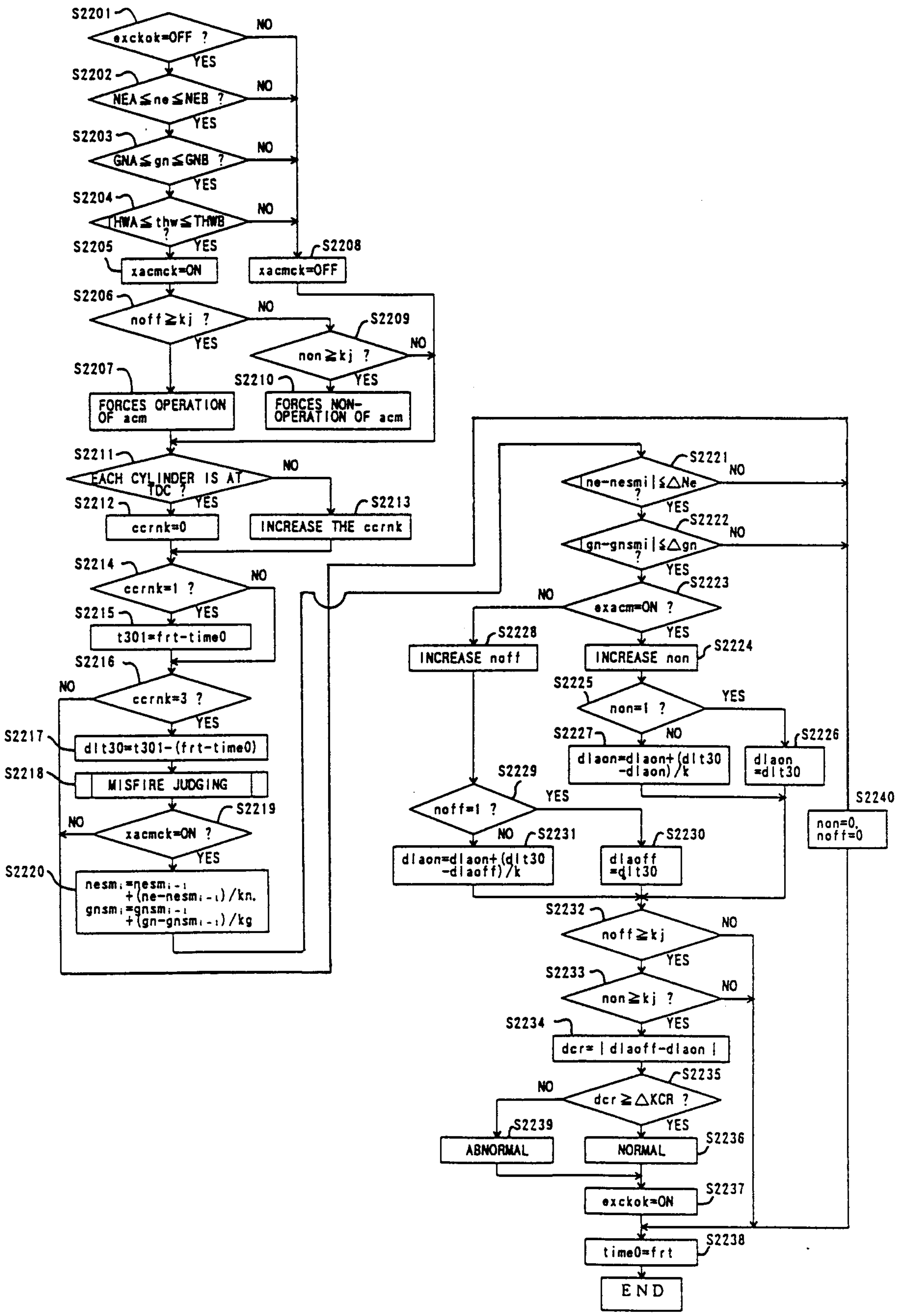
S2201
exckok=OFF ?
NO
YES
S2202
NEA≦ne≦NEB ?
S2203
GNA≦gn≦GNB ?
S2204
THWA≦thw≦THWB ?
S2205
xacmck=ON
S2208
xacmck=OFF
S2206
noff≧kj ?
S2209
non≧kj ?
S2207
S2210
FORCES OPERATION OF acm
FORCES NON-OPERATION OF acm
S2211
EACH CYLINDER IS AT TDC ?
S2212
ccrnk=0
S2213
INCREASE THE ccrnk
S2214
ccrnk=1 ?
S2215
t301=frt-time0
S2216
ccrnk=3 ?
S2217
dlt30=t301-(frt-time0)
S2218
MISFIRE JUDGING
S2219
xacmck=ON ?
S2220
nesmi=nesmi-1 +(ne-nesmi-1)/kn,
gnsmi=gnsmi-1 +(gn-gnsmi-1)/kg
S2221
|ne-nesmi|≦△Ne ?
S2222
|gn-gnsmi|≦△gn ?
S2223
exacm=ON ?
S2228
INCREASE noff
S2224
INCREASE non
S2225
non=1 ?
S2227
dlaon=dlaon+(dlt30 -dlaon)/k
S2226
dlaon =dlt30
S2229
noff=1 ?
S2231
dlaon=dlaon+(dlt30 -dlaoff)/k
S2230
dlaoff =dlt30
S2240
non=0, noff=0
S2232
noff≧kj
S2233
non≧kj ?
S2234
dcr=|dlaoff-dlaon|
S2235
dcr≧△KCR ?
S2239
ABNORMAL
S2236
NORMAL
S2237
exckok=ON
S2238
time0=frt
END